# EUROPEAN PATENT APPLICATION

(11) **EP 4 786 158 A1**
(43) Date of publication of application: **05.08.2026**
(21) Application number: 23954223.6
(22) Date of filing: 27.09.2023
(51) Int. Cl.: B32B 3/30, B64C 21/00, F03D 80/00

(54) **SHEET MEMBER, FILM MEMBER, MOVING BODY, BLADE MEMBER, WINDMILL, AND AFFIXING METHOD**

(71) Applicant: NIKON CORPORATION, Tokyo 140-8601 (JP)
(72) Inventor: ICHINOSE, Go, Tokyo 140-8601 (JP)
(74) Representative: Hoffmann Eitle
(86) International application number: PCT/JP2023/035128
(87) International publication number: WO 2025/069247

(57) **Abstract**

A sheet member 1 includes a riblet structure RB on one surface and an adhesive layer 11 on another surface. The sheet member 1 includes: a first sheet part 151 and a second sheet part 152, a convex structure 13 is formed on a front surface of the first sheet part, the second sheet part includes an edge part 1FE of the sheet member and is positioned to be adjacent to the first sheet part, and a thickness T of a first part 1521 of the second sheet part is thinner than a thickness T of a second part 1522, which is farther from the edge part along an extension direction of the convex structure than the first part is, of the second sheet part.

## Description

### Technical Field

The present invention relates to a technical field of a sheet member having a riblet structure, a film member having a riblet structure, a movable body, a blade member, and a windmill to each of which the sheet member is attached, and attaching method for attaching the sheet member to a surface of the movable body, for example.

### Background Art

A Patent literature 1 discloses an aircraft including an airframe on a surface of which a riblet structure is formed. The riblet structure is formed on the surface of an object for a purpose of reducing a resistance of the surface of the object such as the aircraft to fluid. In this case, it is required to effectively achieve an effect of reducing the resistance of the surface of the object such as the aircraft to the fluid.

### Citation List

### Patent Literature

Patent Literature 1: US2011/0186685A1

### Summary of Invention

A first aspect provides a sheet member including a riblet structure on one surface and an adhesive layer on another surface, wherein the sheet member includes: a first sheet part and a second sheet part that is adjacent to the first sheet part, a convex structure, which extends along an extension direction, is formed on a front surface of the first sheet part as at least a part of the riblet structure, the second sheet part includes an edge part of the sheet member along the extension direction and is positioned to be adjacent to the first sheet part along the extension direction, and a thickness of a first part of the second sheet part is thinner than a thickness of a second part, which is farther from the edge part along the extension direction than the first part is, of the second sheet part.

A second aspect provides a film member made of resin including a riblet structure, wherein the film member includes: a first sheet part and a second sheet part that is adjacent to the first sheet part, a convex structure, which extends along an extension direction, is formed on a front surface of the first sheet part as at least a part of the riblet structure, the second sheet part includes an edge part of the sheet member along the extension direction and is positioned to be adjacent to the first sheet part along the extension direction, and a thickness of a first part of the second sheet part is thinner than a thickness of a second part, which is farther from the edge part along the extension direction than the first part is, of the second sheet part.

A third aspect provides a sheet member including a riblet structure, wherein a convex structure, which extends along a predetermined extension direction, is formed on a front surface of the sheet member as at least a part of the riblet structure, a width of a first structural part of the convex structure is smaller than a width of a second structural part, which is farther from an edge part along the extension direction of the sheet member along the extension direction than the first structural part is, of the second convex structure.

A fourth aspect provides a movable body that is movable relative to fluid, wherein
the sheet member provided by the first or second aspect is attached to at least a part of a surface of the movable body.

A fifth aspect provides a movable body that is movable relative to fluid, wherein a first sheet member including a riblet structure is attached to a first surface part of a surface of the movable body, the riblet structure includes a convex structure extending along a predetermined extension direction that is along the first surface part, a second sheet member is attached to a second surface part, which is adjacent to the first surface part along the extension direction, of the surface of the movable body, and a thickness of a first sheet part of the second sheet member is thinner than a thickness of a second sheet part, which is farther from an edge part of the second sheet member along the extension direction than the first sheet part is, of the second sheet member.

A sixth aspect provides a blade member to a surface of which the sheet member provided by the first or second aspect is attached.

A seventh aspect provides a windmill including the blade member provided by the sixth aspect.

An eighth aspect provides a sheet member including a riblet structure, wherein the sheet member includes: a first sheet part and a second sheet part that is adjacent to the first sheet part, a convex structure, which extends along an extension direction, is formed on a front surface of the first sheet part as at least a part of the riblet structure, the second sheet part includes an edge part of the sheet member along the extension direction and is positioned to be adjacent to the first sheet part along the extension direction, and a thickness of a first part of the second sheet part is thinner than a thickness of a second part, which is farther from the edge part along the extension direction than the first part is, of the second sheet part.

A ninth aspect provides an attaching method for attaching a sheet member to a surface of a movable body that is movable relative to fluid, wherein the attaching method includes: attaching a first sheet member including a riblet structure, which includes a convex structure that extends along a predetermined extension direction along a first surface part, to a first surface part of the surface of the movable body; and attaching a second sheet member to a second surface part, which is adjacent to the first surface part along the extension direction, of the surface of the movable body, a thickness of a first part of the second sheet member is thinner than a thickness of a second part, which is farther from an edge part of the second sheet member along the extension direction than the first part is, of the second sheet member.

### Brief Description of Drawings

[FIG. 1] FIG. 1(a) is a perspective view that illustrates an external appearance of a riblet sheet in a present example embodiment, and FIG. 1(b) is a cross-sectional view (I-I' cross-sectional view in FIG. 1(a)) that illustrates a structure of the riblet sheet in the present example embodiment.
[FIG. 2] FIG. 2(a) is a perspective view that illustrates a riblet structure, FIG. 2(b) is a cross-sectional view (II-II' cross-sectional view in FIG. 2(a)) that illustrates the riblet structure, and FIG. 2(c) is a top view that illustrates the riblet structure.
[FIG. 3] FIG. 3 is a front view that illustrates a windmill that is one example of an object to which a riblet sheet is attached.
[FIG. 4] FIG. 4(a) is a perspective view that illustrates a relationship between an extension direction of a convex structure of the riblet sheet attached to a surface of the object and a direction along which fluid flows on the surface of the object, and FIG. 4(b) is a perspective view that illustrates a relationship between the extension direction of the convex structure of the riblet sheet attached to a blade member of the windmill and a rotational direction of the windmill.
[FIG. 5] FIG. 5(a) is a cross-sectional view that illustrates the riblet sheet attached to the object, FIG. 5(b) is a cross-sectional view that illustrates an edge part of the riblet sheet illustrated in FIG. 5(a), and FIG. 5(c) is a perspective view that illustrates the edge part of the riblet sheet illustrated in FIG. 5(a).
[FIG. 6] FIG. 6(a) is a cross-sectional view that illustrates the riblet sheet having a structure that can reduce a possibility that a resistance reduction effect deteriorates at a leading edge of the riblet sheet, and FIG. 6(b) is a perspective view that illustrates the riblet sheet having the structure that can reduce the possibility that the resistance reduction effect deteriorates at the leading edge of the riblet sheet.
[FIG. 7] FIG. 7 is a cross-sectional view that illustrates the riblet sheet in a first modified example.
[FIG. 8] Each of FIG. 8(a) to FIG. 8(b) is a cross-sectional view that illustrates the riblet sheet in a second modified example.
[FIG. 9] FIG. 9 is a cross-sectional view that illustrates the riblet sheet in the second modified example.
[FIG. 10] Each of FIG. 10(a) to FIG. 10(d) is a cross-sectional view that illustrates the riblet sheet in the second modified example.
[FIG. 11] FIG. 11 is a cross-sectional view that illustrates the riblet sheet in a third modified example.
[FIG. 12] Each of FIG. 12(a) and FIG. 12(c) is a cross-sectional view that illustrates the riblet sheet in a fourth modified example, and FIG. 12(b) is a perspective view that illustrates the riblet sheet in the fourth modified example.
[FIG. 13] FIG. 13(a) is a cross-sectional view that illustrates the riblet sheet in a fifth modified example, and FIG. 13(b) is a perspective view that illustrates the riblet sheet in the fifth modified example.
[FIG. 14] FIG. 14 is a cross-sectional view that illustrates the riblet sheet in the fifth modified example.
[FIG. 15] FIG. 15(a) is a cross-sectional view that illustrates the riblet sheet in a sixth modified example, and FIG. 15(b) is a perspective view that illustrates the riblet sheet in the sixth modified example.
[FIG. 16] FIG. 16(a) is a cross-sectional view that illustrates the riblet sheet in the sixth modified example, and FIG. 16(b) is a perspective view that illustrates the riblet sheet in the sixth modified example.
[FIG. 17] FIG. 17(a) is a cross-sectional view that illustrates the riblet sheet in the sixth modified example, and FIG. 17(b) is a perspective view that illustrates the riblet sheet in the sixth modified example.
[FIG. 18] FIG. 18(a) is a cross-sectional view that illustrates the riblet sheet in an seventh modified example, and FIG. 18(b) is a perspective view that illustrates the riblet sheet in the seventh modified example.
[FIG. 19] Each of FIG. 19(a) and FIG. 19(b) is a cross-sectional view that illustrates the riblet sheet in the seventh modified example.
[FIG. 20] FIG. 20 is a cross-sectional view that illustrates the riblet sheet attached to the object.
[FIG. 21] FIG. 21(a) is a cross-sectional view that illustrates the riblet sheet in an eighth modified example, and FIG. 21(b) is a perspective view that illustrates the riblet sheet in the eighth modified example.
[FIG. 22] Each of FIG. 22(a) and FIG. 22(b) is a cross-sectional view that illustrates the riblet sheet in the eighth modified example.
[FIG. 23] FIG. 23 is a cross-sectional view that illustrates the riblet sheet attached to the object in a ninth modified example.

### Description of Example embodiments

Next, with reference to drawings, an example embodiment of a sheet member, a movable body, a blade member, a windmill, and an attaching method will be described.

### (1) Structure of Riblet Sheet 1

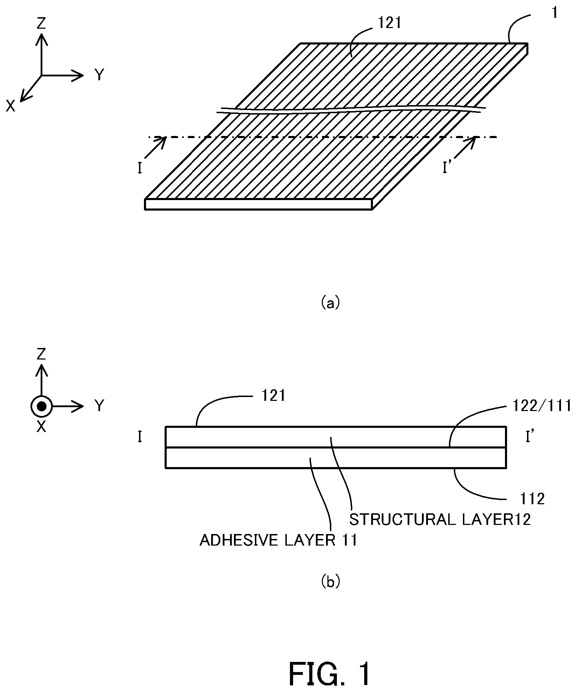

First, with reference to FIG. 1(a) to FIG. 1(b), a structure of a riblet sheet 1, which is one example of the sheet member, will be described. FIG. 1(a) is a perspective view that illustrates an external appearance of the riblet sheet 1 in the present example embodiment, and FIG. 1(b) is a cross-sectional view (I-I' cross-sectional view in FIG. 1(a)) that illustrates the structure of the riblet sheet 1 in the present example embodiment.

As illustrated in FIG. 1(a) and FIG. 1(b), the riblet sheet 1 is a sheet member. The sheet member may be a film-like, sheet-like, layered-like, foil-like, tape-like, or band-like member. Note that the sheet member may be referred to as a film member. In the example illustrated in FIG. 1(a) and FIG. 1(b), a Y-axis direction corresponds to a width direction of the riblet sheet 1, and a Z-axis direction corresponds to a thickness direction of the riblet sheet 1. The riblet sheet 1 is a sheet member in which a thickness of the riblet sheet 1 is much less than a width of the riblet sheet 1. As one example, the width of the riblet sheet 1 may be equal to or wider than several centimeters, may be equal to or wider than ten centimeters, may be equal to or wider than several tens of centimeters, or may be equal to or wider than one meter. On the other hand, the thickness of the riblet sheet 1 may be equal to or thinner than one millimeter, may be equal to or thinner than one centimeter, or may be equal to or thinner than several centimeters.

The riblet sheet 1 may have a longitudinal shape extending along a length direction that intersects the width direction and the thickness direction. In other words, the riblet sheet 1 may have a longitudinal shape in which a direction intersecting the width direction and the thickness direction is the longitudinal direction. In the example illustrated in FIG. 1(a) and FIG. 1(b), a X-axis direction is the length direction (the longitudinal direction) of the riblet sheet 1. As one example, the length of the riblet sheet 1 may be equal to or longer than several centimeters, may be equal to or longer than several tens of centimeters, may be equal to or longer than several tens of centimeters, may be equal to or longer than one meter, may be equal to or longer than ten meters, or may be equal to or longer than several tens of meters.

However, the riblet sheet 1 may not have the longitudinal shape extending along the length direction that intersects the width direction and thickness direction. The longitudinal direction of the riblet sheet 1 may be the width direction. Moreover, the riblet sheet 1 may have a rectangular shape in a planar viewed. As one example, the riblet sheet 1 extending along the length direction may be divided into a plurality of sheet members, each of which has a rectangular shape, along the length direction. Moreover, the riblet sheet 1 may have a square shape in a planar view. As one example, the riblet sheet 1 extending along the length direction may be divided into a plurality of sheet members, each of which has a square shape, along the length direction. Moreover, the riblet sheet 1 may have a close-packed shape in a case where the plurality of riblet sheets 1 are attached to an object OBJ. A polygonal shape such as a hexagon is one example of the close-packed shape in a case where the plurality of riblet sheets 1 are attached to the object OBJ.

The riblet sheet 1 may be a sheet member made of resin. The riblet sheet 1 may be a sheet member made of metal. The riblet sheet 1 may be a sheet member manufactured from a material other than resin or metal.

As illustrated in FIG. 1(b), the riblet sheet 1 includes an adhesive layer 11 and a structural layer 12. Specifically, the riblet sheet 1 has a laminated structure in which the adhesive layer 11 and the structural layer 12 are laminated. The adhesive layer 11 and the structural layer 12 are laminated so that a front surface 111 (a surface facing a +Z side in the example illustrated in FIG. 1(b)) of the adhesive layer 11 faces a back surface 122 (a surface facing a -Z side in the example illustrated in FIG. 1(b)) of the structural layer 12. Namely, the adhesive layer 11 and the structural layer 12 are laminated so that the adhesive layer 11 is formed on the back surface 122 of the structural layer 12. In other words, the adhesive layer 11 and the structural layer 12 are laminated so that the structural layer 12 is formed on the front surface 111 of the adhesive layer 11. In this case, a front surface 121 (a surface facing the +Z side in the example illustrated in FIG. 1(b)) of the structural layer 12 may be regarded as a front surface of the riblet sheet 1. On the other hand, a back surface 112 (a surface facing the -Z side in the example illustrated in FIG. 1(b)) of the adhesive layer 11 may be regarded as a back surface of the riblet sheet 1.

The adhesive layer 11 is a layer that includes an adhesive for attaching the riblet sheet 1 to the object OBJ (for example, a movable body described later). In other words, the adhesive layer 11 is a layer that includes the adhesive for attaching the structural layer 12 to the object OBJ (for example, the movable body described later). Therefore, the riblet sheet 1 (especially, the structural layer 12) may be attached to the object OBJ through the adhesive layer 11. Namely, the riblet sheet 1 (especially, the structural layer 12) may be attached to the object OBJ by using the adhesive layer 11.

Specifically, at least a part of the back surface 112 of the adhesive layer 11 is an adhesive surface for attaching the riblet sheet 1 (especially, the structural layer 12) to the object OBJ. Namely, the back surface 112 of the adhesive layer 11 includes the adhesive surface for attaching the riblet sheet 1 (especially, the structural layer 12) to the object OBJ. In this case, the riblet sheet 1 (especially, the structural layer 12) may be adhered to the object OBJ by the back surface 112 (the adhesive surface) of the adhesive layer 11 contacting with the object OBJ.

The structural layer 12 is a layer on which a riblet structure RB is formed. Namely, the structural layer 12 is a layer including the riblet structure RB. Therefore, the riblet sheet 1 is a sheet member on which the riblet structure RB is formed. Namely, the riblet sheet 1 is a sheet member including the riblet structure RB. However, in FIG. 1(b), the riblet structure RB formed on the structural layer 12 is omitted for a simplicity of the drawings.

Specifically, the riblet structure RB is formed on at least a part of the front surface 121 of the structural layer 12. Therefore, the structural layer 12 is a layer in which the riblet structure RB is formed on at least a part of its front surface 121. Namely, the structural layer 12 is a layer including the riblet structure RB on at least a part of its front surface 121. Therefore, the riblet sheet 1 is a sheet member including the riblet structure RB formed on at least a part of its front surface 121. Namely, the riblet sheet 1 is a sheet member including the riblet structure RB on at least a part of its front surface 121.

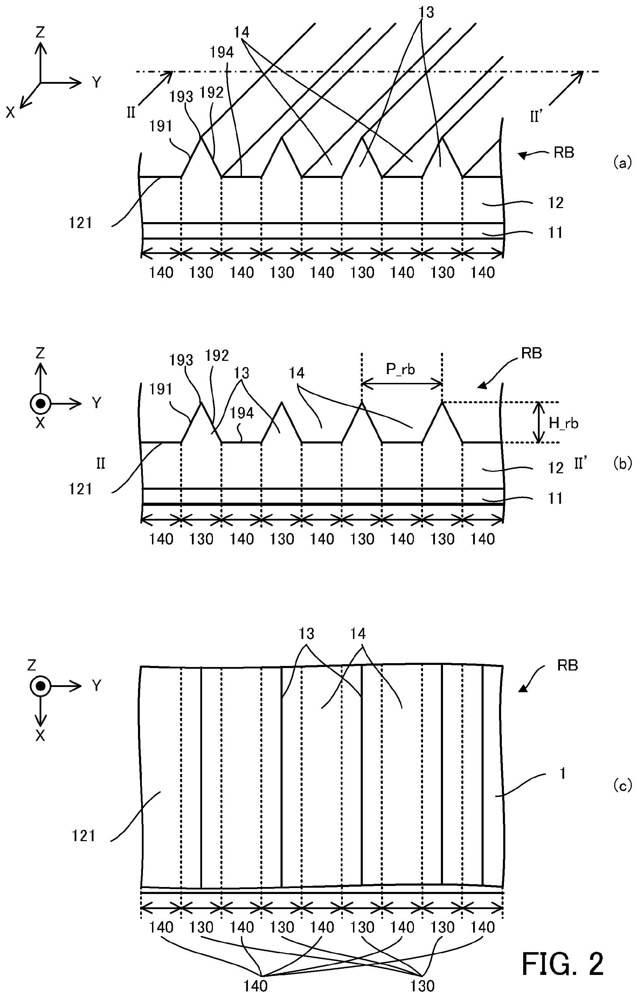

One example of the riblet structure RB is illustrated in FIG. 2(a) to FIG. 2(c). FIG. 2(a) is a perspective view that illustrates the riblet structure RB, FIG. 2(b) is a cross-sectional view (II-II' cross-sectional view in FIG. 2(a)) that illustrates the riblet structure RB, and FIG. 2(c) is a top view that illustrates the riblet structure RB.

As illustrated in FIG. 2(a) to FIG. 2(c), the riblet structure RB may include a convex structure 13. Namely, the convex structure 13 may be formed on the front surface 121 of the structural layer 12 as at least a part of the riblet structure RB. Especially, as illustrated in FIG. 2(a) to FIG. 2(c), the riblet structure RB may include a plurality of convex structures 13. Namely, the plurality of convex structures 13 may be formed on the front surface 121 of the structural layer 12 as at least a part of the riblet structure RB.

Each of the plurality of convex structures 13 may extend along a predetermined extension direction. In this case, the riblet structure RB may include the plurality of convex structures 13 each of which extends along the predetermined extension direction. Each of the plurality of convex structures 13 may be arranged along a predetermined arrangement direction. In this case, the riblet structure RB may include the plurality of convex structures 13 that are arranged along the predetermined arrangement direction.

As one example, the riblet structure RB may include a structure in which the plurality of convex structures 13, each of which extends along the predetermined extension direction, are arranged along the predetermined arrangement direction that intersects the predetermined extension direction. Namely, the riblet structure RB may include a structure in which the plurality of convex structures 13, each of which is formed to extend along the predetermined extension direction, are arranged along the predetermined arrangement direction that intersects the predetermined extension direction. Each of the extension direction and the arrangement direction may be a direction that is along the front surface 121. Each of the extension direction and the arrangement direction may be a direction that intersects a below-described height direction along which the convex structure 13 protrudes. Moreover, one of the extension direction and the arrangement direction may be the longitudinal direction of the riblet sheet 1, and the other one of the extension direction and the arrangement direction may be a transverse direction of the riblet sheet 1. In the example illustrated in FIG. 2(a) to FIG. 2(c), the riblet structure RB includes a structure in which the plurality of convex structures 13, each of which extends along a X-axis direction, are arranged along a Y-axis direction. Namely, FIG. 2(a) to FIG. 2(c) illustrate an example in which the predetermined extension direction is the X-axis direction and the predetermined arrangement direction is the Y-axis direction that intersects (typically, is orthogonal to) the X-axis direction.

The convex structure 13 is a structure that protrudes from a surrounding area along the predetermined height direction. Note that the surrounding area here may be a groove structure 14 described below. Namely, the convex structure 13 may be a structure that protrudes from the groove structure 14. The convex structure 13 is a structure that protrudes from the surrounding area along predetermined height direction that intersects both the predetermined extension direction, along which the convex structure 13 extends, and the predetermined arrangement direction, along which the convex structures 13 are arranged. Note that the height direction may be the thickness direction of the riblet sheet 1. In the example illustrated in FIG. 2(a) to FIG. 2(c), the convex structure 13 is a structure that protrudes from the surrounding area along a Z-axis direction that is the thickness direction of the riblet sheet 1. Namely, FIG. 2(a) to FIG. 2(c) illustrates an example in which the predetermined height direction is the Z-axis direction that intersects (typically, is orthogonal to) the X-axis direction and the Y-axis direction. Note that the convex structure 13 may include a protrusion-shaped structure that projects against the surrounding area. The convex structure 13 may include a convex-shaped structure that is convex with respect to the surrounding area. The convex structure 13 may include a mountain-shaped structure that is a peak relative to the surrounding area.

The convex structure 13 includes a pair of side surfaces 191 and 192 that face in directions opposite to each other, respectively, for example. Note that a "state in which one surface and other surface face in the direction opposite to each other" in the present example embodiment may mean a state in which one surface faces one side of an axis, which intersects the one surface and the other surface, and the other surface faces other side (namely, an opposite side) of the same axis. In the example illustrated in FIG. 2(a) to FIG. 2(c), the convex structure 13 includes a side surface 191 facing the -Y side and the side surface 192 facing the +Y side. Each of the pair of side surfaces 191 and 192 is a planar surface. However, at least one of the pair of side surfaces 191 and 192 may include a curved surface.

The pair of side surfaces 191 and 192 may be non-parallel to each other. In this case, the pair of side surfaces 191 and 192 of the convex structure 13 may be connected to each other through one edge parts (upper edge parts at the +Z side in the example illustrated in FIG. 2(a) to FIG. 2(c)) thereof. A part at which the pair of side surfaces 191 and 192 of the convex structure 13 are connected forms a corner part 193 of the convex structure 13. The corner part 193 of the convex structure 13 may form a vertex of the convex structure 13. The corner part 193 of the convex structure 13 may form a ridge line of the convex structure 13. The corner part 193 of the convex structure 13 may form a boundary part between the pair of side surfaces 191 and 192 of the convex structure 13. In this case, the pair of side surfaces 191 and 192 may be considered to be connected to each other through the corner part 193 of the convex structure 13. In the example illustrated in FIG. 2(a) to FIG. 2(c), the pair of side surfaces 191 and 192 are connected so that the upper edge part of the side surface 191 contacts the upper edge part of the side surface 192. Note that the side surfaces 191 and 192 may be referred to as inclined surfaces 191 and 192, respectively.

The corner part 193 of the convex structure 13 may include a surface. For example, the corner part 193 of the convex structure 13 may include a planar surface. For example, the corner part 193 of the convex structure 13 may include a curved surface (for example, a convex surface). In this case, the corner part 193 of the convex structure 13 may be regarded as a surface that includes the vertex of the convex structure 13.

The convex structure 13 may be a structure that is formed by the pair of side surfaces 191 and 192. The convex structure 13 may be a structure whose surface includes the pair of side surfaces 191 and 192. In this case, a shape of a cross-section of the convex structure 13 including the Z-axis may be a triangular shape. In this case, the shape of the cross-section of the convex structure 13 including the Z-axis may be a symmetrical triangular shape, or may be an asymmetrical triangular shape. However, the shape of the cross-section of the convex structure 13 including the Z-axis may be any shape that is different from the triangular shape.

The groove structure 14 that is recessed relative to an surrounding area is formed between adjacent convex structures 13. Note that the surrounding area here may be the convex structure 13. Namely, the groove structure 14 may be a structure that is recessed relative to the convex structure 13. Therefore, the riblet structure RB may include a structure in which a plurality of groove structures 14, each of which extends along the predetermined extension direction, are arranged along the predetermined arrangement direction. Namely, the riblet structure RB may include a structure in which the plurality of groove structures 14, each of which is formed to extend along the predetermined extension direction, are arranged along the predetermined arrangement direction. Note that the groove structure 14 may be regarded as a structure that is recessed relative to the vertex or the ridge line (for example, the corner part 193 described above) of the convex structure 13.

The groove structure 14 may be regarded as a structure that is positioned between the side surface 191 of one convex structure 13 and the side surface 192 of another convex structure 13 that is adjacent to the one convex structure 13 along the arrangement direction along which the convex structures 13 are arranged. Specifically, the side surface 191 of one convex structure 13 and the side surface 192 of another convex structure 13, which is adjacent to the one convex structure 13 along the arrangement direction along which the convex structures 13 are arranged, may be connected through a boundary surface 194 that connects other edge parts thereof (lower edge parts at the -Z side in the example illustrated in FIG. 2(a) to FIG. 2(c)). Namely, the side surfaces 191 and 192, which face each other, of two adjacent convex structures 13 may be connected through the boundary surface 194 that forms a boundary between the two adjacent convex structures 13. In the example illustrated in FIG. 2(a) to FIG. 2(c), the boundary surface 194 includes a surface that intersects each of the side surfaces 191 and 192 that are connected by the boundary surface 194. In this case, the groove structure 14 may be a structure that is formed by the boundary surface 194. The groove structure 14 may be a structure that includes a groove facing the boundary surface 194. The boundary surface 194 may be regarded as a bottom surface of the groove structure 14. In this case, a boundary between the boundary surface 194 and each of the side surfaces 191 and 192 may be used as a boundary between the convex structure 13 and the groove structure 14. Note that the groove structure 14 may be referred to as a groove-shaped structure or a concave structure.

However, in some cases, the groove structure 14 may be regarded as a structure that is formed by the side surfaces 191 and 192, which are connected by the boundary surface 194, and the boundary surface 194. The groove structure 14 may be regarded as a structure that includes a groove facing the side surfaces 191 and 192, which are connected by the boundary surface 194, and the boundary surface 194. Namely, the side surfaces 191 and 192 may be regarded as side surfaces of the groove structure 14.

The front surface 121 of the structural layer 12 may be considered to include the side surfaces 191 and 192. Namely, each of the side surfaces 191 and 192 may be considered to be a part of the front surface 121 of the structural layer 12. Moreover, in a case where the corner part 193 (the vertex or the ridge line) of the convex structure 13 is not an angle but a curved surface (a convex surface), the front surface 121 of the structural layer 12 may be considered to include the corner part 193. Namely, the corner part 193 may be considered to be a part of the front surface 121 of the structural layer 12. Moreover, the front surface 121 of the structural layer 12 may be considered to include boundary surface 194 (for example, the bottom surface of the groove structure 14). Namely, the boundary surface 194 may be considered to be a part of the front surface 121 of the structural layer 12.

In this way, the convex structure 13 (especially, the plurality of convex structures 13) and the groove structure 14 (especially, the plurality of groove structures 14) are formed as at least a part of the riblet structure RB on the front surface 121 of the structural layer 12. Namely, the front surface 121 of the structural layer 12 includes a convex area 130 in which the convex structure 13 (especially, the plurality of convex structures 13) is formed and a groove area 140 in which the groove structure 14 (especially, the plurality of groove structures 14) is formed. In this case, the convex area 130, which is a part of the front surface 121 of the structural layer 12, may be considered to be equivalent to an area that includes the side surfaces 191 and 192, which are the surfaces of the convex structure 13, as a front surface thereof. The groove area 140, which is a part of the front surface 121 of the structural layer 12, may be considered to be equivalent to an area that includes the boundary surface 194 as a front surface thereof.

The convex structure 13 described above may be regarded as a structure that protrudes from the groove area 140. In other words, the convex structure 13 described above may be regarded as a structure that protrudes from the boundary surface 194, which is a front surface of the groove area 140. In this case, the front surface 121 of the structural layer 12 may be considered to include the boundary surface 194 (the groove area 140), on which the convex structure 13 is not formed, and the side surfaces 191 and 192 (namely, the convex area 130 on which the convex structure 13 is formed) that are the surfaces of the convex structure 13 protruding from the boundary surface 194.

Note that a minute uneven structure may be considered to be formed on the boundary surface 194 depending on a flatness of a surface of the boundary surface 194, although the convex structure 13 is not formed on the boundary surface 194. Even in this case, a height of a convex structure of the minute uneven structure formed on the boundary surface 194 is lower than a height H_rb of the convex structure 13. In other words, the minute uneven structure, which includes the convex structure whose height is lower than the height H_rb of the convex structure 13, may be formed on the boundary surface 194. Moreover, a pitch (namely, an arrangement period) of the convex structures included in the minute uneven structure formed on the boundary surface 194 is shorter than a pitch P_rb of the convex structures 13. In other words, the minute uneven structure, which includes the convex structures arranged at a pitch shorter than the pitch P_rb of the convex structures 13, may be formed on the boundary surface 194.

In any case, the fact remains that the flatness of the boundary surface 194 (namely, the flatness of the groove area 140) is lower than the flatness of the convex area 130. Therefore, the minute uneven structure may be formed on the boundary surface 194 as long as the flatness of the boundary surface 194 is lower than the flatness of the convex area 130.

The plurality of convex structures 13 may be formed so that the plurality of convex structures 13 are arranged in a regular pattern. Here, "regularity" may be the pitch, an interval, or the width of the convex structure 13 and / or the groove structure 14, or may be a duty of the convex structure 13 and the groove structure 14 (a ratio of a width of a convex part and a width of a following part). Specifically, the regular arrangement of the convex structures 13 may include an arrangement in which the pitch of at least one of the convex structures 13 and the groove structures 14 is regular one. The regular arrangement of the convex structures 13 may include an arrangement in which the pitch of at least one of the convex structures 13 and the groove structures 14 is constant. The regular arrangement of the convex structures 13 may include an arrangement in which the interval of at least one of the convex structures 13 and the groove structures 14 is regular one. The regular arrangement of the convex structures 13 may include an arrangement in which the interval of at least one of the convex structures 13 and the groove structures 14 is constant. The regular arrangement of the convex structures 13 may include an arrangement in which the width of at least one of the convex structures 13 and the groove structures 14 is regular one. The regular arrangement of the convex structures 13 may include an arrangement in which the width of at least one of the convex structures 13 and the groove structures 14 is constant. The regular arrangement of the convex structures 13 may include an arrangement in which the duty ratio of the convex structures 13 and the groove structures 14 is regular one. The regular arrangement of the convex structures 13 may include an arrangement in which the duty ratio of the convex structures 13 and the groove structures 14 is constant. Note that the duty ratio of the convex structure 13 and the groove structure 14 may be a ratio of the width of the convex structure 13 to the width of the groove structure 14. The regular arrangement of the convex structure 13 may include an arrangement in which the duty ratio of at least one of the convex structure 13 and the groove structure 14 is regular one. The regular arrangement of the convex structure 13 may include an arrangement in which the duty ratio of at least one of the convex structure 13 and the groove structure 14 is constant. Note that the duty ratio of the convex structure 13 may be a ratio of the width of the convex structure 13 to the pitch P_rb of the convex structure 13. The duty ratio of the groove structure 14 may be a ratio of the width of the groove structure 14 to the pitch of the groove structure 14.

For example, the plurality of convex structures 13 may be formed so that the plurality of convex structures 13 are arranged along the predetermined arrangement direction with equal pitch. For example, the plurality of convex structures 13 may be formed so that structure groups, each of which includes at least two convex structures 13, are arranged along the predetermined arrangement direction with equal pitch. The plurality of convex structures 13 may be formed so that at least two convex structures 13 are arranged in a regular pattern in accordance with a first rule in a first part of the front surface 121 of the structural layer 12 and at least two convex structures 13 are arranged in a regular pattern in accordance with the same first rule in a second part of the front surface 121 of the structural layer 12. The plurality of convex structures 13 may be formed so that at least two convex structures 13 are arranged in a regular pattern in accordance with a first rule in a first part of the front surface 121 of the structural layer 12 and at least two convex structures 13 are arranged in a regular pattern in accordance with a second rule, which is different form the first rule, in a second part of the front surface 121 of the structural layer 12. Note that a state in which the plurality of convex structures 13 are arranged in a regular pattern may be considered to be equivalent to a state in which the plurality of groove structures 14 are arranged in a regular pattern, because the convex structures 13 and the groove structures 14 are formed alternately.

The height H_rb of at least one of the plurality of convex structures 13 may be set to a height determined based on the pitch P_rb of the convex structures 13. For example, the height H_rb of at least one of the plurality of convex structures 13 may be equal to or less than the pitch P_rb of the convex structures 13. For example, the height H_rb of at least one of the plurality of convex structures 13 may be equal to or less than half of the pitch P_rb of the convex structures 13. Moreover, the height H_rb of at least one of the plurality of convex structures 13 may be within a range of half of the pitch P_rb of the convex structures 13 -1#2 ± 10%.

As one example, the pitch P_rb of the convex structures 13 may be equal to or less than 100 micrometers. In this case, the height H_rb of at least one of the plurality of convex structures 13 may be equal to or less than 100 micrometers, may be equal to or less than 50 micrometers, or may be within a range of 50 micrometers ± 5 micrometers.

As one example, the pitch P_rb of the convex structures 13 may be equal to or less than 150 micrometers. In this case, the height H_rb of at least one of the plurality of convex structures 13 may be equal to or less than 150 micrometers, may be equal to or less than 75 micrometers, or may be within a range of 75 micrometers ± 7.5 micrometers.

As one example, the pitch P_rb of the convex structures 13 may be equal to or less than 200 micrometers. In this case, the height H_rb of at least one of the plurality of convex structures 13 may be equal to or less than 200 micrometers, may be equal to or less than 100 micrometers, or may be within a range of 100 micrometers ± 10 micrometers.

As one example, the pitch P_rb of the convex structures 13 may be equal to or less than 300 micrometers. In this case, the height H_rb of at least one of the plurality of convex structures 13 may be equal to or less than 300 micrometers, may be equal to or less than 150 micrometers, or may be within a range of 150 micrometers ± 15 micrometers.

As one example, the pitch P_rb of the convex structures 13 may be equal to or less than 400 micrometers. In this case, the height H_rb of at least one of the plurality of convex structures 13 may be equal to or less than 400 micrometers, may be equal to or less than 200 micrometers, or may be within a range of 200 micrometers ± 20 micrometers.

Note that the height H_rb of the convex structure 13 may mean a height from the bottom surface of the groove structure 14 (namely, the boundary surface 194). The height H_rb of the convex structure 13 may mean a length (a length along the height direction) by which the convex structure 13 protrudes from the bottom surface of the groove structure 14. The height H_rb of the convex structure 13 may mean a distance along the height direction between the bottom surface of the groove structure 14 and the convex structure 13. The height H_rb of the convex structure 13 may mean a distance along the height direction between the bottom surface of the groove structure 14 and the corner part 193 of the convex structure 13. The height H_rb of the convex structure 13 may mean a length of a perpendicular line that extends from the corner part 193 of the convex structure 13 toward the bottom surface of the groove structure 14 (alternatively, a virtual plane obtained by extending the bottom surface). The height H_rb of the convex structure 13 may mean a length of a perpendicular line that extends from the corner part 193 of the convex structure 13 toward a virtual plane that connects a boundary between one side surface 191 of the convex structure 13 and the bottom surface of the groove structure 14 (namely, the boundary surface 194) and a boundary between the other side surface 192 of the convex structure 13 and the bottom surface of the groove structure 14 (namely, the boundary surface 194). Note that the height H_rb of the convex structure 13 may be considered to be equivalent to a depth of the groove structure 14 from the vertex or the ridge line (namely, corner part 193) of the convex structure 13.

Considering that the convex structure 13 is formed on the structural layer 12, a strength (alternatively, a rigidity, the same applies in the below-described description) of the structural layer 12 may be a strength satisfying a condition that the convex structure 13 can be formed on the structural layer 12. Furthermore, considering that it is desirable for the structural layer 12 to have a certain strength in order to attach the riblet sheet 1 including the structural layer 12 to the object OBJ, the strength of the structural layer 12 may be a strength satisfying a condition that the riblet sheet 1 including the structural layer 12 is properly attached to the object OBJ.

A thickness of the structural layer 12 is one example a parameter that affects the strength of the structural layer 12. The thickness of the structural layer 12 may be a thickness satisfying the condition that the convex structures 13 can be formed on the structural layer 12. For example, the thickness of the structural layer 12 may be equal to or greater than two times, one time, one-half, or one-third of the pitch P_rb of the convex structure 13. In a case where the thickness of the structural layer 12 is equal to or greater than two times, one time, one-half or one-third of the pitch P_rb of the convex structure 13, the convex structure 13 can be stably formed on the structural layer 12 more stably, compared to a case where the thickness of the structural layer 12 is less than two times, one time, one-half, or one-third of the pitch P_rb of the convex structure 13.

A type of a material of the structural layer 12 is one example of the parameter that affects the strength of the structural layer 12. Therefore, the thickness of the structural layer 12 may be set based on the type of the material of the structural layer 12. For example, the thickness of the structural layer 12 that is made of a high-strength material may be thinner than the thickness of the structural layer 12 that is made of a low-strength material. As one example, the thickness of a metal structural layer 12 may be thinner than the thickness of a resin structural layer 12. As another example, the thickness of the structural layer 12 that is made of a resin harder than polyurethane may be thinner than the thickness of the structural layer 12 that is made of a relatively softer polyurethane.

On the other hand, the thickness of the adhesive layer 11 may be thinner than the thickness of the structural layer 12, because the convex structure 13 may not be formed on the adhesive layer 11. For example, the thickness of the adhesive layer 11 may be equal to or less than one-fifth of the thickness of the structural layer 12. For example, the thickness of the adhesive layer 11 may be equal to or less than one-fourth, one-third, or one-half of the thickness of the structural layer 12. However, the thickness of the adhesive layer 11 may be thicker than or equal to the thickness of the structural layer 12.

However, there is a possibility that the riblet sheet 1 attached to the object OBJ through the adhesive layer 11 is peeled from the object OBJ in a case where the adhesive layer 11 is excessively thin. Therefore, the thickness of the adhesive layer 11 may be a thickness satisfying a condition that the riblet sheet 1 is properly attached to the object OBJ through the adhesive layer 11. The thickness of the adhesive layer 11 may be a thickness satisfying a condition that the riblet sheet 1 attached to the object OBJ through the adhesive layer 11 is not peeled easily.

The riblet structure RB may be used as a structure by which a resistance (especially, at least one of a frictional resistance and a turbulent frictional resistance) of the front surface of the riblet sheet 1 (namely, the front surface 121 of the structural layer 12) to a fluid is reducible. In this case, the front surface 121 of the structural layer 12 on which the riblet structure RB is formed may be regarded as a surface by which the resistance of the riblet sheet 1 (typically, the front surface 121 of the structural layer 12) to the fluid is reducible.

The riblet sheet 1 on which the riblet structure RB is formed may be attached to the object OBJ through the adhesive layer 11 as described above. Specifically, the riblet sheet 1 on which the riblet structure RB is formed may be attached to the surface of the object OBJ through the adhesive layer 11 as described above. In this case, the riblet structure RB may be used as a structure by which a resistance (especially, at least one of a frictional resistance and a turbulent frictional resistance) of the surface of the object OBJ, to which the riblet sheet 1 is attached, to the fluid is reducible. Therefore, the riblet sheet 1 may be attached to the object OBJ including a member that is disposed (in other words, positioned) in the fluid. Note that the "fluid" here means any medium (for example, at least one of gas and liquid) that flows relative to the surface of the object OBJ. For example, in a case where the front surface of object OBJ moves relative to the medium although the medium itself is static, this medium may be referred to as the fluid. Note that a state in which the medium is static may mean a state in which the medium does not move relative to a predetermined reference object (for example, a ground surface).

Attaching the riblet sheet 1 to the object OBJ may be considered equivalent to forming the riblet structure RB on the surface of the object OBJ. In this case, in a case where the riblet structure RB is formed on the surface of the object OBJ by attaching the riblet sheet 1, it is possible to form the riblet structure RB on the surface of the object OBJ more easily, compared to a case where the riblet structure RB is directly formed on the surface of the object OBJ without using the riblet sheet 1. This is because it is enough to attach the riblet sheet 1 to the object OBJ in order to form the riblet structure RB on the surface of the object OBJ.

The movable body is one example of the object OBJ to which the riblet sheet 1 is attached. Especially, the movable body that is movable in the fluid the example of the object OBJ to which the riblet sheet 1 is attached. At least one of a railway vehicle, an automobile, an aircraft, a ship, a windmill, and a turbine is one example of the movable body. A manned aircraft on which a person boards is one example of the aircraft. An unmanned aircraft (namely, a drone (UAV: Unmanned Arial Vehicle) on which a person does not board is one example of the aircraft. At least one of the manned aircraft and the unmanned aircraft may include a rotor-type of aircraft including at least one rotor, a fixed-wing-type of aircraft including at least one fixed wing, and an aircraft (for example, VTOL: Vertical Take-Off and Landing) including at least one rotor and at least one fixed wing. Note that the rotor-type of aircraft including three or more rotors may be referred to as a multicopter.

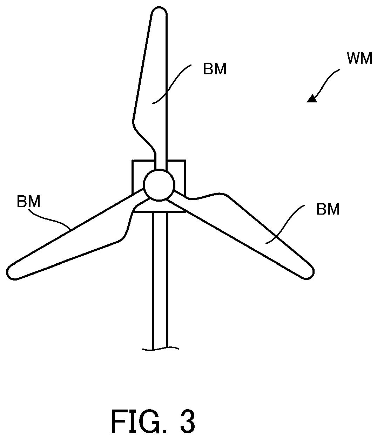

For example, FIG. 3 illustrates a windmill WM to a surface of which the riblet sheet 1 is attached. As illustrated in FIG. 3, the windmill WM includes a plurality of blade members (in other words, propellers or blades) BM. The windmill WM converts a wind force into power by means of wind blowing against the plurality of blade members BM. In this case, the riblet sheet 1 may be attached to at least a part of the blade members BM.

In a case where the riblet sheet 1 is attached to at least a part of the surface of the movable body (alternatively, any object OBJ, the same applies in the below-described description), the movable body is movable relative to the fluid relatively easily. Therefore, the resistance that prevents the movable body from moving relative to the fluid is reduced, and thereby an energy saving is achievable. Namely, it is possible to manufacture the environmentally preferable movable body. For example, in a case where the riblet sheet 1 is attached to at least a part of the surface of the aircraft, the resistance that prevents the aircraft from moving is reduced, and thereby a fuel saving of the aircraft is achievable. For example, in a case where the riblet sheet 1 is attached to at least a part of the surface of the windmill WM (for example, the blade member BM of the windmill), the resistance that prevents the windmill WM from moving (typically, rotating) is reduced, and thereby a high efficiency of the windmill WM is achievable. For example, in a case where the riblet sheet 1 is attached to at least a part of a surface of a lift-type of horizontal windmill WM (for example, the blade member BM of the windmill), lift force increases, and thereby a high efficiency of the windmill WM is achievable. For example, in a case where the riblet sheet 1 is attached to at least a part of a surface of the turbine for an engine (especially, a turbine blade), the resistance that prevents the turbine for the engine from moving (typically, rotating) is reduced, and thereby a high efficiency or energy saving of the turbine for the engine is achievable. For example, in a case where the riblet sheet 1 is attached to at least a part of a surface of the turbine for a power generation(especially, a turbine blade), the resistance that prevents the turbine for the power generation from moving (typically, rotating) is reduced, and thereby a high efficiency or energy saving of the turbine for the power generation is achievable. Therefore, there is a possibility that the riblet sheet 1 can contribute "13-2-2 Total Greenhous gas emission per year" in indicators included in Goal 13 (Take urgent action to combat climate change and its impact) of Sustainable Development Goals (SDGs) initiated by United Nations.

The riblet sheet 1 may be attached to the object OBJ by an application apparatus for attaching the riblet sheet 1 to the object OBJ. The application apparatus may automatically attach the riblet sheet 1 to the object OBJ without an work of the operator. The application apparatus may semi-automatically attach the riblet sheet 1 to the object OBJ by using the work of the operator. The application apparatus may assist the operator to attach the riblet sheet 1 to the object OBJ.

One riblet sheet 1, which has been attached to the object OBJ, may be replaced with another riblet sheet 1. For example, one riblet sheet 1, which has been attached to the object OBJ, may be peeled off, and then, another riblet sheet 1 may be attached to the object OBJ from which the first riblet sheet 1 has been peeled off. For example, an old riblet sheet 1, which has been attached to the object OBJ, may be peeled off, and then, a new riblet sheet 1 may be attached to the object OBJ from which the old riblet sheet 1 has been peeled off. In this case, even in a case where the riblet sheet 1 wears out (for example, even in a case where the riblet structure RB wears out), a resistance reduction effect of the riblet sheet 1 is properly achievable by replacing the riblet sheet 1.

Depending on the type of object OBJ to which the riblet sheet 1 is attached, there is a possibility that it is not easy to replace the riblet sheet 1, which has been attached to the object OBJ.. For example, in a case where the riblet sheet 1 is attached to a large windmill or a large ship that is one example of the object OBJ, there is a possibility that the it is not easy to replace the riblet sheet 1, which has been attached to the large windmill or the large ship. For example, in a case where the riblet sheet 1 is attached to a rotational member (for example, the windmill, the turbine, the propeller, or a fan) that is one example of the object OBJ, there is a possibility that the it is not easy to replace the riblet sheet 1, which has been attached to the rotating object OBJ. In a case where it is not easy to replace the riblet sheet 1 that has been attached to the object OBJ, the thickness of the riblet sheet 1 may be thicker, compared to a case where it is easy to replace the riblet sheet 1 that has been attached to the object OBJ. As a result, the strength of the riblet sheet 1 improves, and the riblet sheet 1 does not wear out easily. Alternatively, since the strength of the riblet sheet 1 improves, the riblet structure RB formed on the riblet sheet 1 does not wear out easily. As a result, the resistance reduction effect of the riblet sheet 1 is properly achievable even in a case a frequency at which the riblet sheet 1 is replaced is lower.

A below-described example is one example of the parameter of the riblet sheet 1 in a case where it is not easy to replace the riblet sheet 1 that has been attached to the object OBJ. The thickness of the riblet sheet 1 may be 360 micrometers. The thickness of the adhesive layer 11 may be 60 micrometers. The thickness of the structural layer 12 may be 300 micrometers. The pitch P_rb of the convex structures 13 may be 150 micrometers to 200 micrometers. The height H_rb of the convex structure 13 may be 100 micrometers to 200 micrometers.

A below-described example is one example of the parameter of the riblet sheet 1 in a case where it is not easy to replace the riblet sheet 1 that has been attached to the object OBJ. The thickness of the riblet sheet 1 may be equal to or thicker than 200 micrometers and may be equal to or thinner than 400 micrometers. The thickness of the adhesive layer 11 may be equal to or thicker than 30 micrometers and may be equal to or thinner than 70 micrometers. The thickness of the structural layer 12 may be equal to or thicker than 150 micrometers and may be equal to or thinner than 420 micrometers. The pitch P_rb of the convex structures 13 may be 75 micrometers to 300 micrometers. The height H_rb of the convex structure 13 may be 50 micrometers to 300 micrometers.

On the other hand, in a case where it is easy to replace the riblet sheet 1 that has been attached to the object OBJ, the thickness of the riblet sheet 1 may be thinner, compared to a case where it is not easy to replace the riblet sheet 1 that has been attached to the object OBJ. In a case where it is easy to replace the riblet sheet 1 that has been attached to the object OBJ, the thickness of the adhesive layer 11 may be thinner, compared to a case where it is not easy to replace the riblet sheet 1 that has been attached to the object OBJ. In a case where it is easy to replace the riblet sheet 1 that has been attached to the object OBJ, the thickness of the structural layer 12 may be thinner, compared to a case where it is not easy to replace the riblet sheet 1 that has been attached to the object OBJ. In a case where it is easy to replace the riblet sheet 1 that has been attached to the object OBJ, the pitch P_rb of the convex structures 13 may be shorter, compared to a case where it is not easy to replace the riblet sheet 1 that has been attached to the object OBJ. In a case where it is easy to replace the riblet sheet 1 that has been attached to the object OBJ, the height H_rb of the convex structure 13 may be lower, compared to a case where it is not easy to replace the riblet sheet 1 that has been attached to the object OBJ.

### (2) Structure Of Riblet Sheet 1 For Properly Achieving Resistance Reduction Effect

### (2-1) Method For Attaching Riblet Sheet 1 For Properly Achieving Resistance Reduction Effect

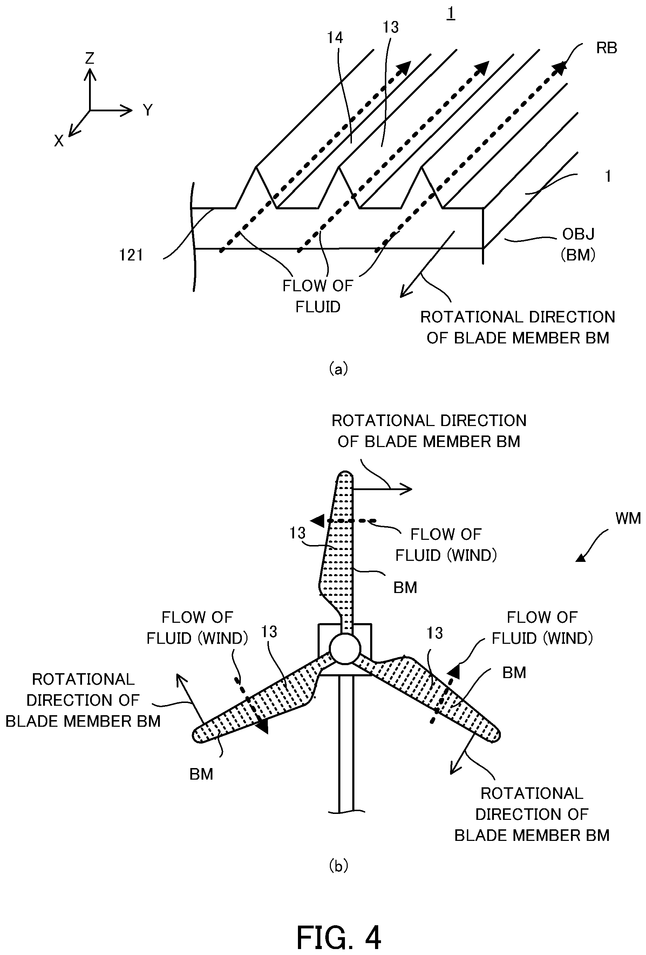

In order to allow the object OBJ to properly achieve the resistance reduction effect of reducing the resistance of the surface of object OBJ, to which riblet sheet 1 has been attached, to the fluid, the riblet sheet 1 may be attached to the surface of the object OBJ so that the convex structure 13 extends along a flow direction of the fluid relative to the surface of the object OBJ as illustrated in FIG. 4(a) and FIG. 4(b). Namely, as illustrated in FIG. 4, the riblet sheet 1 may be attached to the surface of the object OBJ so that the extension direction of the convex structure 13 is the same as the flow direction of the fluid relative to the surface of the object OBJ.

For example, each of FIG. 4(a) and FIG. 4(b) illustrates an example in which the object OBJ (the movable body) to which the riblet sheet 1 is attached is the windmill WM and the riblet sheet 1 is attached to the blade member BM of the windmill WM. In this case, a wind (namely, gas that is one example of the fluid) blowing onto the blade member BM flows on the surface of the blade member BM along a rotational direction of the blade member BM. Specifically, the wind blowing onto the blade member BM flows on the surface of the blade member BM along the rotational direction of the blade member BM toward a side opposite to a side toward which the blade member BM rotates. Therefore, in this case, the riblet sheet 1 may be attached to the surface of the object OBJ so that the convex structure 13 extends along the rotational direction of the blade member BM. Namely, as illustrated in FIG. 4(a) and FIG. 4(b), the riblet sheet 1 may be attached to the surface of the object OBJ so that the extension direction of the convex structure 13 is the same as the rotational direction of the blade member BM.

In this case, the fluid flows in the groove structure 14 formed on the front surface of the riblet sheet 1 along the groove structure 14. As a result, it is less likely that the flow of the fluid is disturbed, and it is less likely that a turbulence or the like occurs. Therefore, the object OBJ to which the riblet sheet 1 has been attached can properly achieve the resistance reduction effect of the riblet sheet 1.

### (2-2) Cause Of Technical Problems Of Deterioration Of Resistance Reduction Effect

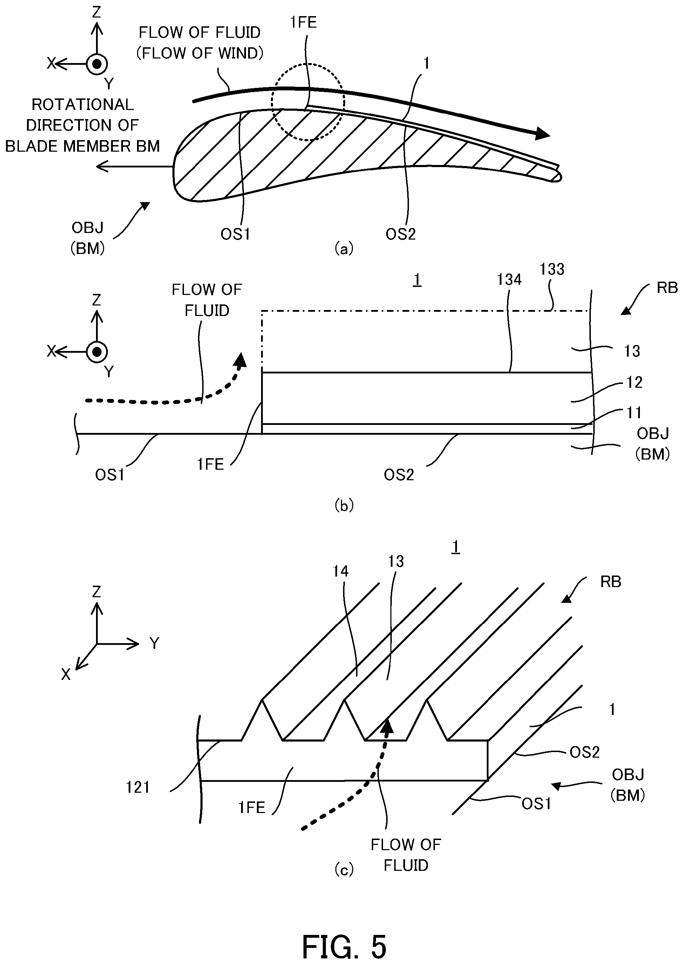

However, even in a case where the riblet sheet 1 is attached to the object OBJ so that the convex structure 13 extends along the flow direction of the fluid relative to the surface of the object OBJ as illustrated in FIG. 4(a) and FIG. 4(b), there is a possibility that a technical problem, that is a deterioration of the resistance reduction effect of the riblet sheet 1 at or near an edge part of the riblet sheet 1, occurs. Next, the technical problem, that is the deterioration of the resistance reduction effect of the riblet sheet 1 at the edge part of the riblet sheet 1, will be described with reference to FIG. 5(a) to FIG. 5(c). FIG. 5(a) is a cross-sectional view that illustrates the riblet sheet 1 attached to the blade member BM of the windmill WM that is one example of one object OBJ. FIG. 5(b) is a cross-sectional view that illustrates the edge part of the riblet sheet 1 illustrated in FIG. 5(a). FIG. 5(c) is a perspective view that illustrates the edge part of the riblet sheet 1 illustrated in FIG. 5(a).

As illustrated in FIG. 5(a) to FIG. 5(c), there is a possibility that a leading edge 1FE of the riblet sheet 1, which is the edge part of the riblet sheet 1 at an upstream side (the +X side in the example illustrated in FIG. 5(a) to FIG. 5(c)) along the flow of the fluid, serves as an obstacle that prevents the flow of the fluid on the surface of the object OBJ. Specifically, a state of the fluid flowing on the surface of the object OBJ is transitions near the leading edge 1FE of the riblet sheet 1 from a state in which the fluid flows on a first part OS1 of the surface of the object OBJ to which the riblet sheet 1 is not attached to a state in which the fluid flows on a second part OS2 of the surface of the object OBJ to which the riblet sheet 1 is attached. In other words, the state of the fluid flowing on the surface of the object OBJ is transitions near the leading edge 1FE of the riblet sheet 1 from the state in which the fluid flows on the first part OS1 of the surface of the object OBJ to which the riblet sheet 1 is not attached to a state in which the fluid flows on the riblet sheet 1 attached to the second part OS2 of the surface of the object OBJ. . In this case, there is a possibility that the leading edge 1FE of the riblet sheet 1 serves as the obstacle (for example, a wall) that prevents the flow of the fluid on the surface of the object OBJ, because the riblet sheet 1 protrudes from the surface of the object OBJ by the thickness of the riblet sheet 1.

Here, in order to achieve the resistance reduction effect of the riblet sheet 1 more effectively, it is effective to attach the riblet sheet 1 to a part of the surface of the object OBJ at which the turbulence occurs as illustrated in FIG. 5(a). In a case where the object OBJ is the blade member BM, the riblet sheet 1 may be attached to the blade member BM along the longitudinal direction of the blade member BM, or the riblet sheet 1 may be attached to the blade member BM along a direction intersecting the longitudinal direction of the blade member BM. Moreover, instead of attaching the riblet sheet 1 to the entire surface of the object OBJ, the riblet sheet 1 may be attached to a part of the surface of the object OBJ positioned on a downstream side along the flow of the fluid. In this case, there is a possibility that the leading edge 1FE of the riblet sheet 1 serves as the obstacle (for example, the, wall) that prevents the flow of the fluid on the surface of the object OBJ.

FIG. 5(a) illustrates an example in which the riblet sheet 1 is attached to a curved surface of the object OBJ. Even in a case where the riblet sheet 1 is attached to the curved surface of the object OBJ, there is a possibility that the leading edge 1FE of the riblet sheet 1 serves as the obstacle (for example, the wall) that prevents the flow of the fluid on the surface of the object OBJ. On the other hand, even in a case where the riblet sheet 1 is attached to a planar surface of the object OBJ, there is a possibility that the leading edge 1FE of the riblet sheet 1 serves as the obstacle (for example, the wall) that prevents the flow of the fluid on the surface of the object OBJ.

Thus, in a case where the leading edge 1FE of the riblet sheet 1 serves as the obstacle that prevents the flow of the fluid, it is more likely that the turbulence occurs at and / or near the leading edge 1FE of the riblet sheet 1, compared to a case where the leading edge 1FE does not serve as the obstacle. As a result, there is a possibility that the resistance of the surface of the object OBJ, to which the riblet sheet 1 is attached, to the fluid increases. Namely, there is a possibility that the resistance reduction effect of the riblet sheet 1 deteriorates. As a result, there is a possibility that the object OBJ to which the riblet sheet 1 is attached cannot sufficiently achieve the resistance reduction effect of the riblet sheet 1 (namely, the effect of reducing the resistance of the surface of the object OBJ to the fluid). Specifically, a height (specifically, a height from the surface of the object OBJ) of the leading edge 1FE of the riblet sheet 1, which serves as the obstacle, is higher as the thickness of the riblet sheet 1 is thicker, and as a result, it is more likely that the object OBJ to which the riblet sheet 1 is attached cannot sufficiently achieve the resistance reduction effect.

Therefore, in the present example embodiment, the riblet sheet 1 has a structure that can reduce a possibility of deterioration of the resistance reduction effect at the leading edge 1FE of the riblet sheet 1. Specifically, as described above, the reason why the resistance reduction effect deteriorates at the leading edge 1FE of the riblet sheet 1 is that the leading edge 1FE serves as the obstacle that prevents the flow of the fluid. Therefore, in the present example embodiment, the riblet sheet 1 has a structure that can reduce the possibility of the leading edge 1FE of the riblet sheet 1 serving as the obstacle that prevents the flow of the fluid.

Note that it is likely that the leading edge 1FE of the riblet sheet 1 serves as the obstacle (for example, the wall) that prevents the flow of the fluid flowing on the surface of the object OBJ as the thickness of the structural layer 12 is thicker to increase the strength of the structural layer 12 as described above. This is because the wall formed by the leading edge 1FE of the riblet sheet 1 is higher as the thickness of the structural layer 12 is thicker. Therefore, an effect of the structure of the riblet sheet 1 described in the present example embodiment is greater as the thickness of the structural layer 12 is thicker.

Similarly, it is likely that the leading edge 1FE of the riblet sheet 1 serves as the obstacle (for example, the wall) that prevents the flow of the fluid flowing on the surface of the object OBJ as the thickness of the adhesive layer 11 is thicker to properly attach the riblet sheet 1 to the object OBJ as described above. This is because the wall formed by the leading edge 1FE of the riblet sheet 1 is higher as the thickness of the adhesive layer 11 is thicker. Therefore, an effect of the structure of the riblet sheet 1 described in the present example embodiment is greater as the thickness of the adhesive layer 11 is thicker.

Conversely, the thickness of the structural layer 12 may be set to a thickness satisfying a condition that the possibility of the leading edge 1FE of the riblet sheet 1 serving as the obstacle (for example, the wall), which prevents the flow of the fluid flowing on the surface of object OBJ, while satisfying the above-described condition. Similarly, the thickness of the adhesive layer 11 may be set to a thickness satisfying a condition that the possibility of the leading edge 1FE of the riblet sheet 1 serving as the obstacle (for example, the wall), which prevents the flow of the fluid flowing on the surface of object OBJ, while satisfying the above-described condition..

### (2-3) Detail Of Structure Of Riblet Sheet 1 Reducing Possibility Of Deterioration Of Resistance Reduction Effect

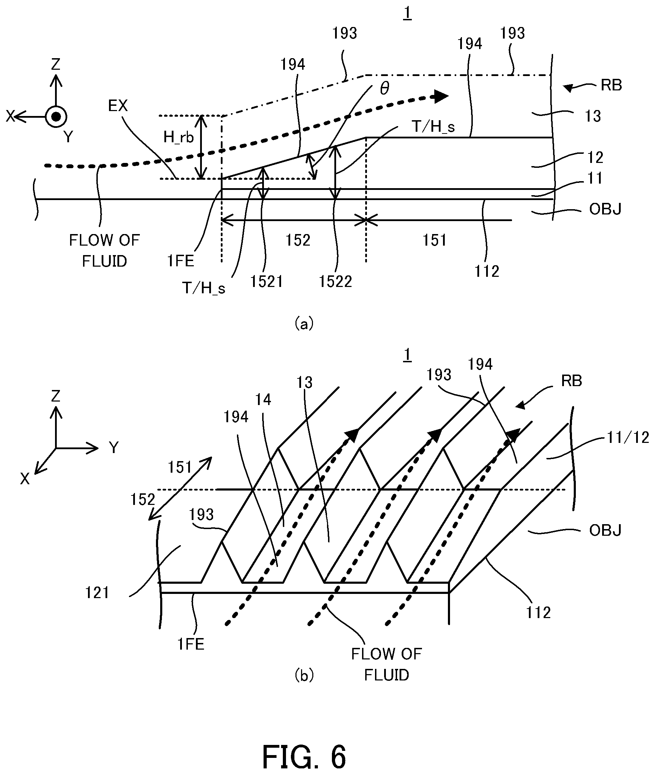

Next, with reference to FIG. 6(a) to FIG. 6(b), a detail of the riblet sheet 1 having the structure that can reduce the possibility of the deterioration of the resistance reduction effect at the leading edge 1FE of the riblet sheet 1 will be described. FIG. 6(a) is a cross-sectional view that illustrates the riblet sheet 1 having the structure that can reduce the possibility of the deterioration of the resistance reduction effect at the leading edge 1FE of the riblet sheet 1. FIG. 6(b) is a perspective view that illustrates the riblet sheet 1 having the structure that can reduce the possibility of the deterioration of the resistance reduction effect at the leading edge 1FE of the riblet sheet 1.

As illustrated in FIG. 6(a) and FIG. 6(b), the riblet sheet 1 includes a first sheet part 151 and a second sheet part 152. In this case, in a case where the riblet sheet 1 is attached to the object OBJ, the first sheet part 151 of the riblet sheet 1 is attached to a first surface part of the surface of the object OBJ, and the second sheet part 152 of the riblet sheet 1 is attached to a second surface part, which is different from the first surface part, of the surface of the object OBJ.

The first sheet part 151 is physically connected to the second sheet part 152. Namely, the first sheet part 151 is physically integrated with the second sheet part 152. However, as described later in a seventh modified example, the first sheet part 151 may be physically separated from the second sheet part 152.

At least one convex structure 13, which is a part of the riblet structure RB formed on the riblet sheet 1, is formed on a surface of the first sheet part 151 (namely, a part of the front surface 121 of the structural layer 12 that is the front surface of the riblet sheet 1). Therefore, the first sheet part 151 includes the convex area 130 in which the convex structure 13 is formed and the groove area 140 in which the convex structure 13 is not formed. The surface of the first sheet part 151 includes the side surfaces 191 and 192 of the convex structure 13, which constitute the surface of the convex structure 13 (namely, the surface of the convex area 130), and the boundary surface 194 on which the convex structure 13 is not formed.

At least one convex structure 13, which is a part of the riblet structure RB formed on the riblet sheet 1, is also formed on a surface of the second sheet part 152 (namely, other part of the front surface 121 of the structural layer 12 that is the front surface of the riblet sheet 1). Therefore, the second sheet part 152 includes the convex area 130 in which the convex structure 13 is formed and the groove area 140 in which the convex structure 13 is not formed. The surface of the second sheet part 152 includes the side surfaces 191 and 192 of the convex structure 13, which constitute the surface of the convex structure 13 (namely, the surface of the convex area 130), and the boundary surface 194 on which the convex structure 13 is not formed.

The first sheet part 151 and the second sheet part 152 are adjacent to each other. Note that a state in which "the first sheet part 151 and the second sheet part 152 are adjacent to each other" may include a state in which "the first sheet part 151 and the second sheet part 152 are adjacent so that the first sheet part 151 and the second sheet part 152 directly contact with (particularly, are connected to) each other at a boundary between the first sheet part 151 and the second sheet part 152". The state in which "the first sheet part 151 and the second sheet part 152 are adjacent to each other" may include a state in which "the first sheet part 151 and the second sheet part 152 are adjacent to each other so that the first sheet part 151 and the second sheet part 152 do not directly contact with each other at the boundary between the first sheet part 151 and the second sheet part 152". The state in which "the first sheet part 151 and the second sheet part 152 are adjacent to each other" may include a state in which "the first sheet part 151 and the second sheet part 152 are adjacent to each other while other sheet part exists between the first sheet part 151 and the second sheet part 152". Note that in a case where the first sheet part 151 is physically separated from the second sheet part 152 as described later in the seventh modified example, the state in which "the first sheet part 151 and the second sheet part 152 are adjacent to each other" may include a state in which "the first sheet part 151 and the second sheet part 152 are adjacent to each other while a gap exists between the first sheet part 151 and the second sheet part 152".

Especially, the first sheet part 151 and the second sheet part 152 are adjacent to each other along the extension direction of the convex structure 13. In the example illustrated in FIG. 6(a) and FIG. 6(b), the first sheet part 151 and the second sheet part 152 are adjacent along the X-axis direction because the extension direction of the convex structure 13 is the X-axis direction.

In this case, the first surface part of the object OBJ to which the first sheet part 151 is attached and the second surface part of the object OBJ to which the second sheet part 152 is attached are also adjacent to each other. Specifically, the first surface part of the object OBJ to which the first sheet part 151 is attached and the second surface part of the object OBJ to which the second sheet part 152 is attached are adjacent to each other along the extension direction of the convex structure 13 (the X-axis direction in the example illustrated in FIG. 6(a) and FIG. 6(b)).

The convex structures 13 formed on the first sheet part 151 may be connected to the convex structures 13 formed on the second sheet part 152. Namely, the convex structures 13 formed on the first sheet part 151 may be physically integrated with the convex structures 13 formed on the second sheet part 152. For example, a first convex structure 13 of the plurality of convex structures 13 formed on the first sheet part 151 may be connected to a second convex structure 13, which corresponds to the first convex structure 13, of the plurality of convex structures 13 formed on the second sheet part 152. However, the convex structure 13 formed on the first sheet part 151 may not be connected to the convex structure 13 formed on the second sheet part 152. That is, the convex structure 13 formed on the first sheet part 151 may not be physically separated the convex structure 13 formed on the second sheet part 152.

The second sheet part 152 includes the leading edge 1FE of the riblet sheet 1. The second sheet part 152 includes the edge (namely, the leading edge 1FE) of the riblet sheet 1 in the extension direction of the convex structure 13 because the leading edge 1FE of the riblet sheet 1 is the edge of the riblet sheet 1 at the upstream side along the flow of the fluid and the convex structure 13 extends along the flow direction of the fluid as described above. On the other hand, the first sheet part 151 does not include the leading edge 1FE of the riblet sheet 1.

Especially in the present example embodiment, a thickness T of the riblet sheet 1 is set to a thickness that can reduce the possibility of the deterioration of the resistance reduction effect at the leading edge 1FE of the riblet sheet 1 as illustrated in FIG. 6(a). Especially, the thickness T of the second sheet part 152, which includes the leading edge 1FE of the riblet sheet 1, is set to a thickness that can reduce the possibility of the deterioration of the resistance reduction effect at the leading edge 1FE of the riblet sheet 1.

Note that the thickness T of the riblet sheet 1 may mean a distance between the front surface of the riblet sheet 1 and the back surface of the riblet sheet 1 along the thickness direction of the riblet sheet 1 (the Z-axis direction in the example illustrated in FIG. 6(a) and FIG. 6(b)). Here, as described above, the front surface of the riblet sheet 1 is the front surface 121 of the structural layer 12, and the back surface of the riblet sheet 1 is the back surface 112 of the adhesive layer 11. Therefore, the thickness T of the riblet sheet 1 may mean a distance between the front surface 121 of the structural layer 12 and the back surface 112 of the adhesive layer 11 along the thickness direction of the riblet sheet 1. Note that the front surface 121 of the structural layer 12 includes the convex area 130 (specifically, the side surfaces 191 and 192 of the convex structure 13 corresponding to the surface of the convex structure 13) in which the convex structure 13 is formed and the groove area 140 (specifically, the boundary surface 194) in which the convex structure 13 is not formed, as described above. In the present example embodiment, the groove area 140 (namely, the boundary surface 194) may be used as the front surface of the riblet sheet 1 (namely, the front surface 121 of the structural layer 12) that is used to define the thickness T of the riblet sheet 1. Namely, as illustrated in FIG. 6(a), the thickness T of the riblet sheet 1 may mean a distance between the boundary surface 194 and the back surface 112 of the adhesive layer 11 along the thickness direction of the riblet sheet 1. In the below-described description, an example in which the thickness T of the riblet sheet 1 is the distance between the boundary surface 194 and the back surface 112 of the adhesive layer 11 along the thickness direction of the riblet sheet 1 will be described.

Note that the thickness direction of the riblet sheet 1 is usually a direction that is orthogonal to the back surface 112 of the adhesive layer 11 in a case where the back surface 112 of the adhesive layer 11 (namely, the back surface of the riblet sheet 1) is a planar surface. Therefore, the thickness T of the riblet sheet 1 may mean the distance between the boundary surface 194 and the back surface 112 of the adhesive layer 11 along the direction that is orthogonal to the back surface 112 of the adhesive layer 11. Note that the thickness T of the riblet sheet 1 may mean the distance between the boundary surface 194 and the back surface 112 of the adhesive layer 11 along a first direction that is the thickness direction of the riblet sheet 1 (namely, a direction different from a second direction that is a direction orthogonal to the back surface 112 of the adhesive layer 11), or may mean the distance between the boundary surface 194 and the back surface 112 of the adhesive layer 11 along the second direction that is the direction orthogonal to the back surface 112 of the adhesive layer 11 (namely, a direction different from the first direction that is the thickness direction of the riblet sheet 1) even in a case where the thickness direction of the riblet sheet 1 is different from the direction that is orthogonal to the back surface 112 of the adhesive layer 11.

Moreover, in some cases, the back surface 112 of the adhesive layer 11 (namely, the back surface of the riblet sheet 1) may include a curved surface. Even in this case, the thickness T of the riblet sheet 1 may mean the distance between the boundary surface 194 and the back surface 112 of the adhesive layer 11 along the thickness direction of the riblet sheet 1. Alternatively, the thickness T of the riblet sheet 1 may mean the distance between the boundary surface 194 and the back surface 112 of the adhesive layer 11 along a direction that is orthogonal to a tangent line of the curved surface formed by the back surface 112 of the adhesive layer 11.

The thickness T of the second sheet part 152 varies so that the thickness T of a first part 1521 of the second sheet part 152 is thinner than the thickness T of a second part 1522 of the second sheet part 152, as illustrated in FIG. 6(a) and FIG. 6(b). The first part 1521 is positioned at a position that is closer to the leading edge 1FE than the second part 1522 is. Note that the first part 1521 and the second part 1522 may be adjacent to each other. The first part 1521 and the second part 1522 may be adjacent to each other while other part exists between the first part 1521 and the second part 1522. Alternatively, in a case where the second sheet part 152 is divided into a plurality of sheet members that are physically separated as described later in the seventh modified example, the first part 1521 and the second part 1522 may be adjacent to each other while a gap exists between the first part 1521 and the second part 1522.

In the example illustrated in FIG. 6(a) to FIG. 6(b), the thickness T of the second sheet part 152 may be thinner as it is closer to the leading edge 1FE of the riblet sheet 1. Namely, the thickness T of the second sheet part 152 may vary so that the thickness T of the second sheet part 152 is thinner as it is closer to the leading edge 1FE of the riblet sheet 1. Namely, the thickness T of each part of the second sheet part 152 may vary according to a distance between each part of the second sheet part 152 and the leading edge 1FE of the riblet sheet 1.

Specifically, the thickness T of one part of the second sheet part 152 may be thinner as the one part is closer to the leading edge 1FE. In other words, the thickness T of one part, which is positioned at one position, of the second sheet part 152 may be thinner as the one position is closer to the leading edge 1FE. Namely, the thickness T of the second sheet part 152 may be thinner in a continuous manner. Specifically, the thickness T of the second sheet part 152 may be thinner in a continuous manner as it is closer to the leading edge 1FE of the riblet sheet 1. In other words, the thickness T of each part of the second sheet part 152 may be thinner in a continuous manner as each part of the second sheet part 152 is closer to the leading edge 1FE of the riblet sheet 1. In this case, the thickness T of the second sheet part 152 may be minimal at the leading edge 1FE of the riblet sheet 1, and the thickness T of the second sheet part 152 may be maximal at the boundary between the first sheet part 151 and the second sheet part 152.

The thickness T of the second sheet part 152 may be varied by varying the thickness T of the structural layer 12. For example, the thickness of the structural layer 12 included in the first part 1521 of the second sheet part 152 may be thinner than the thickness of the structural layer 12 included in the second part 1522 of the second sheet part 152 in order to make the thickness T of the first part 1521 of the second sheet part 152 be thinner than the thickness T of the second part 1522 of the second sheet part 152. The thickness T of the structural layer 12 of the second sheet part 152 may be thinner as it is closer to the leading edge 1FE of the riblet sheet 1 in order to make the thickness T of the second sheet part 152 be thinner as it is closer to the leading edge 1FE of the riblet sheet 1. In this case, as illustrated in FIG. 6(a), the thickness of the adhesive layer 11 of the second sheet part 152 may be constant.

The thickness of the second sheet part 152 may vary so that a ratio of the thickness of the structural layer 12 of the second sheet part 152 to the thickness of the adhesive layer 11 of the second sheet part 152 is smaller as it is closer to the leading edge 1FE of the riblet sheet 1. The thickness of the second sheet part 152 may vary so that the ratio of the thickness of the structural layer 12 of the second sheet part 152 to the thickness of the adhesive layer 11 of the second sheet part 152 is closer to 1 as it is closer to the leading edge 1FE of the riblet sheet 1. The thickness of the second sheet part 152 may vary so that a proportion of the structural layer 12 to the second sheet part 152 decreases. The thickness of the second sheet part 152 may vary so that a proportion of the adhesive layer 11 to the second sheet part 152 increases. The thickness of the second sheet part 152 may vary so that the proportion of the structural layer 12 to the second sheet part 152 and the proportion of the adhesive layer 11 to the second sheet part 152 is closer to 1:1.

However, the thickness of the adhesive layer 11 in the second sheet part 152 may not be constant. The thickness of the adhesive layer 11 in the second sheet part 152 may vary.

As one example, in order to reduce the possibility of the riblet sheet 1 attached to the object OBJ being peeled due to the flow of the fluid, the thickness of the adhesive layer 11 of the second sheet part 152 may be relatively thicker at the upstream side of the flow of the fluid (at the leading edge 1FE side of the riblet sheet 1). Namely, the thickness of the adhesive layer 11 of the second sheet part 152 at the upstream side of the flow of the fluid (at the leading edge 1FE side of the riblet sheet 1) may be thicker than the thickness of the adhesive layer 11 of the second sheet part 152 at the downstream side of the flow of the fluid (at a side opposite the leading edge 1FE of the riblet sheet 1).

As another example, the thickness of the adhesive layer 11 of the second sheet part 152 may vary so that the thickness of the adhesive layer 11 on which a relatively thin structural layer 12 is formed is thinner than the thickness of the adhesive layer 11 on which a relatively thick structural layer 12 is formed. In this case, the thickness of the adhesive layer 11 of the second sheet part 152 may vary so that a ratio of the thickness of one adhesive part of the adhesive layer 11 to the thickness of one structural part of the structural layer 12, which is formed on the one adhesive part, is constant regardless of the position of the one adhesive part and the one structural part. In this case, an adhesive force required to attach the relatively thin structural layer 12 to the object OBJ is generally smaller than an adhesive force required to attach the relatively thick structural layer 12 to the object OBJ. Therefore, even in a case where the thickness of the adhesive layer 11 on which the relatively thin structural layer 12 is formed is relatively thinner, the second sheet part 152 can be properly attached to object OBJ. Furthermore, in a case where the thickness of the adhesive layer 11 on which the relatively thin structural layer 12 is formed is relatively thin, the thickness of the riblet sheet 1 is also relatively thin. As a result, the resistance reduction effect of the riblet sheet 1 can be achieved more effectively.

Note that the thickness of the structural layer 11 may be zero at the leading edge 1FE of the riblet sheet 1. Namely, the thickness of the structural layer 11 may be closer to zero as it is closer to the leading edge 1FE of the riblet sheet 1. The thickness T of the riblet sheet 1 (namely, a total sum of the thickness of the structural layer 12 and the thickness of the adhesive layer 11) may become zero the leading edge 1FE of the riblet sheet 1. Namely, the thickness T of the riblet sheet 1 may be closer to zero as it is closer to the leading edge 1FE of the riblet sheet 1. In this case, it is less likely that the leading edge 1FE of the riblet sheet 1 serves as the obstacle (for example, the wall) that prevents the flow of the fluid flowing on the surface of the object OBJ.

On the other hand, the thickness T of the first sheet part 151 may be constant. Namely, the thickness T of each part of the first sheet part 151 may be constant regardless of a distance between each part of the first sheet part 151 and the leading edge 1FE of the riblet sheet 1.

The thickness T of the riblet sheet 1 may be considered to be equivalent to a height H_s of the riblet sheet 1 from the surface of the object OBJ in a state in which the riblet sheet 1 is attached to the surface of the object OBJ. Namely, the thickness T of the second sheet part 152 of the riblet sheet 1 may be considered to be equivalent to a height H_s of the second sheet part 152 of the riblet sheet 1 from the surface of the object OBJ. A state in which "the thickness T of the riblet sheet 1 is set to a thickness that that can reduce the possibility of the deterioration of the resistance reduction effect at the leading edge 1FE of the riblet sheet 1" may be considered to be equivalent to a state in which "the height H_s of the riblet sheet 1 is set to a height H_s that that can reduce the possibility of the deterioration of the resistance reduction effect at the leading edge 1FE of the riblet sheet 1". A state in which "the thickness T of the second sheet part 152 including the leading edge 1FE of the riblet sheet 1 is set to the thickness that that can reduce the possibility of the deterioration of the resistance reduction effect at the leading edge 1FE of the riblet sheet 1" may be considered to be equivalent to a state in which "the height H_s of the second sheet part 152 including the leading edge 1FE of the riblet sheet 1 is set to a height that that can reduce the possibility of the deterioration of the resistance reduction effect at the leading edge 1FE of the riblet sheet 1".

Note that the height H_s of the riblet sheet 1 may mean a distance between the front surface of the riblet sheet 1 and the surface of the object OBJ along the thickness direction of the riblet sheet 1 (the Z-axis direction in the example illustrated in FIG. 6(a) and FIG. 6(b)). Here, as described above, the front surface of the riblet sheet 1 is the front surface 121 of the structural layer 12. Therefore, the height H_s of the riblet sheet 1 may mean a distance between the front surface 121 of the structural layer 12 and the surface of the object OBJ along the thickness direction of the riblet sheet 1. Note that the front surface 121 of the structural layer 12 includes the convex area 130 (specifically, the side surfaces 191 and 192 of the convex structure 13 corresponding to the surface of the convex structures 13) in which the convex structure 13 is formed and the groove area 140 (specifically, the boundary surface 194) in which the convex structure 13 is not formed, as described above. In the present example embodiment, the groove area 140 (namely, the boundary surface 194) may be used as the front surface of the riblet sheet 1 (namely, the front surface 121 of the structural layer 12) that is used to define the height H_s of the riblet sheet 1. Namely, the height H_s of the riblet sheet 1 may mean a distance between the boundary surface 194 and the surface of the object OBJ along the thickness direction of the riblet sheet 1.

Note that the thickness direction of the riblet sheet 1 is usually a direction that is orthogonal to the surface of the object OBJ in a case where the surface of the object OBJ is a planar surface. Therefore, the height H_s of the riblet sheet 1 may mean the distance between the boundary surface 194 and the surface of the object OBJ along the direction that is orthogonal to the surface of the object OBJ. Note that the height H_s of the riblet sheet 1 may mean the distance between the boundary surface 194 and the surface of the object OBJ along a first direction that is the thickness direction of the riblet sheet 1 (namely, a direction different from a second direction that is a direction orthogonal to the surface of the object OBJ), or may mean the distance between the boundary surface 194 and the surface of the object OBJ along the second direction that is the direction orthogonal to the surface of the object OBJ (namely, a direction different from the first direction that is the thickness direction of the riblet sheet 1) even in a case where the thickness direction of the riblet sheet 1 is different from the direction that is orthogonal to the surface of the object OBJ.

Moreover, in some cases, the surface of the object OBJ may include a curved surface. Even in this case, the height H_s of the riblet sheet 1 may mean the distance between the boundary surface 194 and the surface of the object OBJ along the thickness direction of the riblet sheet 1. Alternatively, the height H_s of the riblet sheet 1 may mean the distance between the boundary surface 194 and the surface of the object OBJ along a direction that is orthogonal to a tangent line of the curved surface formed by the surface of the object OBJ.

The height H_s of the second sheet part 152 varies so that the height H_s of the first part 1521 of the second sheet part 152 is lower than the height H_s of the second part 1522 of the second sheet part 152, as illustrated in FIG. 6(a) and FIG. 6(b). In the example illustrated in FIG. 6(a) to FIG. 6(b), the height H_s of the second sheet part 152 may be lower as it is closer to the leading edge 1FE of the riblet sheet 1. Namely, the height H_s of the second sheet part 152 may vary so that the height H_s of the second sheet part 152 is lower as it is closer to the leading edge 1FE of the riblet sheet 1. Specifically, the height H_s of one part of the second sheet part 152 may be lower as the one part is closer to the leading edge 1FE. In other words, the height H_s of one part, which is positioned at one position, of the second sheet part 152 may be lower as the one position is closer to the leading edge 1FE. Namely, the height H_s of the second sheet part 152 may be lower in a continuous manner. Specifically, the height H_s of the second sheet part 152 may be lower in a continuous manner as it is closer to the leading edge 1FE of the riblet sheet 1. In other words, the height H_s of each part of the second sheet part 152 may be lower in a continuous manner as each part of the second sheet part 152 is closer to the leading edge 1FE of the riblet sheet 1. In this case, the height H_s of the second sheet part 152 may be the lowest at the leading edge 1FE of the riblet sheet 1, and the height H_s of the second sheet part 152 may be the highest at the boundary between the first sheet part 151 and the second sheet part 152.

Note that the height H_s of the second sheet part 152 may be zero at the leading edge 1FE of the riblet sheet 1. In other words, the height H_s of the second sheet part 152 may be closer to zero as it is closer to the leading edge 1FE of the riblet sheet 1. In this case, it is less likely that the leading edge 1FE of the riblet sheet 1 serves as the obstacle (for example, the wall) that prevents the flow of the fluid flowing on the surface of the object OBJ.

In a case where the thickness T of the second sheet part 152 is thinner in a continuous manner (namely, the height H_s of the second sheet part 152 is lower in a continuous manner), the boundary surface 194, which is a part of the front surface of the second sheet part 152, may include an inclined surface. In this case, the entire boundary surface 194 of the second sheet part 152 may be the inclined surface. Alternatively, a part of the boundary surface 194 of the second sheet part 152 may be the inclined surface, and another part of the boundary surface 194 of the second sheet part 152 may not be the inclined surface.

The inclined surface may include a surface that is inclined with respect to an axis EX along the extension direction of the convex structure 13. Especially, the inclined surface may include a surface that is inclined with respect to the axis EX extending along the extension direction of the convex structure 13 formed on the first sheet part 151. In the example illustrated in FIG. 6(a) and FIG. 6(b), the inclined surface may include a surface that is inclined with respect to the axis EX extending along the X-axis direction because the extension direction of the convex structure 13 is the X-axis direction.

The inclined surface may include a surface that is inclined with respect to the back surface of the riblet sheet 1. Specifically, the inclined surface may include a surface that is inclined with respect to the back surface 112 of the adhesive layer 11, which is the back surface of the riblet sheet 1. In the example illustrated in FIG. 6(a) and FIG. 6(b), the inclined surface may include a surface that is inclined with respect to the XY plane because the back surface 112 of the adhesive layer 11 is a surface along the XY plane.

Note that the inclined surface may include a surface that is inclined with respect to the back surface 112 of the adhesive layer 11, which is a planar surface. The inclined surface may include a surface that is inclined with respect to the back surface 112 of the adhesive layer 11, which includes a curved surface. In a case where the back surface 112 of the adhesive layer 11 includes the curved surface, the "surface that is inclined with respect to the back surface 112 of the adhesive layer 11" may mean a surface that is inclined with respect to a tangent line of the curved surface formed by the back surface 112 of the adhesive layer 11.

The inclined surface may include a surface that is inclined with respect to the boundary surface 194 of the first sheet part 151. In the example illustrated in FIG. 6(a) and FIG. 6(b), the inclined surface may include a surface that is inclined with respect to the XY plane because the boundary surface 194 of the first sheet part 151 is a surface along the XY plane.

Note that the inclined surface may include a surface that is inclined with respect to the boundary surface 194 of the first sheet part 151, which is a planar surface. The inclined surface may include a surface that is inclined with respect to the boundary surface 194 of the first sheet part 151, which includes a curved surface. In a case where the boundary surface 194 of the first sheet part 151 includes the curved surface, the "surface that is inclined with respect to the boundary surface 194 of the first sheet part 151" may mean a surface that is inclined with respect to a tangent line of the curved surface formed by the boundary surface 194 of the first sheet part 151.

The inclined surface may include a surface that is inclined with respect to the surface of the object OBJ to which the riblet sheet 1 is attached. In the example illustrated in FIG. 6(a) and FIG. 6(b), the inclined surface may include a surface that is inclined with respect to the XY plane because the surface of the object OBJ is a surface along the XY plane.

Note that the inclined surface may include a surface that is inclined with respect to the surface of the object OBJ, which is a planar surface. The inclined surface may include a surface that is inclined with respect to the surface of the object OBJ, which includes a curved surface. In a case where the surface of the object OBJ includes the curved surface, the "surface that is inclined with respect to the surface of the object OBJ" may mean a surface that is inclined with respect to a tangent line of the curved surface formed by the surface of the object OBJ.

In a case where the boundary surface 194 of the second sheet part 152 includes the inclined surface, an inclination angle θ of the boundary surface 194 of the second sheet part 152 may be an acute angle. Namely, the inclination angle θ of the boundary surface 194 of the second sheet part 152 may be greater than 0 degrees and less than 90 degrees. Note that the inclination angle θ of the boundary surface 194 of the second sheet part 152 may mean an angle formed between the boundary surface 194 (especially, the inclined surface) of the second sheet part 152 and the axis EX that is along the extension direction of the convex structure 13. Especially, the inclination angle θ of the boundary surface 194 of the second sheet part 152 may mean a smaller one of two angles each of which is formed between the boundary surface 194 (especially, the inclined surface) of the second sheet part 152 and the axis EX that is along the extension direction of the convex structure 13. The inclination angle θ of the boundary surface 194 of the second sheet part 152 may mean an angle formed between the boundary surface 194 (especially, the inclined surface) of the second sheet part 152 and the back surface 112 of the adhesive layer 11. Especially, the inclination angle θ of the boundary surface 194 of the second sheet part 152 may mean a smaller one of two angles each of which is formed between the boundary surface 194 (especially, the inclined surface) of the second sheet part 152 and the back surface 112 of the adhesive layer 11. The inclination angle θ of the boundary surface 194 of the second sheet part 152 may mean an angle formed between the boundary surface 194 (especially, the inclined surface) of the second sheet part 152 and the boundary surface 194 of the first sheet part 151. Especially, the inclination angle θ of the boundary surface 194 of the second sheet part 152 may mean a smaller one of two angles each of which is formed between the boundary surface 194 (especially, the inclined surface) of the second sheet part 152 and the boundary surface 194 of the first sheet part 151.

The boundary surface 194 (the inclined surface) of the second sheet part 152 is a planar surface. In this case, the ridge line (namely, the corner part 193) of the convex structure 13 formed on the second sheet part 152 may have a straight-line shape. However, as described later in a second modified example, the boundary surface 194 (the inclined surface) of the second sheet part 152 may include a curved surface. In this case, the ridge line (namely, the corner part 193) of the convex structure 13 formed on the second sheet part 152 may have a curved-line shape.

The height H_rb of the convex structure 13 formed on the second sheet part 152 may be constant. Namely, the height H_rb of the convex structure 13 formed on the second sheet part 152 may be constant regardless of the distance between the convex structure 13 and the leading edge 1FE of the riblet sheet 1. In this case, the convex structure 13 may also be inclined because the boundary surface 194 of the second sheet part 152 includes the inclined surface,.

A state in which the convex structure 13 is inclined may mean a state in which the corner part 193 (namely, the ridge line) of the convex structure 13 is inclined. For example, the corner part 193 (namely, the ridge line) of the convex structure 13 formed on the second sheet part 152 may be inclined with respect to the axis EX that is along the extension direction (the X-axis direction in the example illustrated in FIG. 6(a) and FIG. 6(b)) of the convex structure 13 (specifically, the convex structure 13 formed on the first sheet part 151). For example, the corner part 193 (namely, the ridge line) of the convex structure 13 formed on the second sheet part 152 may be inclined with respect to the back surface of the riblet sheet 1 (specifically, the back surface 112 of the adhesive layer 11). For example, the corner part 193 (namely, the ridge line) of the convex structure 13 formed on the second sheet part 152 may be inclined with respect to the boundary surface 194 of the first sheet part 151. For example, the corner part 193 (namely, the ridge line) of the convex structure 13 formed on the second sheet part 152 may be inclined with respect to the corner part 193 (namely, the ridge line) of the convex structure 13 formed on the first sheet part 151. For example, the corner part 193 (namely, the ridge line) of the convex structure 13 formed on the second sheet part 152 may be inclined with respect to the surface of the object OBJ to which the riblet sheet 1 is attached.

However, the height H_rb of the convex structure 13 formed on the second sheet part 152 may vary. For example, the height H_rb of the convex structure 13 formed on the second sheet part 152 may vary according to the distance between the convex structure 13 and the leading edge 1FE of the riblet sheet 1. For example, the height H_rb of the convex structure 13 formed on the second sheet part 152 may vary so that a height from the surface of the object OBJ to the corner part 193 of the convex structure 13 is constant, regardless of the distance between the convex structure 13 and the leading edge 1FE of the riblet sheet 1.

Thus, in the present example embodiment, the thickness T of the second sheet part 152 is thinner as it is closer to the leading edge 1FE of the riblet sheet 1. Therefore, as illustrated in FIG. 6(a) to FIG. 6(b), the height of the leading edge 1FE of the riblet sheet 1 is lower, compared to a case where the thickness T of the second sheet part 152 does not decrease (namely, is constant). Therefore, as illustrated in FIG. 6(a) to FIG. 6(b), it is less likely that the leading edge 1FE of the riblet sheet 1 serves as the obstacle that prevents the flow of the fluid. As a result, it is less likely that the turbulence occurs at the leading edge 1FE of the riblet sheet 1 and / or near the leading edge 1FE. Therefore, it is more likely that the fluid flows along the groove structure 14, which is formed on the front surface of the riblet sheet 1, along the groove structure 14. As a result, it is less likely that the resistance of the surface of the object OBJ, to which the riblet sheet 1 is attached, to the fluid is high. Namely, the riblet sheet 1 can properly achieve the resistance reduction effect. Therefore, the object OBJ to which the riblet sheet 1 is attached can properly achieve the resistance reduction effect of the riblet sheet 1.

Moreover, in the present example embodiment, the thickness T of the second sheet part 152 is uniformly thin, rather, the thickness T of the second sheet part 152 is thinner as it is closer to the leading edge 1FE of the riblet sheet 1. Namely, the boundary surface 194 of the second sheet part 152 is the inclined surface. Therefore, compared to a case where the thickness T of the second sheet part 152 is uniformly thin, a strength of the riblet sheet 1 is higher. As a result, the riblet sheet 1 can be properly attached to the object OBJ. Furthermore, the object OBJ to which the riblet sheet 1 is attached can properly achieve the resistance reduction effect of the riblet sheet 1 as described above. Namely, in the present example embodiment, both an effect of properly attaching the riblet sheet 1 to the object OBJ and an effect of properly achieving the resistance reduction effect of the riblet sheet 1 are achievable.

Especially, in a case where the inclination angle θ of the boundary surface 194 of the second sheet part 152, which includes the inclined surface, is the acute angle, it is less likely that the leading edge 1FE of the riblet sheet 1 serves as the obstacle that prevents the flow of the fluid, compared to a case where the inclination angle θ of the boundary surface 194 of the second sheet part 152 is not the acute angle. Therefore, in a case where the inclination angle θ of the boundary surface 194 of the second sheet part 152, which includes the inclined surface, is the acute angle, the object OBJ to which the riblet sheet 1 is attached can properly achieve the resistance reduction effect of the riblet sheet 1, compared to a case where the inclination angle θ of the boundary surface 194 of the second sheet part 152 is not the acute angle.

Note that it is less likely that the leading edge 1FE of the riblet sheet 1 serves as the obstacle that prevents the flow of the fluid as the inclination angle θ of the boundary surface 194 of the second sheet part 152, which includes the inclined surface, is smaller. Therefore, the inclination angle θ of the boundary surface 194 of the second sheet part 152 may be set to a desired angle that can reduce the possibility of the leading edge 1FE of the riblet sheet 1 serving as the obstacle preventing the flow of the fluid. As a result, the object OBJ to which the riblet sheet 1 is attached can properly achieve the resistance reduction effect of the riblet sheet 1.

However, a proportion of the second sheet part 152 to the riblet sheet 1 is greater as the inclination angle θ of the boundary surface 194 of the second sheet part 152, which includes the inclined surface, is smaller. A proportion of the first sheet part 151 to the riblet sheet 1 is smaller as the proportion of the second sheet part 152 to the riblet sheet 1 is greater. Here, it is expected that the resistance reduction effect of the riblet sheet 1 is higher as the proportion of the first sheet part 151 in the riblet sheet 1 is greater. This is because the second sheet part 152 is formed to reduce the possibility of the deterioration of the resistance reduction effect at the leading edge 1FE of the riblet sheet 1, and it is likely that the overall resistance reduction effect of the riblet sheet 1 is mainly achieved by the first sheet part 151 whose boundary surface 194 may not include the inclined surface. Therefore, the inclination angle θ of the boundary surface 194 of the second sheet part 152 may be set to a desired angle that that can sufficiently reduce the possibility of the leading edge 1FE of the riblet sheet 1 serving as the obstacle preventing the flow of the fluid and that does not unnecessarily reduce the proportion of the first sheet part 151 to the riblet sheet 1.

Note that an effect that the riblet sheet 1 is not easily peeled from the object OBJ even in a case where an external pressure is applied to the riblet sheet 1 is achievable in the present example embodiment, because the thickness T of the second sheet part 152 is thinner as it is closer to the leading edge 1FE of the riblet sheet 1 (namely, the boundary surface 194 of the second sheet part 152 is the inclined surface). For example, the riblet sheet 1 is not easily peeled from the object OBJ even in a case where the fluid blows against the leading edge 1FE of the riblet sheet 1.

Moreover, an effect of reducing noise generated when the object OBJ, to which the riblet sheet 1 is attached, moves in the fluid is achievable in the present example embodiment, because the thickness T of the second sheet part 152 is thinner as it is closer to the leading edge 1FE of the riblet sheet 1 (namely, the boundary surface 194 of the second sheet part 152 is the inclined surface).

### (3) Manufacturing Method Of Riblet Sheet 1

The riblet sheet 1 may be manufactured by using a processing apparatus that is configured to perform a subtractive manufacturing. For example, the processing apparatus may perform the subtractive manufacturing for removing a part of the riblet sheet 1 (specifically, a part of the structural layer 12) by irradiating the riblet sheet 1, on which the riblet structure RB is not formed yet, with processing light. In this case, the processing apparatus may perform the subtractive manufacturing for removing a part of the riblet sheet 1 (specifically, a part of the structural layer 12) so that the riblet structure RB is formed on the front surface of the riblet sheet 1 (specifically, the front surface 121 of the structural layer 12). In this case, the processing apparatus may be considered to serve as a manufacturing apparatus that manufactures the riblet sheet 1.

Alternatively, the riblet sheet 1 may be manufactured by an imprint lithography using a mold. Namely, the riblet sheet 1 may be manufactured by an imprint lithography apparatus that performs the imprint lithography using the mold. A mold structure having a shape complementary to the riblet structure RB is formed on the mold used for the imprint lithography. In this case, the riblet structure RB corresponding to the mold structure may be transferred to the riblet sheet 1 by pressing the mold structure formed on the mold against the riblet sheet 1 (specifically, the structural layer 12) on which the riblet structure RB is not formed yet. As a result, the riblet structure RB may be formed on the front surface of the riblet sheet 1. In this case, the imprint lithography apparatus may be considered to serve as a manufacturing apparatus that manufactures the riblet sheet 1. Alternatively, the riblet structure RB may be formed by coating a light-curable resin on the riblet sheet 1 (specifically, the structural layer 12) on which the riblet structure RB is not formed yet, and irradiating the light-curable resin with curing light while pressing the mold against the coated light-curable resin. Note that at least one of a rotatable roller and a spindle may be used as the mold.

Alternatively, the riblet sheet 1 may be manufactured by any other method.

### (4) Modified Example

Next, a modified example of the riblet sheet 1 will be described.

### (4-1) First Modified Example

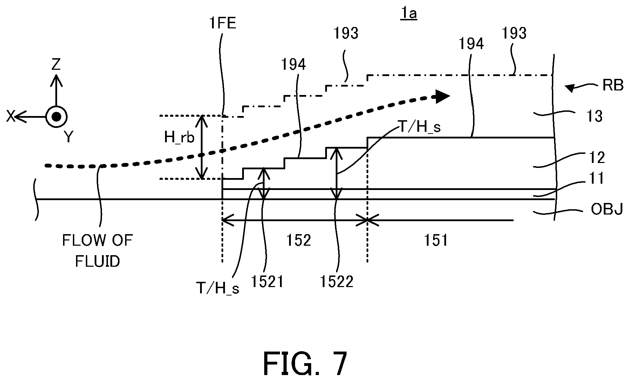

First, with reference to FIG. 7, the riblet sheet 1 in a first modified example will be described. FIG. 7 is a cross-sectional view that illustrates the riblet sheet 1 in the first modified example. Note that the riblet sheet 1 in the first modified example is referred to as a riblet sheet 1a in the below-described description.

As illustrated in FIG. 7(a), in the riblet sheet 1a in the first modified example, the thickness T of the second sheet part 152 is set so that the thickness T of the first part 1521 of the second sheet part 152 is thinner than the thickness T of the second part 1522 of the second sheet part 152, as with the riblet sheet 1 described above with reference to FIG. 6(a) to FIG. 6(b). The riblet sheet 1a in the first modified example is different from the above-described riblet sheet 1, in which the thickness T of the second sheet part 152 is thinner in a continuous manner as it is closer to the leading edge 1FE of the riblet sheet 1, in that the thickness T of the second sheet part 152 is thinner in a stepwise manner as it is closer to the leading edge 1FE of the riblet sheet 1. Other features of the riblet sheet 1a may be the same as other features of the riblet sheet 1.

As described above, the thickness T of the riblet sheet 1 may be considered to be equivalent to the height H_s of the riblet sheet 1 from the surface of the object OBJ in a state where the riblet sheet 1 is attached to the surface of the object OBJ,. In this case, a state in which "the thickness T of the second sheet part 152 is thinner in the stepwise manner as it is closer to the leading edge 1FE of the riblet sheet 1a" may be considered to be equivalent to a state in which "the height H_s of the second sheet part 152 is lower in a stepwise manner as it is closer to the leading edge 1FE of the riblet sheet 1a".

In a state where the thickness T of the second sheet part 152 is thinner in the stepwise manner (namely, the height H_s of the second sheet part 152 is lower in the stepwise manner), the boundary surface 194, which is a part of the front surface of the second sheet part 152, may include a stepwise surface in which a plurality of surfaces having different heights are formed in a stepwise manner. For example, the boundary surface 194 of the second sheet part 152 may include the stepwise surface in which a first surface positioned at a first height and a second surface positioned at a second height different from the first height are formed in a stepwise manner. In this case, the entire boundary surface 194 of the second sheet part 152 may be the stepwise surface. Alternatively, a part of the boundary surface 194 of the second sheet part 152 may be the stepwise surface and another part of the boundary surface 194 of the second sheet part 152 may not be the stepwise surface.

Even in the first modified example, the height H_rb of the convex structure 13 formed on the second sheet part 152 may be constant. In this case, since the boundary surface 194 of the second sheet part 152 includes the stepwise surface, the corner part 193 (namely, the ridge line) of the convex structure 13 may also form a step.

Thus, even in the first modified example, the thickness T of the second sheet part 152 is thinner as it is closer to the leading edge 1FE of the riblet sheet 1a. Therefore, even in a case where the riblet sheet 1a in the first modified example is used, an effect that is the same as the effect achievable by the above-described riblet sheet 1 is achievable.

### (4-2) Second Modified Example

Next, the riblet sheet 1 in the modified example will be described. Note that the riblet sheet 1 in the second modified example is referred to as a riblet sheet 1b in the below-described description. In the above-described riblet sheet 1, the boundary surface 194 of the second sheet part 152 is a planar surface. The riblet sheet 1b in the second modified example may be different from the above-described riblet sheet 1 in that the boundary surface 194 of the second sheet part 152 may include a curved surface. Other features of the riblet sheet 1b may be the same as other features of the riblet sheet 1.

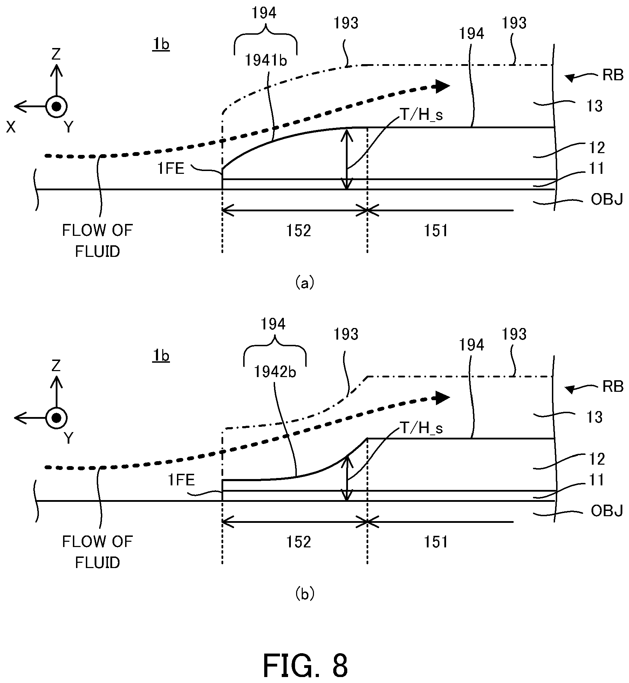

Next, with reference to FIG. 8(a) to FIG. 8(b), the riblet sheet 1b in the second modified example will be described. Each of FIG. 8(a) to FIG. 8(b) is a cross-sectional view that illustrates the riblet sheet 1b in the second modified example.

As illustrated in FIG. 8(a), the boundary surface 194 of the second sheet part 152 may include a curved surface 1941b that protrude upward. A curvature radius (a curvature) of the curved surface 1941b may be constant or may be variable. Note that FIG. 8(a) illustrates an example in which the entire boundary surface 194 of the second sheet part 152 is the curved surface 1941b. However, the boundary surface 194 of the second sheet part 152 may include a planar surface in addition to the curved surface 1941b. Namely, a part of the boundary surface 194 of the second sheet part 152 may be the curved surface 1941b and another part of the boundary surface 194 of the second sheet part 152 may be a planar surface.

In a case where the boundary surface 194 of the second sheet part 152 includes the curved surface 1941b that protrudes upward, the ridge line (namely, the corner part 193) of the convex structure 13 formed on the second sheet part 152 may also have a shape that protrudes upward, as illustrated in FIG. 8(a).

As illustrated in FIG. 8(b), the boundary surface 194 of the second sheet part 152 may include a curved surface 1942b that protrudes downward. A curvature radius (a curvature) of the curved surface 1942b may be constant or may be variable. Note that FIG. 8(b) illustrates an example in which the entire boundary surface 194 of the second sheet part 152 is the curved surface 1942b. However, the boundary surface 194 of the second sheet part 152 may include a planar surface in addition to the curved surface 1942b. Namely, a part of the boundary surface 194 of the second sheet part 152 may be the curved surface 1942b and another part of the boundary surface 194 of the second sheet part 152 may be a planar surface. Alternatively, the boundary surface 194 of the second sheet part 152 may include the curved surface 1941b that protrudes upward as illustrated in FIG. 8(a), in addition to the curved surface 1942b. Namely, a part of the boundary surface 194 of the second sheet part 152 may be the curved surface 1942b and another part of the boundary surface 194 of the second sheet part 152 may be the curved surface 1941b. Alternatively, the boundary surface 194 of the second sheet part 152 may include both the planar surface and the curved surface 1941b that protrudes upward illustrated in FIG. 8(a), in addition to the curved surface 1942b. Namely, a first part of the boundary surface 194 of the second sheet part 152 may be the curved surface 1942b, a second part of the boundary surface 194 of the second sheet part 152 may be the curved surface 1941b, and a third part of the boundary surface 194 of the second sheet part 152 may be the planar surface.

In a case where the boundary surface 194 of the second sheet part 152 includes the curved surface 1942b that protrudes downward, the ridge line (namely, the corner part 193) of the convex structure 13 formed on the second sheet part 152 may also have a shape that protrudes downward, as illustrated in FIG. 8(b).

Even in a case where the riblet sheet 1b in the second modified example in which the boundary surface 194 of the second sheet part 152 includes the curved surface as described above, an effect that is the same as the effect achievable by the above-described riblet sheet 1 is achievable.

Especially, in a case where the boundary surface 194 of the second sheet part 152 includes the curved surface 1941b that protrudes upward as illustrated in FIG. 8(a), the curved surface 1941b can properly adjust the flow of the fluid flowing on the front surface of the riblet sheet 1b. Furthermore, unnecessary substance (for example, a debris) adhering to the riblet sheet 1b is detachable from the riblet sheet 1b easily. For example, the unnecessary substance adhering to the curved surface 1941b of the riblet sheet 1b is detachable from the curved surface 1941b of the riblet sheet 1b easily. Moreover, since the curved surface 1941b protrudes upward, it is likely that the unnecessary substance detached from the curved surface 1941b falls toward the leading edge 1FE side of the riblet sheet 1b. It is possible to adjust the flow of the fluid flowing on the surface properly. Moreover, even in a case where an external pressure is applied to the riblet sheet 1b (for example, in a case where the external pressure is applied to the curved surface 1941b), it is possible to achieve an effect that the riblet sheet 1b is not peeled from the object OBJ easily.

Moreover, in a case where the boundary surface 194 of the second sheet part 152 includes the curved surface 1942b that protrudes downward as illustrated in FIG. 8(b), the curved surface 1942b can properly adjust the flow of the fluid flowing on the front surface of the riblet sheet 1b. Furthermore, unnecessary substance (for example, a debris) adhering to the riblet sheet 1b is detachable from the riblet sheet 1b easily. For example, the unnecessary substance adhering to the curved surface 1942b of the riblet sheet 1b is detachable from the curved surface 1942b of the riblet sheet 1b easily. Moreover, since the curved surface 1942b protrudes downward, there is a possibility that the unnecessary substance detached from the curved surface 1942b remains on the curved surface 1942b. As a result, the unnecessary substance remaining on the curved surface 1942b can be cleaned easily. Moreover, even in a case where an external pressure is applied to the riblet sheet 1b (for example, in a case where the external pressure is applied to the curved surface 1942b), it is possible to achieve an effect that the riblet sheet 1b is not peeled from the object OBJ easily.

Moreover, in a case where the boundary surface 194 of the second sheet part 152 includes both the curved surface 1941b that protrudes upward and the curved surface 1942b that protrudes downward, both the curved surfaces 1941b and 1942b can adjust the flow of the fluid flowing on the front surface of the riblet sheet 1b more properly. Furthermore, the unnecessary substance (for example, the debris) adhering to the riblet sheet 1b is detachable from the riblet sheet 1b easily. For example, the unnecessary substance adhering to at least one of the curved surfaces 1941b and 1942b of the riblet sheet 1b is detachable from at least one of the curved surfaces 1941b and 1942b of the riblet sheet 1b easily. Moreover, since the curved surface 1942b protrudes downward, there is a possibility that the unnecessary substance detached from at least one of the curved surfaces 1941b and 1942b remains on the curved surface 1942b. As a result, the unnecessary substance remaining on the curved surface 1942b can be cleaned easily. Moreover, even in a case where an external pressure is applied to the riblet sheet 1b (for example, in a case where the external pressure is applied to at least one of the curved surfaces 1941b and 1942b), it is possible to achieve an effect that the riblet sheet 1b is not peeled from the object OBJ easily.

In a case where the boundary surface 194 of the second sheet part 152 includes the curved surface, the boundary surface 194 of the second sheet part 152 may include the curved surface at an edge part of the second sheet part 152. Specifically, the boundary surface 194 of the second sheet part 152 may include the curved surface at the edge part of the second sheet part 152 along the extension direction of the convex structure 13 (namely, the flow direction of the fluid).

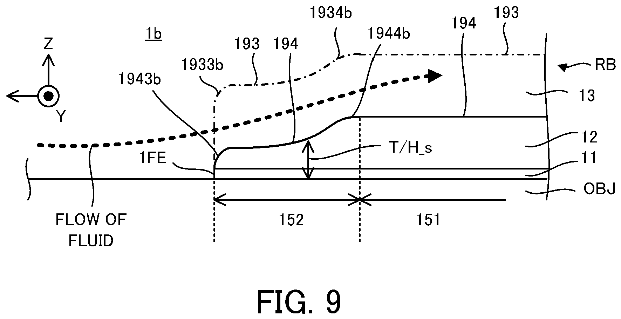

As a first example, as illustrated in FIG. 9 that is a cross-sectional view illustrating the riblet sheet 1b in the second modified example, the boundary surface 194 of the second sheet part 152 may include a curved surface 1943b at the leading edge 1FE of the riblet sheet 1b, which is one edge part (especially, the edge part at the upstream side along the flow of the fluid) of the second sheet part 152 along the flow direction of the fluid (namely, the extension direction of the convex structure 13). Namely, the boundary surface 194 of the second sheet part 152 may include the curved surface 1943b connected to the leading edge 1FE of the riblet sheet 1b. In this case, the edge part of boundary surface 194 of the second sheet part 152 is substantially rounded. In this case, it is less likely that the fluid blowing against the leading edge 1FE of the riblet sheet 1b generates the turbulence, compared to a case where the boundary surface 194 of the second sheet part 152 does not include the curved surface 1943b. Therefore, the object OBJ to which the riblet sheet 1b is attached can properly achieve the resistance reduction effect of the riblet sheet 1b.

Furthermore, in a case where the boundary surface 194 of the second sheet part 152 includes the curved surface 1943b, it is possible to achieve an effect that the riblet sheet 1b is not peeled from the object OBJ easily even in a case where the external pressure is applied to the riblet sheet 1b, compared to in a case where the boundary surface 194 of the second sheet part 152 does not include the curved surface 1943b. For example, even in a case where the fluid blows against the leading edge 1FE of the riblet sheet 1b, the fluid tends to flow along the curved surface 1943b and therefore the fluid does not enter a space between the object OBJ and the riblet sheet 1b easily. As a result, it is unlikely that the riblet sheet 1b is peeled from the object OBJ by the fluid that has entered the space between the object OBJ and the riblet sheet 1b.

In a case where the boundary surface 194 of the second sheet part 152 includes the curved surface 1943b, a ridge part 1933b, which is connected to one edge part (especially, the edge part at the upstream side along the flow of the fluid) of the second sheet part 152 along the flow direction of the fluid (namely, the extension direction of the convex structure 13), of the ridge line (namely, the corner part 193) of the convex structure 13 formed on the second sheet part 152 may have a curved shape, as illustrated in FIG. 9. Especially, the ridge part 1933b may have a curved shape that is the same as or similar to the shape of the curved surface 1943b.

As a second example, the boundary surface 194 of the second sheet part 152 may include a curved surface 1944b at other edge part (especially, the edge part at the downstream side along the flow of the fluid) of the second sheet part 152 along the flow direction of the fluid (namely, the extension direction of the convex structure 13). Namely, the boundary surface 194 of the second sheet part 152 may include the curved surface 1944b connected to a border between the first sheet part 151 and the second sheet part 152. In this case, the edge part of boundary surface 194 of the second sheet part 152 is substantially rounded. In this case, it is less likely that the fluid flowing on the border between the first sheet part 151 and the second sheet part 152 generates the turbulence, compared to a case where the boundary surface 194 of the second sheet part 152 does not include the curved surface 1944b. Therefore, the object OBJ to which the riblet sheet 1b is attached can properly achieve the resistance reduction effect of the riblet sheet 1b.

In a case where the boundary surface 194 of the second sheet part 152 includes the curved surface 1944b, a ridge part 1934b, which is connected to the other edge part (especially, the edge part at the downstream side along the flow of the fluid) of the second sheet part 152 along the flow direction of the fluid (namely, the extension direction of the convex structure 13), of the ridge line (namely, the corner part 193) of the convex structure 13 formed on the second sheet part 152 may have a curved shape, as illustrated in FIG. 9. Especially, the ridge part 1934b may have a curved shape that is the same as or similar to the shape of the curved surface 1944b.

A curvature radius of at least one of the curved surfaces 1943b and 1944b may be equal to or greater than a value obtained by multiplying the height H_rb of the convex structure 13 by a predetermined first magnification factor. The curvature radius of at least one of the curved surfaces 1943b and 1944b may be equal to or greater than a value obtained by multiplying the pitch P_rb of the convex structure 13 by a predetermined second magnification factor. The curvature radius of at least one of the curved surfaces 1943b and 1944b may be equal to or greater than a value obtained by multiplying the thickness T of the riblet sheet 1b by a predetermined third magnification factor. For example, the curvature radius of at least one of curved surfaces 1943b and 1944b may be equal to or greater than a value obtained by multiplying the thickness T of the first sheet part 151 of the riblet sheet 1b by the predetermined third magnification factor. For example, the curvature radius of at least one of the curved surfaces 1943b and 1944b may be equal to or greater than a value obtained by multiplying a maximum value, a minimum value, or an average value of the thickness T of the second sheet part 152 of the riblet sheet 1b by the predetermined third magnification factor. At least one of the first magnification factor, the second magnification factor, and the third magnification factor may be 1/10, may be 1/50, or may be 1/100.

A curvature radius of the ridge part 1933b of the convex structure 13 formed on the second sheet part 152 may be equal to the curvature radius of the curved surface 1943b. Alternatively, the curvature radius of the ridge part 1933b may be different from the curvature radius of the curved surface 1943b. For example, the curvature radius of the ridge part 1933b may be larger than the curvature radius of the curved surface 1943b. For example, the curvature radius of the ridge part 1933b may be smaller than the curvature radius of the curved surface 1943b.

A curvature radius of the ridge part 1934b of the convex structure 13 formed on the second sheet part 152 may be equal to the curvature radius of the curved surface 1944b. Alternatively, the curvature radius of the ridge part 1934b may be different from the curvature radius of the curved surface 1944b. For example, the curvature radius of the ridge part 1934b may be larger than the curvature radius of the curved surface 1944b. For example, the curvature radius of the ridge part 1934b may be smaller than the curvature radius of the curved surface 1944b.

The boundary surface 194 of the second sheet part 152 may include a curved surface in a state where the riblet sheet 1b is attached to the object OBJ. For example, the boundary surface 194 of the second sheet part 152 may be a planar surface before the riblet sheet 1b is attached to the object OBJ, and the boundary surface 194 of the second sheet part 152 may include the curved surface after the riblet sheet 1b is attached to the object OBJ. Alternatively, for example, the boundary surface 194 of the second sheet part 152 may include the curved surface before the riblet sheet 1b is attached to the object OBJ, and the boundary surface 194 of the second sheet part 152 may include the curved surface after the riblet sheet 1b is attached to the object OBJ.

Note that the boundary surface 194 of the second sheet part 152 may include a planar surface in a state where the riblet sheet 1b is attached to the object OBJ even in a case where the boundary surface 194 of the second sheet part 152 includes the planar surface. For example, the boundary surface 194 of the second sheet part 152 may include the planar surface before the riblet sheet 1b is attached to the object OBJ, and the boundary surface 194 of the second sheet part 152 may include the planar surface after the riblet sheet 1b is attached to the object OBJ. Alternatively, for example, the boundary surface 194 of the second sheet part 152 may include the curved surface before the riblet sheet 1b is attached to the object OBJ, and the boundary surface 194 of the second sheet part 152 may include the planar surface after the riblet sheet 1b is attached to the object OBJ.

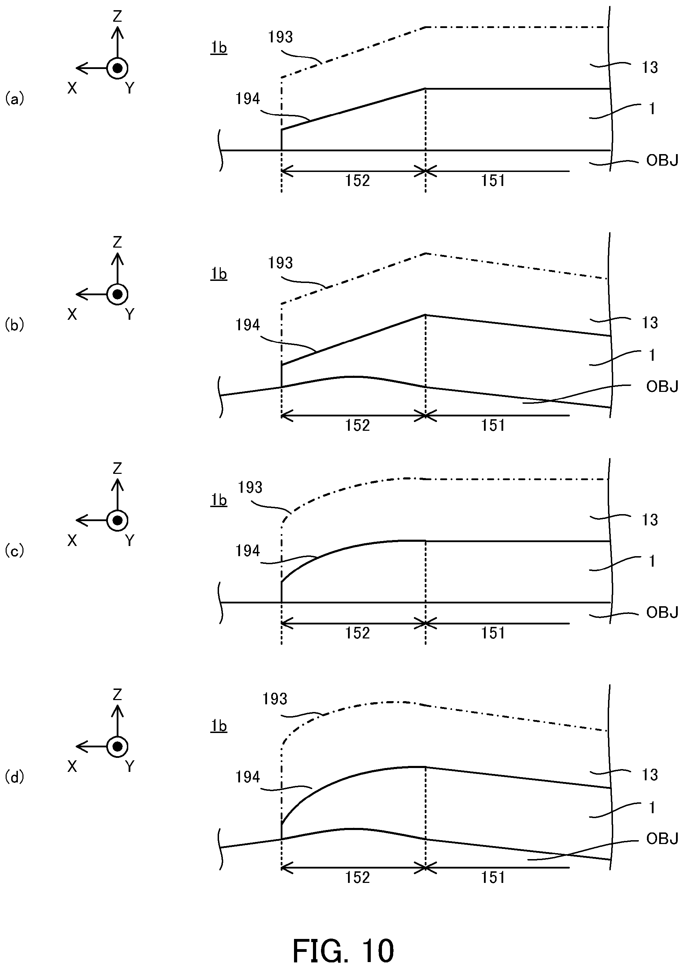

As a first example, the riblet sheet 1b may be manufactured so as to satisfy a condition that "(i) the boundary surface 194 of the second sheet part 152 includes the planar surface in a state where the riblet sheet 1b is attached to the surface of the object OBJ that is the planar surface as illustrated in FIG. 10(a), and (ii) the boundary surface 194 of the second sheet part 152 includes the planar surface in a state where the riblet sheet 1b is attached to the surface of the object OBJ that is the curved surface as illustrated in FIG. 10(b)". As a second example, the riblet sheet 1b may be manufactured so as to satisfy a condition that "(i) the boundary surface 194 of the second sheet part 152 includes the curved surface in a state where the riblet sheet 1b is attached to the surface of the object OBJ that is the planar surface as illustrated in FIG. 10(c), and (ii) the boundary surface 194 of the second sheet part 152 includes the planar surface in a state where the riblet sheet 1b is attached to the surface of the object OBJ that is the curved surface as illustrated in FIG. 10(b)". As a second example, the riblet sheet 1b may be manufactured so as to satisfy a condition that "(i) the boundary surface 194 of the second sheet part 152 includes the planar surface in a state where the riblet sheet 1b is attached to the surface of the object OBJ that is the planar surface as illustrated in FIG. 10(a), and (ii) the boundary surface 194 of the second sheet part 152 includes the curved surface in a state where the riblet sheet 1b is attached to the surface of the object OBJ that is the curved surface as illustrated in FIG. 10(d)". As a fourth example, the riblet sheet 1b may be manufactured so as to satisfy a condition that "(i) the boundary surface 194 of the second sheet part 152 includes the curved surface in a state where the riblet sheet 1b is attached to the surface of the object OBJ that is the planar surface as illustrated in FIG. 10(c), and (ii) the boundary surface 194 of the second sheet part 152 includes the curved surface in a state where the riblet sheet 1b is attached to the surface of the object OBJ that is the curved surface as illustrated in FIG. 10(d)".

Note that the riblet sheet 1a in the first modified example described above may include the feature specific to the riblet sheet 1b in the second modified example. The feature specific to the riblet sheet 1b in the second modified example may include the feature that the boundary surface 194 of the second sheet part 152 includes the curved surface.

### (4-3) Third Modified Example

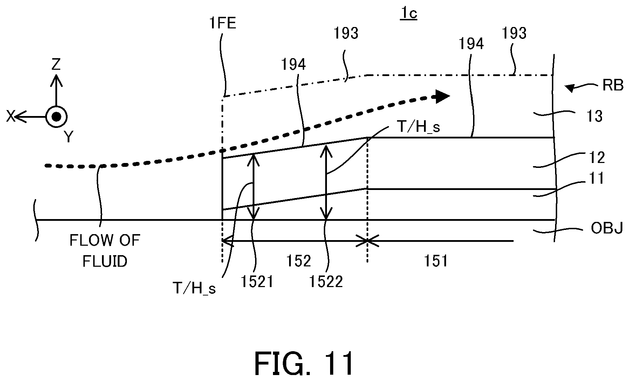

Next, with reference to FIG. 11, the riblet sheet 1 in a third modified example will be described. FIG. 11 is a cross-sectional view that illustrates the riblet sheet 1 in the third modified example. Note that the riblet sheet 1 in the third modified example is referred to as a riblet sheet 1c in the below-described description.

In the above-described riblet sheet 1, the thickness T of the second sheet part 152 varies due to a variation of the thickness T of the structural layer 12. The riblet sheet 1c in the third modified example may be different from the above-described riblet sheet 1 in that the thickness T of the second sheet part 152 may vary due to a variation of the thickness T of the adhesive layer 11 as illustrated in FIG. 11. Other features of the riblet sheet 1c may be the same as other features of the riblet sheet 1.

For example, as illustrated in FIG. 11, the thickness of the adhesive layer 11 included in the first part 1521 of the second sheet part 152 may be thinner than the thickness of the adhesive layer 11 included in the second part 1522 of the second sheet part 152 in order to make the thickness T of the first part 1521 of the second sheet part 152 be thinner than the thickness T of the second part 1522 of the second sheet part 152. The thickness T of the adhesive layer 11 of the second sheet part 152 may be thinner as it is closer to the leading edge 1FE of the riblet sheet 1 in order to make the thickness T of the second sheet part 152 be thinner as it is closer to the leading edge 1FE of the riblet sheet 1. In this case, the thickness of the structural layer 12 of the second sheet part 152 may be constant. However, the thickness of the structural layer 12 of the second sheet part 152 may not be constant. The thickness of the structural layer 12 of the second sheet part 152 may vary.

Even in a case where the riblet sheet 1c in the third modified example is used, an effect that is the same as the effect achievable by the above-described riblet sheet 1 is achievable.

Note that at least one of the riblet sheet 1a kin the first modified example to the riblet sheet 1b in the second modified example described above may include the feature specific to the riblet sheet 1c in the third modified example. The feature specific to the riblet sheet 1c in the third modified example may include the feature that the thickness T of the second sheet part 152 varies due to the variation of the thickness T of the adhesive layer 11.

### (4-4) Fourth Modified Example

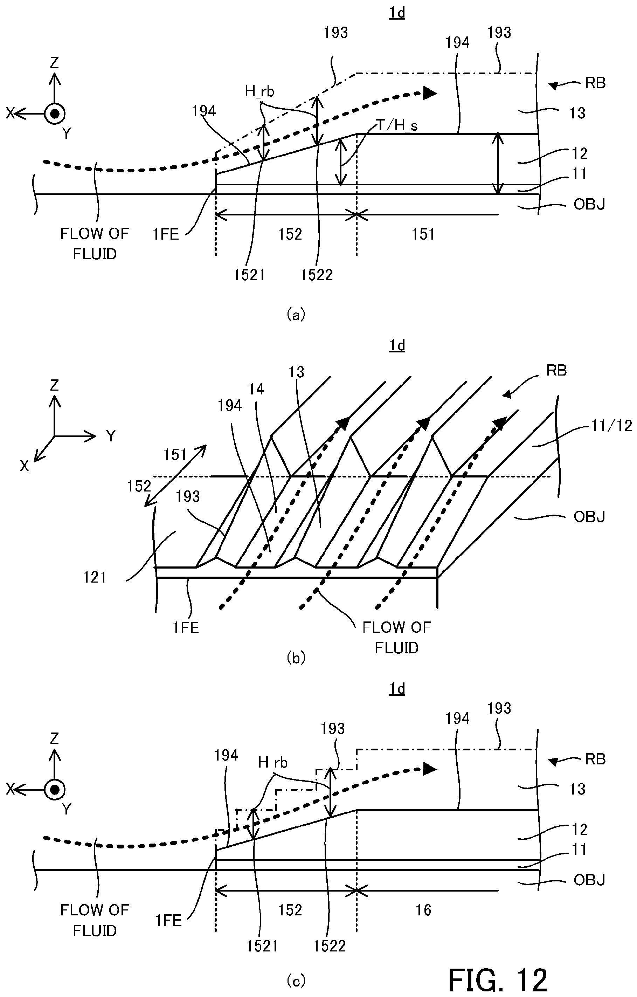

Next, with reference to FIG. 12(a) to FIG. 12(c), the riblet sheet 1 in a fourth modified example will be described. Each of FIG. 12(a) and FIG. 12(c) is a cross-sectional view that illustrates the riblet sheet 1 in the fourth modified example, and FIG. 12(b) is a perspective view that illustrates the riblet sheet 1 in the fourth modified example. Note that the riblet sheet 1 in the fourth modified example is referred to as a riblet sheet 1d in the below-described description.

As illustrated in FIG. 12(a) to FIG. 12(c), the riblet sheet 1d in the fourth modified example may be different from the above-described riblet sheet 1 in that the height H_rb of the convex structure 13 formed on the second sheet part 152 may vary in addition to or instead of the thickness T of the second sheet part 152 varying. Other features of the riblet sheet 1d may be the same as other features of the riblet sheet 1.

Specifically, the height H_rb of the convex structure 13 formed on the second sheet part 152 may vary so that the height H_rb of the convex structure 13 formed on the first part 1521 of the second sheet part 152 is lower than the height H_rb of the convex structure 13 formed on the second part 1522 of the second sheet part 152, as illustrated in FIG. 12(a) to FIG. 12(c). Namely, the height H_rb of the convex structure 13 formed on the second sheet part 152 may vary according to the distance between the convex structure 13 and the leading edge 1FE of the riblet sheet 1d.

As illustrated in FIG. 12(a) to FIG. 12(c), the height H_rb of the convex structure 13 formed on the second sheet part 152 may be lower as it is closer to the leading edge 1FE of the riblet sheet 1d. Namely, the height H_rb of the convex structure 13 formed on the second sheet part 152 may vary so that the height H_rb of the convex structure 13 formed on the second sheet part 152 is lower as it is closer to the leading edge 1FE of the riblet sheet 1d.

For example, as illustrated in FIG. 12(a) to FIG. 12(b), the height H_rb of the convex structure 13 formed on the second sheet part 152 may be lower in a continuous manner. Specifically, the height H_rb of the convex structure 13 formed on the second sheet part 152 may be lower in a continuous manner as it is closer to the leading edge 1FE of the riblet sheet 1d. In other words, the height H_rb of each part of the convex structure 13 formed on the second sheet part 152 may be lower in a continuous manner as each part of the convex structure 13 is closer to the leading edge 1FE of the riblet sheet 1d. In this case, the height H_rb of the convex structure 13 may be the lowest at the leading edge 1FE of the riblet sheet 1d, and the height H_rb of the convex structure 13 may be the highest at the boundary between the first sheet part 151 and the second sheet part 152.

For example, as illustrated in FIG. 12(c), the height H_rb of the convex structure 13 formed on the second sheet part 152 may be lower in a stepwise manner. Specifically, the height H_rb of the convex structure 13 formed on the second sheet part 152 may be lower in a stepwise manner as it is closer to the leading edge 1FE of the riblet sheet 1d. In other words, the height H_rb of each part of the convex structure 13 formed on the second sheet part 152 may be lower in a stepwise manner as each part of the convex structure 13 is closer to the leading edge 1FE of the riblet sheet 1d. In this case, the height H_rb of the convex structure 13 may be the lowest at the leading edge 1FE of the riblet sheet 1d, and the height H_rb of the convex structure 13 may be the highest at the boundary between the first sheet part 151 and the second sheet part 152.

Even in a case where the riblet sheet 1d in the fourth modified example is used, an effect that is the same as the effect achievable by the above-described riblet sheet 1 is achievable. Furthermore, in a case where the riblet sheet 1d in the fourth modified example is used, it is less likely that the leading edge 1FE of the riblet sheet 1d serves as the obstacle that prevents the flow of the fluid, compared to a case where the height H_rb of the convex structure 13 formed on the second sheet part 152 is constant. Specifically, it is less likely that the convex structure 13 formed on the second sheet part 152 serves as the obstacle that prevents the flow of the fluid at the leading edge 1FE of the riblet sheet 1d. As a result, it is less likely that the turbulence occurs at the leading edge 1FE of the riblet sheet 1d and / or near the leading edge 1FE. Therefore, the object OBJ to which the riblet sheet 1d is attached can properly achieve the resistance reduction effect of the riblet sheet 1d.

Furthermore, in the fourth modified example, an aspect ratio (here, a ratio of the height to the width) of the convex structure 13 formed on the second sheet part 152 is small, so a rigidity of the convex structure 13 increases. Therefore, it is possible to achieve an effect that the convex structure 13 is not damaged easily. Therefore, it is unlikely that the convex structure 13 is unintentionally damaged in attaching the riblet sheet 1d to the object OBJ. Furthermore, since the rigidity of the convex structure 13 increases, it is unlikely that the convex structure 13 vibrates (in other words, oscillates) due to the flow of the fluid. As a result, it is unlikely that the convex structure 13 generate noise. Namely, it is possible to achieve an effect of a noise reduction.

Note that FIG. 12(a) to FIG. 12(c) illustrate an example in which the thickness T of the second sheet part 152 varies and the height H_rb of the convex structure 13 formed on the second sheet part 152 varies. Specifically, FIG. 12(a) to FIG. 12(c) illustrate an example in which the thickness T of the second sheet part 152 is thinner as it is closer to the leading edge 1FE of the riblet sheet 1d and the height H_rb of the convex structure 13 formed on the second sheet part 152 is lower as it is closer to the leading edge 1FE of the riblet sheet 1d. However, the thickness T of the second sheet part 152 may be constant and the height H_rb of the convex structure 13 formed on the second sheet part 152 may vary. For example, the thickness T of the second sheet part 152 may be constant regardless of the distance to the leading edge 1FE of the riblet sheet 1d and the height H_rb of the convex structure 13 formed on the second sheet part 152 may be lower as it is closer to the leading edge 1FE of the riblet sheet 1.

Moreover, the height H_rb of the convex structure 13 formed on the second sheet part 152 may vary so that the height H_rb of the convex structure 13 formed on the first part 1521 of the second sheet part 152 is higher than the height H_rb of the convex structure 13 formed on the second part 1522 of the second sheet part 152. For example, the height H_rb of the convex structure 13 formed on the second sheet part 152 may be higher as it is closer to the leading edge 1FE of the riblet sheet 1d.

Moreover, at least one of the riblet sheet 1a in the first modified example to the riblet sheet 1c in the third modified example described above may include the feature specific to the riblet sheet 1d in the fourth modified example. The feature specific to the riblet sheet 1d in the fourth modified example may include the feature that the height H_rb of the convex structure 13 formed on the second sheet part 152 varies.

### (4-5) Fifth Modified Example

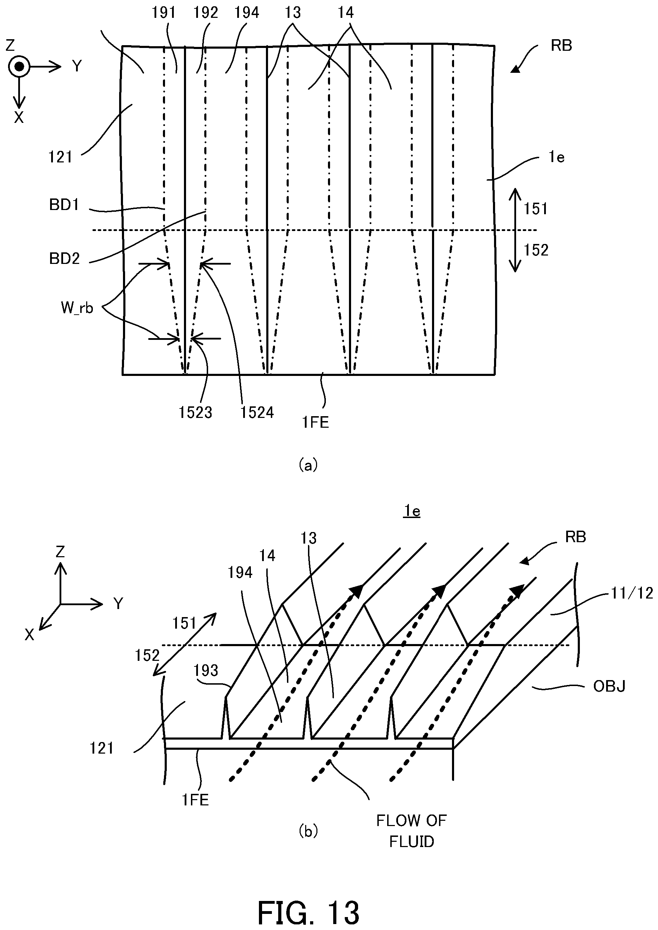

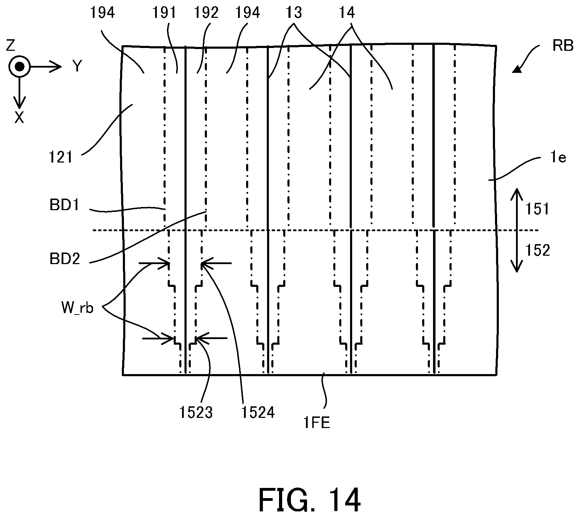

Next, with reference to FIG. 13(a) to FIG. 13(b) and FIG. 14, the riblet sheet 1 in a fifth modified example will be described. FIG. 13(a) is a cross-sectional view that illustrates the riblet sheet 1 in the fifth modified example. FIG. 13(b) is a perspective view that illustrates the riblet sheet 1 in the fifth modified example. FIG. 14 is a cross-sectional view that illustrates the riblet sheet 1 in the fifth modified example. Note that the riblet sheet 1 in the fifth modified example is referred to as a riblet sheet 1e in the below-described description.

As illustrated in FIG. 13(a) to FIG. 13(b) and FIG. 14, the riblet sheet 1e in the fifth modified example may be different from the above-described riblet sheet 1 in that a width W_rb of the convex structure 13 formed on the second sheet part 152 may vary in addition to or instead of the thickness T of the second sheet part 152 varying. Other features of the riblet sheet 1e may be the same as other features of the riblet sheet 1.

Note that the width W_rb of the convex structure 13 may mean a size (a length) of the convex structure 13 along the arrangement direction of the convex structures 13. For example, as illustrated in FIG. 13(a) and FIG. 14, the width W_rb of the convex structure 13 may mean the size (the length) of the convex structure 13 along the arrangement direction of the convex structure 13 in a plane including the boundary surface 194 of the second sheet part 152. For example, as illustrated in FIG. 13(a) and FIG. 14, the width W_rb of the convex structure 13 may mean a distance between a boundary BD1, which is between one side surface 191 of the convex structure 13 and the bottom surface of the groove structure 14 (namely, the boundary surface 194), and a boundary BD2, which is between the other side surface 192 of the convex structure 13 and the bottom surface of the groove structure 14 (namely, the boundary surface 194). The width W_rb of the convex structure 13 may mean the distance between the boundary BD1 and the boundary BD2 along the arrangement direction of the convex structure 13 (the Y-axis direction in the example illustrated in FIG. 13(a) to FIG. 13(b) and FIG. 14).

The width W_rb of the convex structure 13 formed on the second sheet part 152 may vary so that the width W_rb of the convex structure 13 formed on a first part 1523 of the second sheet part 152 is narrower than the width W_rb of the convex structure 13 formed on a second part 1524 of the second sheet part 152 as illustrated in FIG. 13(a) to FIG. 13(b) and FIG. 14. Namely, the width W_rb of the convex structure 13 formed on the second sheet part 152 may vary according to the distance between the convex structure 13 and the leading edge 1FE of the riblet sheet 1e.

As illustrated in FIG. 13(a) to FIG. 13(b) and FIG. 14, the width W_rb of the convex structure 13 formed on the second sheet part 152 may be narrower as it is closer to the leading edge 1FE of the riblet sheet 1e. Namely, the width W_rb of the convex structure 13 formed on the second sheet part 152 may vary so that the width W_rb of the convex structure 13 formed on the second sheet part 152 is narrower as it is closer to the leading edge 1FE of the riblet sheet 1e.

For example, as illustrated in FIG. 13(a) to FIG. 13(b), the width W_rb of the convex structure 13 formed on the second sheet part 152 may be narrower in a continuous manner. Specifically, the width W_rb of the convex structure 13 formed on the second sheet part 152 may be narrower in a continuous manner as it is closer to the leading edge 1FE of the riblet sheet 1e. In other words, the width W_rb of each part of the convex structure 13 formed on the second sheet part 152 may be narrower in a continuous manner as each part of the convex structure 13 is closer to the leading edge 1FE of the riblet sheet 1e. In this case, the width W_rb of the convex structure 13 may be the narrowest at the leading edge 1FE of the riblet sheet 1e, and the width W_rb of the convex structure 13 may be the widest at the boundary between the first sheet part 151 and the second sheet part 152.

For example, as illustrated in FIG. 14, the width W_rb of the convex structure 13 formed on the second sheet part 152 may be narrower in a stepwise manner. Specifically, the width W_rb of the convex structure 13 formed on the second sheet part 152 may be narrower in a stepwise manner as it is closer to the leading edge 1FE of the riblet sheet 1e. In other words, the width W_rb of each part of the convex structure 13 formed on the second sheet part 152 may be narrower in a stepwise manner as each part of the convex structure 13 is closer to the leading edge 1FE of the riblet sheet 1e. In this case, the width W_rb of the convex structure 13 may be the narrowest at the leading edge 1FE of the riblet sheet 1e, and the width W_rb of the convex structure 13 may be the widest at the boundary between the first sheet part 151 and the second sheet part 152.

Even in a case where the riblet sheet 1e in the fifth modified example is used, an effect that is the same as the effect achievable by the above-described riblet sheet 1 is achievable. Furthermore, in a case where the riblet sheet 1e in the fifth modified example is used, it is less likely that the leading edge 1FE of the riblet sheet 1d serves as the obstacle that prevents the flow of the fluid, compared to a case where the width W_rb of the convex structure 13 formed on the second sheet part 152 is constant. Specifically, it is less likely that the convex structure 13 formed on the second sheet part 152 serves as the obstacle that prevents the flow of the fluid at the leading edge 1FE of the riblet sheet 1d. As a result, it is less likely that the turbulence occurs at the leading edge 1FE of the riblet sheet 1e and / or near the leading edge 1FE. Therefore, the object OBJ to which the riblet sheet 1e is attached can properly achieve the resistance reduction effect of the riblet sheet 1e.

Note that the width W_rb of the convex structure 13 formed on the second sheet part 152 may vary so that the width W_rb of the convex structure 13 formed on the first part 1523 of the second sheet part 152 is wider than the width W_rb of the convex structure 13 formed on the second part 1524 of the second sheet part 152. For example, the width W_rb of the convex structure 13 formed on the second sheet part 152 may be wider as it is closer to the leading edge 1FE of the riblet sheet 1e.

Moreover, at least one of the riblet sheet 1a in the first modified example to the riblet sheet 1d in the fourth modified example described above may include the feature specific to the riblet sheet 1e in the fifth modified example. The feature specific to the riblet sheet 1e in the fifth modified example may include the feature that the width W_rb of the convex structure 13 formed on the second sheet part 152 varies.

### (4-6) Sixth Modified Example

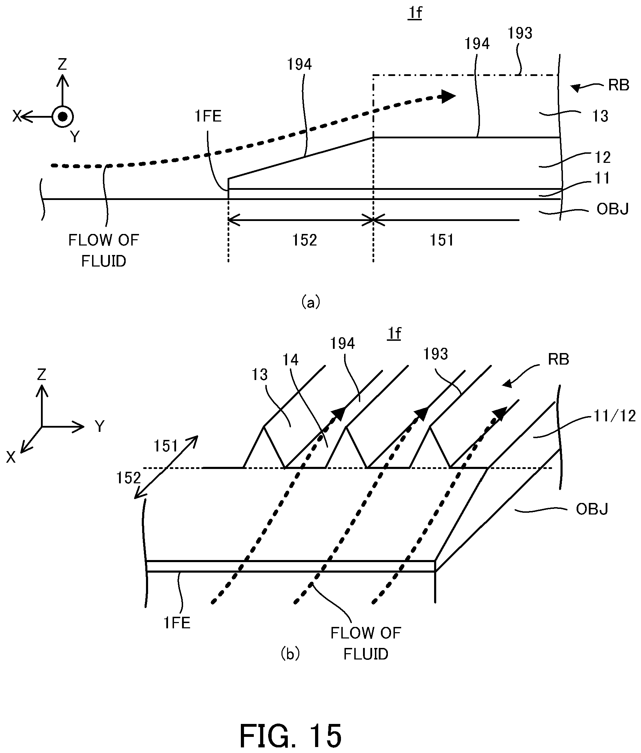

Next, with reference to FIG. 15(a) to FIG. 15(b), the riblet sheet 1 in a sixth modified example will be described. FIG. 15(a) is a cross-sectional view that illustrates the riblet sheet 1 in the sixth modified example. FIG. 15(b) is a perspective view that illustrates the riblet sheet 1 in the sixth modified example. Note that the riblet sheet 1 in the sixth modified example is referred to as a riblet sheet 1f in the below-described description.

As illustrated in FIG. 15(a) to FIG. 15(b), the riblet sheet 1f in the sixth modified example may be different from the above-described riblet sheet 1 in that the convex structure 13 may not be formed on the second sheet part 152. Other features of the riblet sheet 1f may be the same as the other features of the riblet sheet 1.

Even in a case where the riblet sheet 1f in the sixth modified example is used, an effect that is the same as the effect achievable by the above-described riblet sheet 1 is achievable.

### (4-6-1) Height H_rb Of Convex Structure 13 Formed On First Sheet Part 151

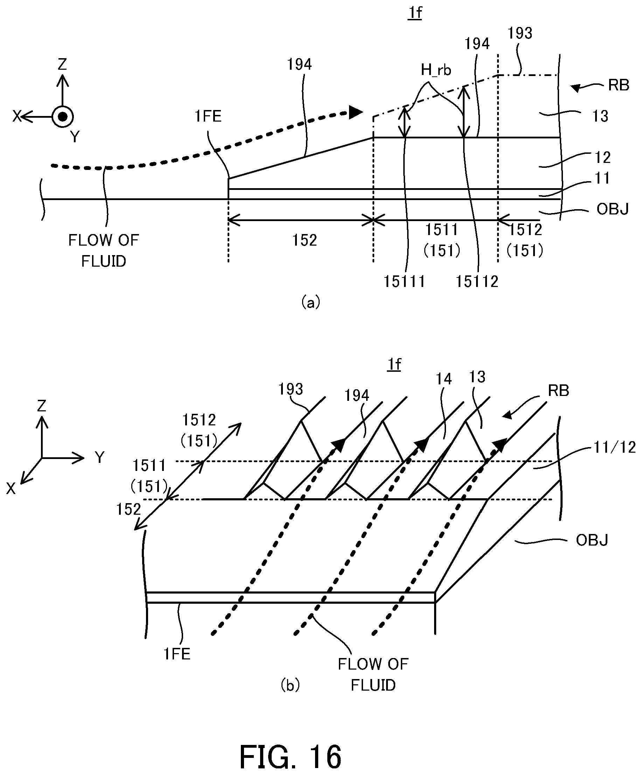

In the sixth modified example, as illustrated in FIG. 16(a) to FIG. 16(b), the height H_rb of the convex structure 13 formed on at least a part of the first sheet part 151 may vary. For example, the height H_rb of the convex structure 13 formed on an edge area 1511 of the first sheet part 151, which is positioned at a boundary between the first sheet part 151 and the second sheet part 152 and near the boundary, may vary. Namely, the height H_rb of the convex structure 13 formed on the edge area 1511 of the first sheet part 151, which is connected to the boundary between the first sheet part 151 and the second sheet part 152, may vary. On the other hand, the height H_rb of a part of the convex structure 13 formed on a non-edge area 1512 of the first sheet part 151, which is different from the edge area 1511, may be constant.

Note that the edge area 1511 and the non-edge area 1512 may be adjacent to each other along the extension direction of the convex structure 13. The edge area 1511 may be an area that is closer to the leading edge 1FE of the riblet sheet 1f than the non-edge area 1512 is along the extension direction of the convex structure 13. The non-edge area 1512 may be an area that is closer to the leading edge 1FE of the riblet sheet 1f than the edge area 1511 is along the extension direction of the convex structure 13.

A variation aspect of the height H_rb of the convex structure 13 formed on the edge area 1511 may be the same as a variation aspect of the height H_rb of the convex structure 13 formed on the second sheet part 152 described in the fourth modified example. Therefore, a detailed description of the variation aspect of the height H_rb of the convex structure 13 formed on the edge area 1511 is omitted in order to omit a redundant description, however, an overview thereof will be described below.

For example, as illustrated in FIG. 16(a) to FIG. 16(b), the height H_rb of the convex structure 13 formed on the edge area 1511 may vary so that the height H_rb of the convex structure 13 formed on a first part 15111 of the edge area 1511 is lower than the height H_rb of the convex structure 13 formed on a second part 15112 of the edge area 1511. The first part 15111 is positioned at a position that is closer to the leading edge 1FE than the second part 15112 is. Namely, the height H_rb of the convex structure 13 formed on the edge area 1511 may vary according to the distance between the convex structure 13 and the leading edge 1FE of the riblet sheet 1f.

As illustrated in FIG. 16(a) to FIG. 16(b), the height H_rb of the convex structure 13 formed on the edge area 1511 may be lower as it is closer to the leading edge 1FE of the riblet sheet 1f. Namely, the height H_rb of the convex structure 13 formed on the edge area 1511 may vary so that the height H_rb of the convex structure 13 formed on the edge area 1511 is lower as it is closer to the leading edge 1FE of the riblet sheet 1f.

For example, as illustrated in FIG. 16(a) to FIG. 16(b), the height H_rb of the convex structure 13 formed on the edge area 1511 may be lower in a continuous manner. Specifically, the height H_rb of the convex structure 13 formed on the edge area 1511 may be lower in a continuous manner as it is closer to the leading edge 1FE of the riblet sheet 1f. In other words, the height H_rb of each part of the convex structure 13 formed on the edge area 1511 may be lower in a continuous manner as each part of the convex structure 13 is closer to the leading edge 1FE of the riblet sheet 1f.

For example, the height H_rb of the convex structure 13 formed on the edge area 1511 may be lower in a stepwise manner. Specifically, the height H_rb of the convex structure 13 formed on the edge area 1511 may be lower in a stepwise manner as it is closer to the leading edge 1FE of the riblet sheet 1f. In other words, the height H_rb of each part of the convex structure 13 formed on the edge area 1511 may be lower in a stepwise manner as each part of the convex structure 13 is closer to the leading edge 1FE of the riblet sheet 1f.

In this case, it is less likely that the boundary between the first sheet part 151 and the second sheet part 152 serves as the obstacle that prevents the flow of the fluid, compared to a case where the height H_rb of the convex structure 13 formed on the edge area 1511 is constant. Specifically, it is less likely that the convex structure 13 formed on the first sheet part 151 (especially, the edge area 1511) serves as the obstacle that prevents the flow of the fluid at the boundary between the first sheet part 151 and the second sheet part 152. As a result, it is less likely that the turbulence occurs at the boundary between the first sheet part 151 on which the convex structure 13 is formed and the second sheet part 152 on which the convex structure 13 is not formed and / or near the boundary. Therefore, the object OBJ to which the riblet sheet 1f is attached can properly achieve the resistance reduction effect of the riblet sheet 1f.

Furthermore, in the sixth modified example, the aspect ratio (here, the ratio of the height to the width) of the convex structure 13 formed on the edge area 1511 is small, so the rigidity of the convex structure 13 increases. Therefore, it is possible to achieve an effect that the convex structure 13 is not damaged easily. Therefore, it is unlikely that the convex structure 13 is unintentionally damaged in attaching the riblet sheet 1f to the object OBJ. Furthermore, since the rigidity of the convex structure 13 increases, it is unlikely that the convex structure 13 vibrates (in other words, oscillates) due to the flow of the fluid. As a result, it is unlikely that the convex structure 13 generate the noise. Namely, it is possible to achieve the effect of the noise reduction. Furthermore, the effect that the riblet sheet 1 is not easily peeled from the object OBJ even in a case where the external pressure is applied to the riblet sheet 1 is achievable. For example, the riblet sheet 1 is not easily peeled from the object OBJ even in a case where the fluid blows against the boundary between the first sheet part 151 and the second sheet part 152.

However, the height H_rb of the convex structure 13 formed on the edge area 1511 may vary so that the height H_rb of the convex structure 13 formed on the first part 15111 of the edge area 1511 is higher than the height H_rb of the convex structure 13 formed in the second part 15112 of the edge area 1511. For example, the height H_rb of the convex structure 13 formed on the edge area 1511 may be higher as it is closer to the leading edge 1FE of the riblet sheet 1f. Alternatively, the height H_rb of the convex structure 13 formed on the first sheet part 151 may not vary. The height H_rb of the convex structure 13 formed on the first sheet part 151 may be constant.

### (4-6-2) Width W_rb Of Convex Structure 13 Formed On First Sheet Part 151

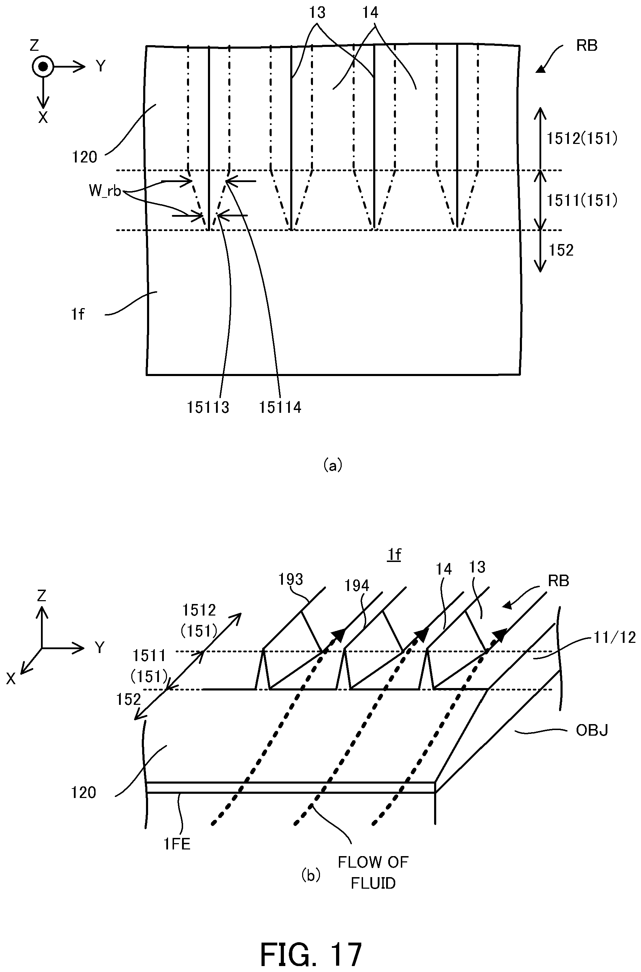

In the sixth modified example, as illustrated in FIG. 17(a) to FIG. 17(b), the width W_rb of the convex structure 13 formed on at least a part of the first sheet part 151 may vary, in addition to or instead of the height H_rb of the convex structure 13 formed on at least a part of the first sheet part 151 varying. For example, the width W_rb of the convex structure 13 formed on the edge area 1511 of the first sheet part 151 may vary. On the other hand, the width W_rb of a part of the convex structure 13 formed on the non-edge area 1512 of the first sheet part 151 may be constant.

A variation aspect of the width W_rb of the convex structure 13 formed on the edge area 1511 may be the same as a variation aspect of the width W_rb of the convex structure 13 formed on the second sheet part 152 described in the fifth modified example. Therefore, a detailed description of the variation aspect of the width W_rb of the convex structure 13 formed on the edge area 1511 is omitted in order to omit a redundant description, however, an overview thereof will be described below.

For example, as illustrated in FIG. 17(a) to FIG. 17(b), the width W_rb of the convex structure 13 formed on the edge area 1511 may vary so that the width W_rb of the convex structure 13 formed on a first part 15113 of the edge area 1511 is narrower than the width W_rb of the convex structure 13 formed on a second part 15114 of the edge area 1511. The first part 15113 is positioned at a position that is closer to the leading edge 1FE than the second part 15114 is. Namely, the width W_rb of the convex structure 13 formed on the edge area 1511 may vary according to the distance between the convex structure 13 and the leading edge 1FE of the riblet sheet 1f.

As illustrated in FIG. 17(a) to FIG. 17(b), the width W_rb of the convex structure 13 formed on the edge area 1511 may be narrower as it is closer to the leading edge 1FE of the riblet sheet 1f. Namely, the width W_rb of the convex structure 13 formed on the edge area 1511 may vary so that the width W_rb of the convex structure 13 formed on the edge area 1511 is narrower as it is closer to the leading edge 1FE of the riblet sheet 1f.

For example, as illustrated in FIG. 17(a) to FIG. 17(b), the width W_rb of the convex structure 13 formed on the edge area 1511 may be narrower in a continuous manner. Specifically, the width W_rb of the convex structure 13 formed on the edge area 1511 may be narrower in a continuous manner as it is closer to the leading edge 1FE of the riblet sheet 1f. In other words, the width W_rb of each part of the convex structure 13 formed on the edge area 1511 may be narrower in a continuous manner as each part of the convex structure 13 is closer to the leading edge 1FE of the riblet sheet 1f.

For example, the width W_rb of the convex structure 13 formed on the edge area 1511 may be narrower in a stepwise manner. Specifically, the width W_rb of the convex structure 13 formed on the edge area 1511 may be narrower in a stepwise manner as it is closer to the leading edge 1FE of the riblet sheet 1f. In other words, the width W_rb of each part of the convex structure 13 formed on the edge area 1511 may be narrower in a stepwise manner as each part of the convex structure 13 is closer to the leading edge 1FE of the riblet sheet 1f.

In this case, it is less likely that the boundary between the first sheet part 151 and the second sheet part 152 serves as the obstacle that prevents the flow of the fluid, compared to a case where the width W_rb of the convex structure 13 formed on the edge area 1511 is constant. Specifically, it is less likely that the convex structure 13 formed on the first sheet part 151 (especially, the edge area 1511) serves as the obstacle that prevents the flow of the fluid at the boundary between the first sheet part 151 and the second sheet part 152. As a result, it is less likely that the turbulence occurs at the boundary between the first sheet part 151 on which the convex structure 13 is formed and the second sheet part 152 on which the convex structure 13 is not formed and / or near the boundary. Therefore, the object OBJ to which the riblet sheet 1f is attached can properly achieve the resistance reduction effect of the riblet sheet 1f.

However, the width W_rb of the convex structure 13 formed on the edge area 1511 may vary so that the width W_rb of the convex structure 13 formed on the first part 15113 of the edge area 1511 is wider than the width W_rb of the convex structure 13 formed in the second part 15114 of the edge area 1511. For example, the width W_rb of the convex structure 13 formed on the edge area 1511 may be wider as it is closer to the leading edge 1FE of the riblet sheet 1f. Alternatively, the width W_rb of the convex structure 13 formed on the first sheet part 151 may not vary. The width W_rb of the convex structure 13 formed on the first sheet part 151 may be constant.

Note that at least one of the riblet sheet 1a in the first modified example to the riblet sheet 1e in the fifth modified example described above may include the feature specific to the riblet sheet 1f in the sixth modified example. The feature specific to the riblet sheet 1f in the sixth modified example may include at least one of the feature that the convex structure 13 is not formed on the second sheet part 152, that the height H_rb of the convex structure 13 formed on at least a part of the first sheet part 151 varies, and the feature that the width W_rb of the convex structure 13 formed on at least a part of the first sheet part 151 varies.

### (4-7) Seventh Modified Example

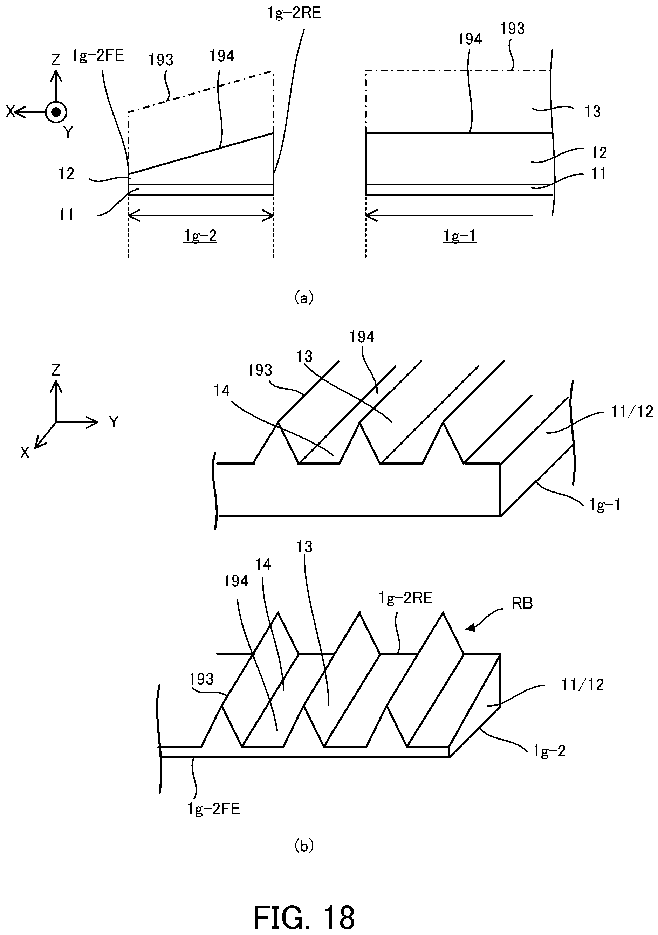

In the above description, the first sheet part 151, whose thickness T may not vary, is physically connected to the second sheet part 152, whose thickness T varies. On the other hand, in a seventh modified example, the first sheet part 151, whose thickness T may not vary, may be physically separated from the second sheet part 152, whose thickness T varies. Therefore, in the seventh modification, as illustrated in FIG. 18(a) and FIG. 18(b), a riblet sheet 1g-1 having a feature that is the same as the feature of the first sheet part 151 and a riblet sheet 1g-2 having a feature that is the same as the feature of the second sheet part 152 are used as the riblet sheets 1. Namely, in the seventh modified example, the riblet sheet 1 may be physically divided into the riblet sheet 1g-1 having the feature that is the same as the feature of the first sheet part 151 and the riblet sheet 1g-2 having the feature that is the same as the feature of the second sheet part 152.

In this case, the riblet sheets 1g-1 and 1g-2 may be attached to the object OBJ so that the riblet sheets 1g-1 and 1g-2 are arranged along the flow direction of the fluid on the surface of the object OBJ. Specifically, the riblet sheet 1g-2 includes a leading edge 1g-2FE that corresponds to the leading edge 1FE of the above-described riblet sheet 1, and a tail edge 1g-2RE that is an edge opposite to the leading edge 1g-2FE. The leading edge 1g-2FE and the tail edge 1g-2RE are two edges of the riblet sheet 1g-2 along the extension direction of the convex structure 13 formed on the riblet sheet 1g-2. In this case, the riblet sheets 1g-1 and 1g-2 may be attached to the object OBJ so that the tail edge 1g-2RE of the riblet sheet 1g-2 is connected to the riblet sheet 1g-1. In other words, the riblet sheets 1g-1 and 1g-2 may be attached to the object OBJ so that the tail edge 1g-2RE of the riblet sheet 1g-2 is adjacent to the riblet sheet 1g-1. As one example, the riblet sheets 1g-1 and 1g-2 may be attached to the object OBJ so that the tail edge 1g-2RE of the riblet sheet 1g-2 is adjacent to the riblet sheet 1g-1 without a gap.

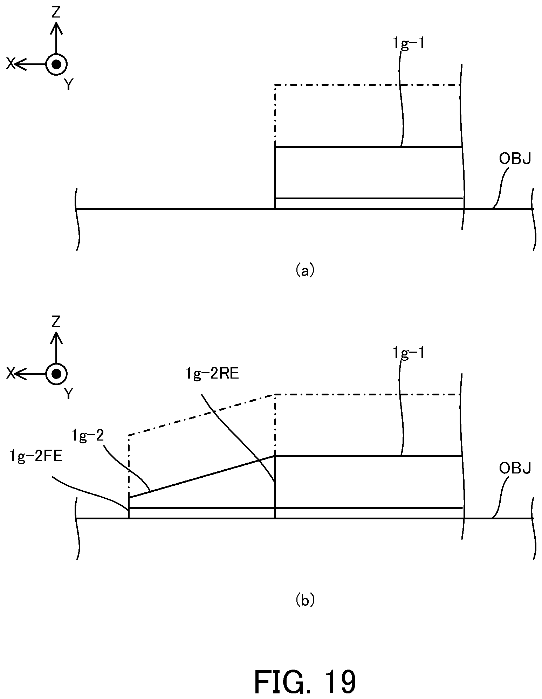

Specifically, as illustrated in FIG. 19(a), the riblet sheet 1g-1 may be attached to a first surface part of the surface of the object OBJ so that the convex structure 13 formed on the riblet sheet 1g-1 extends along the flow direction of the fluid on the surface of the object OBJ. Furthermore, as illustrated in FIG. 19(b), the riblet sheet 1g-2 may be attached to a second surface part, which is adjacent to the first surface part along the flow direction of the fluid (namely, the extension direction of the convex structure 13), of the surface of the object OBJ so that the convex structure 13 formed on the riblet sheet 1g-2 extends along the flow direction of the fluid on the surface of the object OBJ and the tail edge 1g-2RE of the riblet sheet 1g-2 is connected to the riblet sheet 1g-1. In this case, the riblet sheet 1g-2 may be attached to the object OBJ after the riblet sheet 1g-1 is attached to the object OBJ. Alternatively, the riblet sheet 1g-1 may be attached to the object OBJ after the riblet sheet 1g-2 is attached to the object OBJ. Alternatively, the riblet sheets 1g-1 and 1g-2 may be attached to the object OBJ simultaneously.

As a result, the object OBJ to which the riblet sheets 1g-1 and 1g-2 are attached is substantially equivalent to the object OBJ to which the riblet sheet 1 is attached. Therefore, even in a case where the riblet sheets 1g-1 and 1g-2 in the seventh modified example is used, an effect that is the same as the effect achievable by the above-described riblet sheet 1 is achievable.

Note that a mark, which is usable to attach the riblet sheets 1g-1 and 1g-2 to the object OBJ, may be formed on at least one of the riblet sheets 1g-1 and 1g-2. For example, a mark, which indicates that a first part is a part connected to the riblet sheet 1g-2, may be formed on the first part of the riblet sheet 1g-1 connected to the riblet sheet 1g-2. For example, a mark, which indicates that a second part is a part connected to the riblet sheet 1g-1, may be formed on the second part of the riblet sheet 1g-2 connected to the riblet sheet 1g-1.

The mark formed on at least one of the riblet sheets 1g-1 and 1g-2 may be used to adjust a position of the riblet sheets 1g-1 and 1g-2 in attaching the riblet sheets 1g-1 and 1g-2 to the object OBJ. For example, the riblet sheets 1g-1 and 1g-2 may be attached to the object OBJ so that the mark formed on the riblet sheet 1g-1 is adjacent to the mark formed on the riblet sheet 1g-2. In this case, it is possible to adjust the position of the riblet sheets 1g-1 and 1g-2 easily.

A shape of at least one of the riblet sheets 1g-1 and 1g-2 may be set to a shape that allows the position of the riblet sheets 1g-1 and 1g-2 to be adjusted in attaching the riblet sheets 1g-1 and 1g-2 to the object OBJ. For example, a first structure, which protrudes toward a direction along one of the riblet sheets 1g-1 and 1g-2, may be formed on one of the riblet sheets 1g-1 and 1g-2, protruding in a direction along one of the riblet sheets 1g-1 and 1g-2, and a second structure, into which the first structure is inserted, may be formed on the other one of the riblet sheets 1g-1 and 1g-2. In this case, the riblet sheets 1g-1 and 1g-2 may be attached to the object OBJ so that the first structure formed on one of the riblet sheets 1g-1 and 1g-2 is inserted into the second structure formed on the other one of the riblet sheets 1g-1 and 1g-2. As a result, it is possible to adjust the position of the riblet sheets 1g-1 and 1g-2 easily.

The riblet sheet 1g-1, which has the feature that is the same as the feature of the first sheet part 151, may be further physically divided into a plurality of riblet sheets. The riblet sheet 1g-2, which has the feature that is the same as the feature of the second sheet part 152, may be further physically divided into a plurality of riblet sheets.

Moreover, the thickness of the adhesive layer 11 may be gradually increase from an upstream side (the +X direction side) to a downstream side (the -X direction side, the riblet sheet 1g-1 side), instead of the riblet sheet 1g-2. In other words, the inclined adhesive layer 11 may be formed at the leading edge of the riblet sheet 1g-1. This adhesive layer 11 may serve as an edge sealer that reduces the possibility of the riblet sheet 1g-1 being peeled from the object OBJ. Note that the adhesive layer 11 whose thickness varies gradually (continuously or progressively) may be referred to as the second sheet part 152.

At least one of the riblet sheet 1a in the first modified example to the riblet sheet 1f in the sixth modified example described above may include the feature specific to the riblet sheets 1g-1 and 1g-2 in the seventh modified example. The feature specific to the riblet sheet s 1g-1 and 1g-2 in the seventh modified example may include the feature that the first sheet part 151 and the second sheet part 152 are physically divided into the separated sheets.

### (4-8) Eighth Modified Example

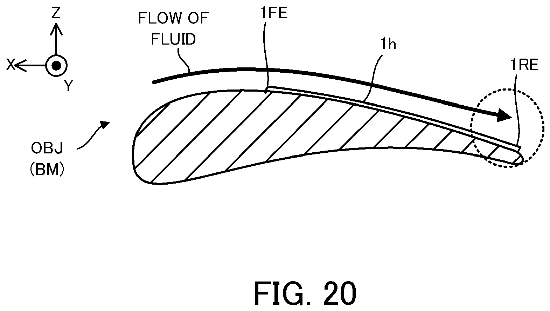

In the above-described description, the riblet sheet 1 includes the second sheet part 152, which includes the leading edge 1FE of the riblet sheet 1, and the first sheet part 151, which is adjacent to the second sheet part 152, in order to reduce the possibility of the deterioration of the resistance reduction effect at the leading edge 1FE of the riblet sheet 1, which is the edge of the riblet sheet 1 at the upstream side along the flow of the fluid. Namely, the riblet sheet 1 includes the first sheet part 151 and the second sheet part 152 at the leading edge 1FE side of the riblet sheet 1. In an eighth modified example, as illustrated in FIG. 20 that is a cross-sectional view illustrating the riblet sheet 1 attached to the blade member BM of the windmill WM that is one example of one object OBJ, the riblet sheet 1 may have a structure, which is the same as the structure including the first sheet part 151 and the second sheet part 152, even at a tail edge 1RE that is the edge of the riblet sheet 1 at the downstream side.

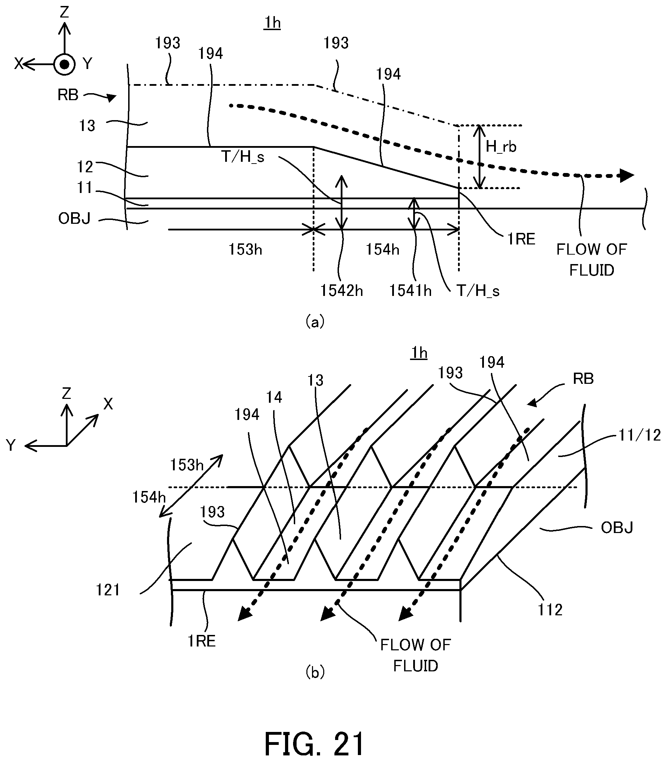

Next, with reference to FIG. 21(a) to FIG. 21(b), the riblet sheet 1 in the eighth modified example will be described. FIG. 21(a) is a cross-sectional view that illustrates the riblet sheet 1 attached to the blade member BM of the windmill WM, which is one example of the object OBJ. FIG. 21(b) is a cross-sectional view that illustrates the riblet sheet 1 in the eighth modified example. Note that the riblet sheet 1 in the eighth modified example is referred to as a riblet sheet 1h in the below-described description.

As illustrated in FIG. 21(a) and FIG. 21(b), the riblet sheet 1h includes a third sheet part 153h and a fourth sheet part 154h. In this case, in a case where the riblet sheet 1h is attached to the object OBJ, the third sheet part 153h of the riblet sheet 1h is attached to a third surface part of the surface of the object OBJ, and the fourth sheet part 154h of the riblet sheet 1h is attached to a fourth surface part, which is different from the third surface part, of the surface of the object OBJ.

Note that features of the third sheet part 153h and the fourth sheet part 154h, which are positioned on the tail edge 1RE side of the riblet sheet 1h, may be the same as the features of the first sheet part 151 and the second sheet part 152, which are positioned on the leading edge 1FE side of the riblet sheet 1, respectively. Specifically, a description related to the first sheet part 151 and the second sheet part 152 described above may be used as a description related to the third sheet part 153h and the fourth sheet part 154h by replacing terms "riblet sheet 1", "leading edge 1FE", "first sheet part 151", and "second sheet part 152" with terms "riblet sheet 1h", "tail edge 1RE", "third sheet part 153h", and "fourth sheet part 154h", respectively. Therefore, a detailed description related to the third sheet part 153h and the fourth sheet part 154h is omitted.

Note that the third sheet part 153h may be a sheet part that is the same as the first sheet part 151. In this case, the riblet sheet 1h may include the second sheet part 152, the first sheet part 151 (the third sheet part 153h), and the fourth sheet part 154h in this order from the leading edge 1FE to the tail edge 1RE of the riblet sheet 1h. Alternatively, the third sheet part 153h may be a sheet part that is different from the first sheet part 151. In this case, the riblet sheet 1h may include the second sheet part 152, the first sheet part 151, the third sheet part 153h, and the fourth sheet part 154h in this order from the leading edge 1FE to the tail edge 1RE of the riblet sheet 1h.

Especially in the eighth modified example, as illustrated in FIG. 21(a), the thickness T of the riblet sheet 1h may vary. Especially, the thickness T of the fourth sheet part 154h, which includes the tail edge 1RE of the riblet sheet 1h, may vary. Specifically, the thickness T of the fourth sheet part 154h may vary so that the thickness T of a first part 1541h of the fourth sheet part 154h is thinner than the thickness T of a second part 1542h of the fourth sheet part 154h, as illustrated in FIG. 21(a) and FIG. 21(b). In an example illustrated in FIG. 21(a) to FIG. 21(b), the thickness T of the fourth sheet part 154h may be thinner as it is closer to the tail edge 1RE of the riblet sheet 1h. Namely, the thickness T of the fourth sheet part 154h may vary so that the thickness T of the fourth sheet part 154h is thinner as it is closer to the tail edge 1RE of the riblet sheet 1h. Namely, the thickness T of each part of the fourth sheet part 154h may vary according to a distance between each part of the fourth sheet part 154h and the tail edge 1RE of the riblet sheet 1h.

A variation aspect of the thickness T of the fourth sheet part 154h based on the distance from the tail edge 1RE of the riblet sheet 1h may be considered to be the same as the above-described variation aspect of the thickness T of the second sheet part 152 based on the distance from the leading edge 1FE of the riblet sheet 1. Therefore, the description related to the variation aspect of the thickness T of the second sheet part 152 based on the distance from the leading edge 1FE of the riblet sheet 1 described above may be used as a description related to the variation aspect of the thickness T of the fourth sheet part 154h based on the distance from the tail edge 1RE of the riblet sheet 1 by replacing terms "riblet sheet 1", "leading edge 1FE," "first sheet part 151," "second sheet part 152," "first part 1521," and "second part 1522" with terms "riblet sheet 1h," "tail edge 1RE," "third sheet part 153h," "fourth sheet part 154h," "first part 1541h," and "second part 1542h", respectively. Therefore, the description related to the variation aspect of the thickness T of the fourth sheet part 154h based on the distance from the tail edge 1RE of the riblet sheet 1 is omitted in order to omit a redundant description.

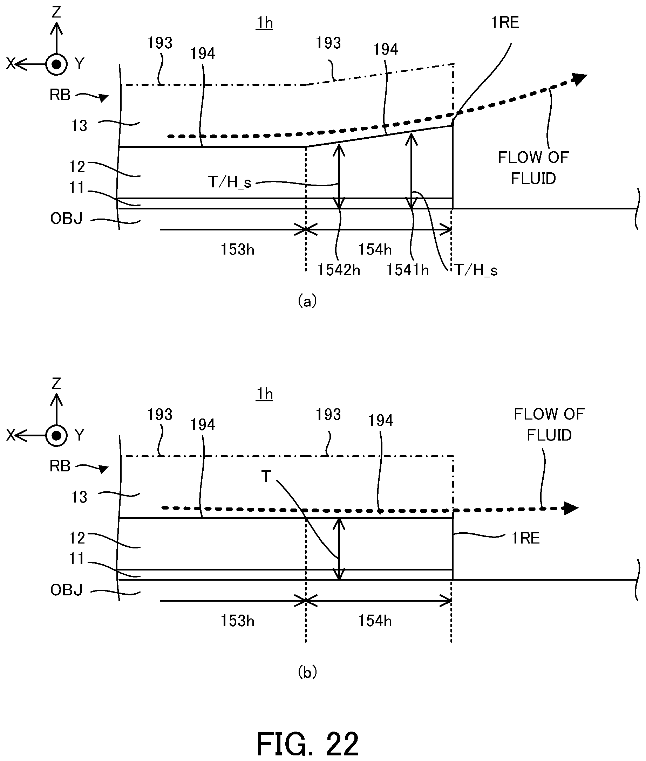

Alternatively, the thickness T of the fourth sheet part 154h may vary so that the thickness T of the first part 1541h of the fourth sheet part 154h is thicker than the thickness T of the second part 1542h of the fourth sheet part 154h, as illustrated in FIG. 22(a). Alternatively, as illustrated in FIG. 22(b), the thickness T of the fourth sheet part 154h may be constant.

Note that the features of the first sheet part 151 and the second sheet part 152 described in at least one of the first modified example to the seventh modified example described above may be applied to the third sheet part 153h and the fourth sheet part 154h, respectively. Specifically, the description related to the first sheet part 151 and the second sheet part 152 in at least one of the first modified example to the seventh modified example described above may be used as a description related to a modified example of the third sheet part 153h and the fourth sheet part 154h (namely, a modified example of the riblet sheet 1h) by replacing terms "riblet sheets 1a to 1g-1 and 1g-2", "leading edge 1FE", "first sheet part 151", "second sheet part 152", "first part 1521", "second part 1522", "first part 1523", "second part 1524", "edge area 1511", "non-edge area 1512", "first part 15111", "second part 15112", "first part 15113", "second part 15114", "leading edge 1g-2FE", and "tail edge 1g-2RE" with terms "riblet sheet 1h", "tail edge 1RE", "third sheet part 153h", "fourth sheet part 154h", "first part 1541h", "second part 1542h", "first part 1 1543h", "second part 1544h", "edge area 1531h", "non-edge area 1532h", "first part 15311h", "second part 15312h", "first part 15313h", "second part 15314h", "tail edge 1h-2RE," and "leading edge 1h-2FE", respectively. Therefore, the description related to the modified example of the third sheet part 153h and the fourth sheet part 154h (namely, the modified example of the riblet sheet 1h) is omitted in order to omit a redundant description.

Thus, in the eighth modified example, the thickness T of the fourth sheet part 154h is thinner as it is closer to the tail edge 1RE of the riblet sheet 1h. Therefore, it is unlikely that the turbulence occurs at the tail edge 1RE of the riblet sheet 1 and / or near the tail edge 1RE. Therefore, it is unlikely that the resistance of the surface of the object OBJ, to which the riblet sheet 1 is attached, to the fluid is high. Namely, the riblet sheet 1h can properly achieve the resistance reduction effect. Therefore, the object OBJ to which the riblet sheet 1h is attached can properly achieve the resistance reduction effect of the riblet sheet 1h.

Note that the effect that the riblet sheet 1 is not easily peeled from the object OBJ even in a case where the external pressure is applied to the riblet sheet 1 is achievable in the eighth modified example, because the thickness T of the fourth sheet part 154h is thinner as it is closer to the tail edge 1RE of the riblet sheet 1h (namely, the boundary surface 194 of the fourth sheet part 154h is an inclined surface). For example, the riblet sheet 1h is not easily peeled from the object OBJ even in a case where the fluid blows against the tail edge 1RE of the riblet sheet 1h.

Note that the height H_rb of the convex structure 13 formed on the fourth sheet part 154h may vary even in the eighth modified example, as with a case where the height H_rb of the convex structure 13 formed on the second sheet part 152 varies in the fourth modified example. Note that a variation aspect of the height H_rb of the convex structure 13 formed on the fourth sheet part 154h in the eighth modified example may be the same as the variation aspect of the height H_rb of the convex structure 13 formed on the second sheet part 152 in the fourth modified example described above. Therefore, the description related to the variation aspect of the height H_rb of the convex structure 13 formed on the second sheet part 152 in the fourth modified example described above may be used as a description related to the variation aspect of the height H_rb of the convex structure 13 formed on the fourth sheet part 154h by replacing terms "riblet sheet 1d", "leading edge 1FE", "first sheet part 151", "second sheet part 152", "first part 1521", and "second part 1522" with terms "riblet sheet 1h", "tail edge 1RE", "third sheet part 153h", "fourth sheet part 154h", "first part 1541h", and "second part 1542h", respectively. Therefore, the description related to the variation aspect of the height H_rb of the convex structure 13 formed on the fourth sheet part 154h is omitted in order to omit a redundant description.

In a case where the height H_rb of the convex structure 13 formed on the fourth sheet part 154h varies, the aspect ratio (here, the ratio of the height to the width) of the convex structure 13 formed on the fourth sheet part 154h is small, so the rigidity of the convex structure 13 increases. As a result, it is possible to achieve an effect that the convex structure 13 is not damaged easily. Therefore, it is unlikely that the convex structure 13 is unintentionally damaged in attaching the riblet sheet 1f to the object OBJ. Furthermore, since the rigidity of the convex structure 13 increases, it is unlikely that the convex structure 13 vibrates (in other words, oscillates) due to the flow of the fluid. As a result, it is unlikely that the convex structure 13 generate the noise. Namely, it is possible to achieve the effect of the noise reduction.

### (4-9) Ninth Modified Example

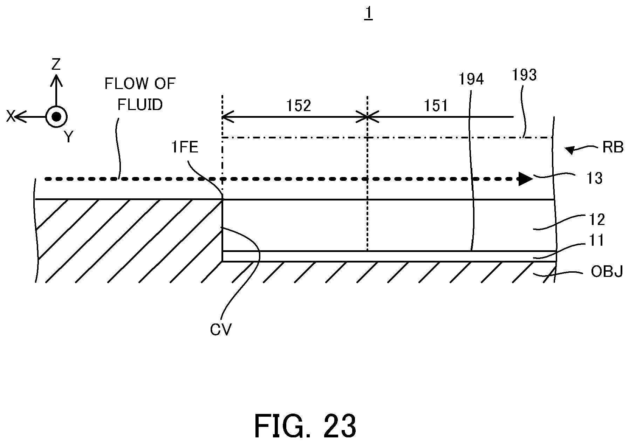

As described above, a cause of the deterioration of the resistance reduction effect of the riblet sheet 1 at the leading edge 1FE of the riblet sheet 1 is that the riblet sheet 1 protrudes from the surface of the object OBJ by the thickness of the riblet sheet 1, thereby, the riblet sheet 1 serves as the obstacle that prevents the flow of the fluid. Considering this cause of the deterioration of the resistance reduction effect of the riblet sheet 1, the riblet sheet 1 may be attached to the object OBJ so that a recessed cavity (in other words, a hole) CV is formed on the surface of the object OBJ and the riblet sheet 1 is positioned in the cavity CV as illustrated in FIG. 23. In this case, a length by which the riblet sheet 1 protrudes from the surface of the object OBJ is shorter, compared to a case where the riblet sheet 1 is not positioned in the cavity CV. Therefore, it is less likely that the riblet sheet 1 serves as the obstacle that prevents the flow of the fluid, compared to a case where the riblet sheet 1 is not positioned in the cavity CV. Therefore, the object OBJ to which the riblet sheet 1 is attached can properly achieve the resistance reduction effect of the riblet sheet 1, compared to a case where the riblet sheet 1 is not positioned in the cavity CV.

A depth of the cavity CV may be set to a desired depth satisfying a condition that the surface of the riblet sheet 1 positioned in the cavity CV does not protrude from the surface of the object OBJ. As a result, it is less likely that the riblet sheet 1 serves as the obstacle that prevents the flow of the fluid, compared to a case where the surface of the riblet sheet 1 positioned in the cavity CV protrudes from the surface of the object OBJ. Therefore, the object OBJ to which the riblet sheet 1 is attached can properly achieve the resistance reduction effect of the riblet sheet 1, compared to a case where the surface of the riblet sheet 1 positioned in the cavity CV protrudes from the surface of the object OBJ.

Note that the thickness T of the riblet sheet 1 (especially, the thickness of the second sheet part 152) may not vary as illustrated in FIG. 23 in a case where the riblet sheet 1 is positioned in the cavity CV. Namely, the thickness T of the riblet sheet 1 (especially, the thickness of the second sheet part 152) may be constant. Even in this case, the object OBJ to which the riblet sheet 1 is attached can properly achieve the resistance reduction effect of the riblet sheet 1.

Alternatively, the riblet sheet 1 may be manufactured so that the thickness T of the riblet sheet 1 is so thin that the riblet sheet 1 attached to the object OBJ (especially, the leading edge 1FE thereof) does not serve as the obstacle that prevents the flow of the fluid. In this case, the thickness T of the riblet sheet 1 (especially, the thickness of the second sheet part 152) may not vary, and the riblet sheet 1 may not be positioned in the cavity CV. Even in this case, the object OBJ to which the riblet sheet 1 is attached can properly achieve the resistance reduction effect of the riblet sheet 1.

### (4-10) Other Modified Example

The riblet sheet 1 may have an optical characteristic that a color of the riblet sheet 1 varies according to the thickness of the structural layer 12 of the riblet sheet. In this case, a degree of a wear (alternatively, a degree of a damage) of the riblet sheet 1 may be calculated by using this optical characteristic. For example, in a case where the riblet sheet 1 is not worn, the thickness of the structural layer 12 is a relatively thick first thickness, so the color of the riblet sheet 1 is a first color. On the other hand, in a case where the riblet sheet 1 is worn, the thickness of the structural layer 12 varies from the first thickness to a second thickness that is thinner than the first thickness, so the color of the riblet sheet 1 varies from the first color to a second color that is different from the first color. Therefore, the degree of the wear of the riblet sheet 1 can be calculated from the color of the riblet sheet 1.

In a case where the degree of the wear of the riblet sheet 1 is calculated from the color of the riblet sheet 1 in this manner, the variation of the color of the riblet sheet visually appears more clearly as the color of the unworn riblet sheet 1 is closer to a primary color. Therefore, the riblet sheet 1 may be manufactured so that the color of the unworn riblet sheet 1 is the primary color or a color close to the primary color.

In the above-described description, the riblet sheet 1 includes the adhesive layer 11 and the structural layer 12. However, the riblet sheet 1 may not include the adhesive layer 11. Namely, the riblet sheet 1 may include the structural layer 12 but may not include the adhesive layer 11. In other words, the riblet sheet 1 that includes the structural layer 12 but does not include the adhesive layer 11 may be manufactured. Even in this case, the structural layer 12 may be attached to the object OBJ (for example, the movable body) by using any attaching method. For example, the adhesive layer 11 may be newly formed on the riblet sheet 1 that includes the structural layer 12 but does not include the adhesive layer 11, then, the structural layer 12 may be attached to the object OBJ (for example, the movable body) through the newly formed adhesive layer 11. For example, , an operator may apply an adhesive between the object OBJ and the riblet sheet 1 in attaching the riblet sheet 1, which does not include the adhesive layer 11, to the object OBJ.

In the above-described description, the object OBJ on which the riblet structure RB has been formed is substantially manufactured by attaching the riblet sheet 1, on which the riblet structure RB has been formed, to the object OBJ. However, a processing apparatus that is configured to process the object OBJ may form the above-described riblet structure RB on the surface of the object OBJ. The processing apparatus that is configured to process the object OBJ may process the object OBJ so that the above-described riblet structure RB is formed on the surface of the object OBJ. A processing apparatus that is configured to process the object OBJ by irradiating the object OBJ with an energy beam (for example, light such as laser light) is one example of the processing apparatus that is configure to process the object OBJ. A processing apparatus that processes the object OBJ by allowing a tool to contact the object OBJ is one example of the processing apparatus that is configure to process the object OBJ. Note that the adhesive layer 11 is unnecessary in a case where the riblet structure RB is formed directly on the object OBJ.

### (5) Supplementary Note

Regarding the above-described example embodiment, below described Supplementary notes are further disclosed.

### [Supplementary Note A1]

A movable body that is movable relative to fluid, wherein
a first sheet member including a riblet structure is attached to a first surface part of a surface of the movable body,
the riblet structure includes a convex structure extending along a predetermined extension direction that is along the first surface part,
a second sheet member is attached to a second surface part, which is adjacent to the first surface part along the extension direction, of the surface of the movable body, and
a thickness of a first part of the second sheet member is thinner than a thickness of a second part, which is farther from an edge part of the second sheet member along the extension direction than the first part is, of the second sheet member.

### [Supplementary Note A2]

The movable body according to the Supplementary Note A1, wherein
the thickness of the first part and the second part is a distance between a front surface and a back surface of the second sheet member at the first part and the second part.

### [Supplementary Note A3]

The movable body according to the Supplementary Note A1 or A2, wherein
the thickness of the second sheet member is thinner as it is closer to the edge part.

### [Supplementary Note A4]

The movable body according to any one of the Supplementary Notes A1 to A3, wherein
a front surface of the second sheet member includes an inclined surface that is inclined with respect to an axis along the extension direction.

### [Supplementary Note A5]

The movable body according to the Supplementary Note A4, wherein
an angle formed by the inclined surface and the axis along the extension direction is an acute angle.

### [Supplementary Note A6]

The movable body according to any one of the Supplementary Notes A1 to A5, wherein
a front surface of the second sheet member includes an inclined surface that is inclined with respect to a back surface of the second sheet member.

### [Supplementary Note A7]

The movable body according to the Supplementary Note A6, wherein
an angle formed by the inclined surface and the back surface of the second sheet member is an acute angle.

### [Supplementary Note A8]

The movable body according to any one of the Supplementary Notes A4 to A7, wherein
the inclined surface includes a planar surface in a case where the second sheet member is attached to the surface of the movable body.

### [Supplementary Note A9]

The movable body according to any one of the Supplementary Notes A4 to A7, wherein
the inclined surface includes a curved surface in a case where the second sheet member is attached to the surface of the movable body.

### [Supplementary Note A10]

The movable body according to any one of the Supplementary Notes A4 to A7, wherein
the inclined surface includes a planar surface in a case where the second sheet member is attached to a planar surface of the movable body, and
the inclined surface includes a curved surface in a case where the second sheet member is attached to a curved surface of the movable body.

### [Supplementary Note A11]

The movable body according to any one of the Supplementary Notes A4 to A7, wherein
the inclined surface includes a curved surface in a case where the second sheet member is attached to a planar surface of the movable body, and
the inclined surface includes a planar surface in a case where the second sheet member is attached to a curved surface of the movable body.

### [Supplementary Note A12]

The movable body according to any one of the Supplementary Notes A1 to A11, wherein
a height of the first part of the second sheet member from the surface of the movable body is lower than a height of the second part from the surface of the movable body in a case where the second sheet member is attached to the surface of the movable body.

### [Supplementary Note A13]

The movable body according to any one of the Supplementary Notes A1 to A12, wherein
the convex structure is a first convex structure, and
a second convex structure, which extends along the extension direction, is formed on a front surface of the second sheet member as at least another part of the riblet structure.

### [Supplementary Note A14]

The movable body according to the Supplementary Note A13, wherein
a width of a first structural part of the second convex structure is smaller than a width of a second structural part, which is farther from the edge part along the extension direction than the first structural part is, of the second convex structure.

### [Supplementary Note A15]

The movable body according to the Supplementary Note A13 or A14, wherein
a width of the second convex structure is smaller as it is closer to the edge part.

### [Supplementary Note A16]

The movable body according to any one of the Supplementary Notes A13 to A15, wherein
a front surface of the second sheet member includes a first surface and a second surface that includes a surface of the second convex structure protruding from the first surface, and
a height of a first structural part of the second convex structure from the first surface is lower than a height of a second structural part, which is farther from the edge part along the extension direction than the first structural part is, of the second convex structure from the first surface.

### [Supplementary Note A17]

The movable body according to any one of the Supplementary Notes A13 to A16, wherein
a front surface of the second sheet member includes a first surface and a second surface that includes a surface of the second convex structure protruding from the first surface, and
a height of the second convex structure from the first surface is lower as it is closer to the edge part.

### [Supplementary Note A18]

The movable body according to any one of the Supplementary Notes A13 to A17, wherein
a front surface of the second sheet member includes a first surface and a second surface that includes a surface of the second convex structure protruding from the first surface, and
a height of the second convex structure from the first surface is constant regardless of a distance between each part of the second convex structure and the edge part.

### [Supplementary Note A19]

The movable body according to any one of the Supplementary Notes A16 to A18, wherein
the thickness of the first part and the second part is a distance between the first surface and a back surface at the first part and the second part.

### [Supplementary Note A20]

The movable body according to any one of the Supplementary Notes A13 to A19, wherein
the first convex structure is connected to the second convex structure.

### [Supplementary Note A21]

The movable body according to any one of the Supplementary Notes A1 to A20, wherein
a width of a third structural part of the convex structure is smaller than a width of a fourth structural part, which is farther from the edge part than the third structural part is, of the convex structure.

### [Supplementary Note A22]

The movable body according to any one of the Supplementary Notes A1 to A21, wherein
a width of the convex structure is smaller as it is closer to the edge part along the extension direction.

### [Supplementary Note A23]

The movable body according to any one of the Supplementary Notes A1 to A22, wherein
the front surface of the first sheet member includes a third surface and a fourth surface that includes a surface of the convex structure protruding from the third surface, and
a height of the convex structure from the third surface is constant regardless of a distance between each part of the convex structure and the edge part.

### [Supplementary Note A24]

The movable body according to any one of the Supplementary Notes A1 to A23, wherein
the front surface of the first sheet member includes a third surface and a fourth surface that includes a surface of the convex structure protruding from the third surface, and
a height of a third structural part of the convex structure from the third surface is lower than a height of a fourth structural part, which is farther from the edge part along the extension direction than the third structural part is, of the convex structure from the third surface.

### [Supplementary Note A25]

The movable body according to any one of the Supplementary Notes A1 to A24, wherein
the front surface of the first sheet member includes a third surface and a fourth surface that includes a surface of the convex structure protruding from the third surface, and
a height of the first convex structure from the third surface is lower as it is closer to the edge part.

### [Supplementary Note A26]

The movable body according to any one of the Supplementary Notes A1 to A25, wherein
the first sheet member is physically separated from the second sheet member.

### [Supplementary Note A27]

The movable body according to any one of the Supplementary Notes A1 to A26, wherein
the first and second sheet members are two physically separated sheet members.

### [Supplementary Note A28]

The movable body according to any one of the Supplementary Notes A1 to A25, wherein
the first sheet member is physically connected to the second sheet member.

### [Supplementary Note A29]

The movable body according to any one of the Supplementary Notes A1 to A28, wherein
the edge part of the second sheet member is an edge part on a side opposite to an edge part, which is adjacent to the first sheet member, of the second sheet member.

### [Supplementary Note A30]

The movable body according to any one of the Supplementary Notes A1 to A29, wherein
the movable body is at least one of a railway vehicle, an automobile, an aircraft, a ship, a windmill, and a turbine.

### [Supplementary Note B1]

A sheet member including a riblet structure, wherein
the sheet member includes: a first sheet part and a second sheet part that is adjacent to the first sheet part,
a convex structure, which extends along an extension direction, is formed on a front surface of the first sheet part as at least a part of the riblet structure,
the second sheet part includes an edge part of the sheet member along the extension direction and is positioned to be adjacent to the first sheet part along the extension direction, and
a thickness of a first part of the second sheet part is thinner than a thickness of a second part, which is farther from the edge part along the extension direction than the first part is, of the second sheet part.

### [Supplementary Note B2]

The sheet member according to the Supplementary Note B1, wherein
the thickness of the first part and the second part is a distance between a front surface and a back surface of the sheet member at the first part and the second part.

### [Supplementary Note B3]

The sheet member according to the Supplementary Note B1 or B2, wherein
the thickness of the second sheet part is thinner as it is closer to the edge part.

### [Supplementary Note B4]

The sheet member according to any one of the Supplementary Notes B1 to B3, wherein
a front surface of the second sheet part includes an inclined surface that is inclined with respect to an axis along the extension direction.

### [Supplementary Note B5]

The sheet member according to the Supplementary Note B4, wherein
an angle formed by the inclined surface and the axis along the extension direction is an acute angle.

### [Supplementary Note B6]

The sheet member according to any one of the Supplementary Notes B1 to B5, wherein
a front surface of the second sheet part includes an inclined surface that is inclined with respect to a back surface of the second sheet part.

### [Supplementary Note B7]

The sheet member according to the Supplementary Note B6, wherein
an angle formed by the inclined surface and the back surface of the second sheet part is an acute angle.

### [Supplementary Note B8]

The sheet member according to any one of the Supplementary Notes B4 to B7, wherein
the inclined surface includes a planar surface in a case where the sheet member is attached to a surface of an object.

### [Supplementary Note B9]

The sheet member according to any one of the Supplementary Notes B4 to B7, wherein
the inclined surface includes a curved surface in a case where the sheet member is attached to a surface of an object.

### [Supplementary Note B10]

The sheet member according to any one of the Supplementary Notes B4 to B7, wherein
the inclined surface includes a planar surface in a case where the sheet member is attached to a planar surface of an object, and
the inclined surface includes a curved surface in a case where the sheet member is attached to a curved surface of the object

### [Supplementary Note B11]

The sheet member according to any one of the Supplementary Notes B4 to B7, wherein
the inclined surface includes a curved surface in a case where the sheet member is attached to a planar surface of an object, and
the inclined surface includes a planar surface in a case where the sheet member is attached to a curved surface of the object

### [Supplementary Note B12]

The sheet member according to any one of the Supplementary Notes B1 to B11, wherein
a height of the first part of the second sheet part from a surface of an object is lower than a height of the second part from the surface of the object in a case where the sheet member is attached to the surface of the object.

### [Supplementary Note B13]

The sheet member according to any one of the Supplementary Notes B1 to B12, wherein
the convex structure is a first convex structure, and
a second convex structure, which extends along the extension direction, is formed on a front surface of the second sheet part as at least another part of the riblet structure.

### [Supplementary Note B14]

The sheet member according to the Supplementary Note B13, wherein
a width of a first structural part of the second convex structure is smaller than a width of a second structural part, which is farther from the edge part along the extension direction than the first structural part is, of the second convex structure.

### [Supplementary Note B15]

The sheet member according to the Supplementary Note B13 or B14, wherein
a width of the second convex structure is smaller as it is closer to the edge part.

### [Supplementary Note B16]

The sheet member according to any one of the Supplementary Notes B13 to B15, wherein
a front surface of the second sheet part includes a first surface and a second surface that includes a surface of the second convex structure protruding from the first surface, and
a height of a first structural part of the second convex structure from the first surface is lower than a height of a second structural part, which is farther from the edge part along the extension direction than the first structural part is, of the second convex structure from the first surface.

### [Supplementary Note B17]

The sheet member according to any one of the Supplementary Notes B13 to B16, wherein
a front surface of the second sheet part includes a first surface and a second surface that includes a surface of the second convex structure protruding from the first surface, and
a height of the second convex structure from the first surface is lower as it is closer to the edge part.

### [Supplementary Note B18]

The sheet member according to any one of the Supplementary Notes B13 to B17, wherein
a front surface of the second sheet part includes a first surface and a second surface that includes a surface of the second convex structure protruding from the first surface, and
a height of the second convex structure from the first surface is constant regardless of a distance between each part of the second convex structure and the edge part.

### [Supplementary Note B19]

The sheet member according to any one of the Supplementary Notes B16 to B18, wherein
the thickness of the first part and the second part is a distance between the first surface and a back surface at the first part and the second part.

### [Supplementary Note B20]

The sheet member according to any one of the Supplementary Notes B13 to B19, wherein
the first convex structure is connected to the second convex structure.

### [Supplementary Note B21]

The sheet member according to any one of the Supplementary Notes B1 to B20, wherein
a width of a third structural part of the convex structure is smaller than a width of a fourth structural part, which is farther from the edge part than the third structural part is, of the convex structure.

### [Supplementary Note B22]

The sheet member according to any one of the Supplementary Notes B1 to B21, wherein
a width of the convex structure is smaller as it is closer to the edge part along the extension direction.

### [Supplementary Note B23]

The sheet member according to any one of the Supplementary Notes B1 to B22, wherein
the front surface of the first sheet part includes a third surface and a fourth surface that includes a surface of the convex structure protruding from the third surface, and
a height of the convex structure from the third surface is constant regardless of a distance between each part of the convex structure and the edge part.

### [Supplementary Note B24]

The sheet member according to any one of the Supplementary Notes B1 to B23, wherein
the front surface of the first sheet part includes a third surface and a fourth surface that includes a surface of the convex structure protruding from the third surface, and
a height of a third structural part of the convex structure from the third surface is lower than a height of a fourth structural part, which is farther from the edge part along the extension direction than the third structural part is, of the convex structure from the third surface.

### [Supplementary Note B25]

The sheet member according to any one of the Supplementary Notes B1 to B24, wherein
the front surface of the first sheet part includes a third surface and a fourth surface that includes a surface of the convex structure protruding from the third surface, and
a height of the convex structure from the third surface is lower as it is closer to the edge part.

### [Supplementary Note B26]

The sheet member according to any one of the Supplementary Notes B1 to B25, wherein
the first sheet part is physically connected to the second sheet part.

### [Supplementary Note B27]

The sheet member according to any one of the Supplementary Notes B1 to B25, wherein
the first sheet part is physically separated from the second sheet part.

### [Supplementary Note B28]

The sheet member according to any one of the Supplementary Notes B1 to B27, wherein
the second sheet part is adjacent to the first sheet part.

### [Supplementary Note B29]

A movable body that is movable relative to fluid, wherein
the sheet member according to any one of the Supplementary Notes B1 to B28 is attached to at least a part of a surface of the movable body.

### [Supplementary Note B30]

A blade member on a surface of which the sheet member according to any one of the Supplementary Notes B1 to B28 is attached.

### [Supplementary Note B31]

A windmill including the blade member according to the Supplementary Note B30.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a sheet member, a movable body, a blade member, a windmill, and an attaching method, which involve such changes, are also intended to be within the technical scope of the present invention.

### Description of Reference Codes

- 1: riblet sheet
- 11: adhesive layer
- 111: front surface
- 112: back surface
- 12: structural layer
- 121: front surface
- 122: back surface
- 13: convex structure
- 130: convex area
- 14: groove structure
- 140: groove area
- 151: first sheet part
- 152: second sheet part
- 191, 192: side surface
- 193: corner part
- 194: border part
- RB: riblet structure
- OBJ: object

## Claims

1. A sheet member comprising a riblet structure on one surface and an adhesive layer on another surface, wherein
the sheet member comprises: a first sheet part and a second sheet part that is adjacent to the first sheet part,
a convex structure, which extends along an extension direction, is formed on a front surface of the first sheet part as at least a part of the riblet structure,
the second sheet part includes an edge part of the sheet member along the extension direction and is positioned to be adjacent to the first sheet part along the extension direction, and
a thickness of a first part of the second sheet part is thinner than a thickness of a second part, which is farther from the edge part along the extension direction than the first part is, of the second sheet part.

2. The sheet member according to claim 1, wherein
the thickness of the first part and the second part is a distance between a front surface and a back surface of the sheet member at the first part and the second part.

3. The sheet member according to claim 1 or 2, wherein
the thickness of the second sheet part is thinner as it is closer to the edge part.

4. The sheet member according to any one of claims 1 to 3, wherein
a front surface of the second sheet part includes an inclined surface that is inclined with respect to an axis along the extension direction.

5. The sheet member according to claim 4, wherein
an angle formed by the inclined surface and the axis along the extension direction is an acute angle.

6. The sheet member according to any one of claims 1 to 5, wherein
a front surface of the second sheet part includes an inclined surface that is inclined with respect to a back surface of the second sheet part.

7. The sheet member according to claim 6, wherein
an angle formed by the inclined surface and the back surface of the second sheet part is an acute angle.

8. The sheet member according to any one of claims 4 to 7, wherein
the inclined surface includes a planar surface in a case where the sheet member is attached to a surface of an object.

9. The sheet member according to any one of claims 4 to 7, wherein
the inclined surface includes a curved surface in a case where the sheet member is attached to a surface of an object.

10. The sheet member according to any one of claims 4 to 7, wherein
the inclined surface includes a planar surface in a case where the sheet member is attached to a planar surface of an object, and
the inclined surface includes a curved surface in a case where the sheet member is attached to a curved surface of the object

11. The sheet member according to any one of claims 4 to 7, wherein
the inclined surface includes a curved surface in a case where the sheet member is attached to a planar surface of an object, and
the inclined surface includes a planar surface in a case where the sheet member is attached to a curved surface of the object

12. The sheet member according to any one of claims 1 to 11, wherein
a height of the first part of the second sheet part from a surface of an object is lower than a height of the second part from the surface of the object in a case where the sheet member is attached to the surface of the object.

13. The sheet member according to any one of claims 1 to 12, wherein
the convex structure is a first convex structure, and
a second convex structure, which extends along the extension direction, is formed on a front surface of the second sheet part as at least another part of the riblet structure.

14. The sheet member according to claim 13, wherein
a width of a first structural part of the second convex structure is smaller than a width of a second structural part, which is farther from the edge part along the extension direction than the first structural part is, of the second convex structure.

15. The sheet member according to claim 13 or 14, wherein
a width of the second convex structure is smaller as it is closer to the edge part.

16. The sheet member according to any one of claims 13 to 15, wherein
a front surface of the second sheet part includes a first surface and a second surface that includes a surface of the second convex structure protruding from the first surface, and
a height of a first structural part of the second convex structure from the first surface is lower than a height of a second structural part, which is farther from the edge part along the extension direction than the first structural part is, of the second convex structure from the first surface.

17. The sheet member according to any one of claims 13 to 16, wherein
a front surface of the second sheet part includes a first surface and a second surface that includes a surface of the second convex structure protruding from the first surface, and
a height of the second convex structure from the first surface is lower as it is closer to the edge part.

18. The sheet member according to any one of claims 13 to 17, wherein
a front surface of the second sheet part includes a first surface and a second surface that includes a surface of the second convex structure protruding from the first surface, and
a height of the second convex structure from the first surface is constant regardless of a distance between each part of the second convex structure and the edge part.

19. The sheet member according to any one of claims 16 to 18, wherein
the thickness of the first part and the second part is a distance between the first surface and a back surface at the first part and the second part.

20. The sheet member according to any one of claims 13 to 19, wherein
the first convex structure is connected to the second convex structure.

21. The sheet member according to any one of claims 1 to 20, wherein
a width of a third structural part of the convex structure is smaller than a width of a fourth structural part, which is farther from the edge part than the third structural part is, of the convex structure.

22. The sheet member according to any one of claims 1 to 21, wherein
a width of the convex structure is smaller as it is closer to the edge part along the extension direction.

23. The sheet member according to any one of claims 1 to 22, wherein
the front surface of the first sheet part includes a third surface and a fourth surface that includes a surface of the convex structure protruding from the third surface, and
a height of the convex structure from the third surface is constant regardless of a distance between each part of the convex structure and the edge part.

24. The sheet member according to any one of claims 1 to 23, wherein
the front surface of the first sheet part includes a third surface and a fourth surface that includes a surface of the convex structure protruding from the third surface, and
a height of a third structural part of the convex structure from the third surface is lower than a height of a fourth structural part, which is farther from the edge part along the extension direction than the third structural part is, of the convex structure from the third surface.

25. The sheet member according to any one of claims 1 to 24, wherein
the front surface of the first sheet part includes a third surface and a fourth surface that includes a surface of the convex structure protruding from the third surface, and
a height of the convex structure from the third surface is lower as it is closer to the edge part.

26. The sheet member according to any one of claims 1 to 25, wherein
the first sheet part is physically connected to the second sheet part.

27. The sheet member according to any one of claims 1 to 25, wherein
the first sheet part is physically separated from the second sheet part.

28. A film member made of resin comprising a riblet structure, wherein
the film member comprises: a first sheet part and a second sheet part that is adjacent to the first sheet part,
a convex structure, which extends along an extension direction, is formed on a front surface of the first sheet part as at least a part of the riblet structure,
the second sheet part includes an edge part of the sheet member along the extension direction and is positioned to be adjacent to the first sheet part along the extension direction, and
a thickness of a first part of the second sheet part is thinner than a thickness of a second part, which is farther from the edge part along the extension direction than the first part is, of the second sheet part.

29. A sheet member comprising a riblet structure, wherein
a convex structure, which extends along a predetermined extension direction, is formed on a front surface of the sheet member as at least a part of the riblet structure,
a width of a first structural part of the convex structure is smaller than a width of a second structural part, which is farther from an edge part along the extension direction of the sheet member along the extension direction than the first structural part is, of the second convex structure.

30. The sheet member according to claim 29, wherein
the width of the convex structure is smaller as it is closer to the edge part.

31. The sheet member according to claim 29 or 30, wherein
the front surface of the sheet member includes a first surface and a second surface that includes a surface of the convex structure protruding from the first surface, and
a height of the convex structure from the first surface is constant regardless of a distance between each part of the convex structure and the edge part.

32. The sheet member according to any one of claims 29 to 31, wherein
the front surface of the sheet member includes a first surface and a second surface that includes a surface of the convex structure protruding from the first surface, and
a height of the first structural part of the convex structure from the first surface is lower than a height of the second structural part, which is farther from the edge part along the extension direction than the first structural part is, of the convex structure from the first surface.

33. The sheet member according to any one of claims 29 to 32, wherein
the front surface of the sheet member includes a first surface and a second surface that includes a surface of the convex structure protruding from the first surface, and
a height of the convex structure from the first surface is lower as it is closer to the edge part.

34. The sheet member according to any one of claims 31 to 33, wherein
the convex structure is not formed on the first surface.

35. A movable body that is movable relative to fluid, wherein
the sheet member according to any one of claims 1 to 33 is attached to at least a part of a surface of the movable body.

36. A movable body that is movable relative to fluid, wherein
a first sheet member including a riblet structure is attached to a first surface part of a surface of the movable body,
the riblet structure includes a convex structure extending along a predetermined extension direction that is along the first surface part,
a second sheet member is attached to a second surface part, which is adjacent to the first surface part along the extension direction, of the surface of the movable body, and
a thickness of a first sheet part of the second sheet member is thinner than a thickness of a second sheet part, which is farther from an edge part of the second sheet member along the extension direction than the first sheet part is, of the second sheet member.

37. The movable body according to claim 36, wherein
the first and second sheet members are two physically separated sheet members.

38. The movable body according to claim 36 or 37, wherein
the edge part of the second sheet member is an edge part on a side opposite to an edge part, which is adjacent to the first sheet member, of the second sheet member.

39. The movable body according to any one of claims 36 to 38, wherein
the movable body is at least one of a railway vehicle, an automobile, an aircraft, a ship, a windmill, and a turbine.

40. A blade member to a surface of which the sheet member according to any one of claims 1 to 34 is attached.

41. A windmill comprising the blade member according to claim 40.

42. A sheet member comprising a riblet structure, wherein
the sheet member comprises: a first sheet part and a second sheet part that is adjacent to the first sheet part,
a convex structure, which extends along an extension direction, is formed on a front surface of the first sheet part as at least a part of the riblet structure,
the second sheet part includes an edge part of the sheet member along the extension direction and is positioned to be adjacent to the first sheet part along the extension direction, and
a thickness of a first part of the second sheet part is thinner than a thickness of a second part, which is farther from the edge part along the extension direction than the first part is, of the second sheet part.

43. An attaching method for attaching a sheet member to a surface of a movable body that is movable relative to fluid, wherein
the attaching method comprises:
attaching a first sheet member including a riblet structure, which includes a convex structure that extends along a predetermined extension direction along a first surface part, to a first surface part of the surface of the movable body; and
attaching a second sheet member to a second surface part, which is adjacent to the first surface part along the extension direction, of the surface of the movable body,
a thickness of a first part of the second sheet member is thinner than a thickness of a second part, which is farther from an edge part of the second sheet member along the extension direction than the first part is, of the second sheet member.
